# EUROPEAN PATENT SPECIFICATION

(11) **EP 1 921 119 B1**
(45) Date of publication and mention of the grant of the patent: **06.10.2010**
(21) Application number: 06796945.1
(22) Date of filing: 29.08.2006
(51) Int. Cl.: C09D 5/16, B32B 15/08, C09D 133/00, C09D 7/12, C09D 143/00, C09D 157/06, C09D 167/00

(54) **STAIN-PROOF COATING COMPOSITION, STAIN-PROOF COATING FILM, SUBSTRATE HAVING COATING FILM, STAIN-PROOF SUBSTRATE, METHOD FOR FORMATION OF COATING FILM ON SURFACE OF SUBSTRATE, AND METHOD FOR STAIN-PROOFING OF SUBSTRATE**
FLECKENBESTÄNDIGE BESCHICHTUNGSZUSAMMENSETZUNG, FLECKENBESTÄNDIGER BESCHICHTUNGSFILM, SUBSTRAT MIT DEM BESCHICHTUNGSFILM, VERFAHREN ZUR FORMUNG EINER BESCHICHTUNG AUF DER OBERFLÄCHE EINES SUBSTRATS UND VERFAHREN ZUR HERSTELLUNG DER FLECKENBESTÄNDIGKEIT EINES SUBSTRATS
COMPOSITION DE REVÊTEMENT ANTITACHE, FILM DE REVÊTEMENT ANTITACHE, SUBSTRAT AYANT UN FILM DE REVÊTEMENT, SUBSTRAT ANTITACHE, PROCÉDÉ DE FORMATION D'UN FILM DE REVÊTEMENT SUR LA SURFACE DU SUBSTRAT ET PROCÉDÉ D IMPERMÉABILISATION AUX TACHES DU SUBSTRAT

(30) Priority: 01.09.2005 JP 2005253774
(43) Date of publication of application: 14.05.2008
(73) Proprietor: CHUGOKU MARINE PAINTS, LTD., Ohtake-shi, Hiroshima 739-0652 (JP)
(72) Inventor: NIIMOTO, Jyunji, Ohtake-shi, Hiroshima 739-0652 (JP)
(74) Representative: HOFFMANN EITLE
(86) International application number: PCT/JP2006/316965
(87) International publication number: WO 2007/026692

(56) References cited:
- WO-A2-03/070832
- JP-A- 2000 005 692
- JP-A- 2001 302 989
- JP-A- 2002 256 176
- JP-A- 2004 196 957
- JP-A- 2004 346 329
- JP-A- 2005 097 400
- US-A1- 2005 158 263

## Description

### TECHNICAL FIELD

The present invention relates to an antifouling paint composition, an antifouling coating film, a substrate with a coating film, an antifouling substrate, a forming method of coating film on a surface of the substrate and an antifouling method of the substrate.

More particularly, the present invention relates to an antifouling paint composition, an antifouling coating film formed from the antifouling paint composition, which can effectively prevent the attachment of marine organisms when formed on the surface of the body of a ship by a synergetic effect of the improvement in antibacterial action and renewability of coating film (the synergetic effect is obtained by adding zinc sulfide to a hydrolysable antifouling paint composition), a substrate with a coating film, an antifouling substrate, a forming method of a coating film on a surface of the substrate and an antifouling method of the substrate.

### BACKGROUND ART

The bottom of ship, submerged structures, and fishing nets may be damaged in their appearance and function as the result of the attachment and the proliferation of various aquatic organisms such as animals like oysters, mussels and barnacles, plants like lavers or bacteria on their surface upon the exposure in marine water for a long period of time.

In the case when such aquatic organisms attach especially to the ship bottom and proliferate, the surface roughness of the whole ship increases, possibly leading to a decreased ship speed and increased fuel consumption. Moreover, a huge amount of labour and working hours are required for removing such aquatic organisms from the ship bottom. Furthermore, the strength and function of the submerged structures are deteriorated and the longevity of the submerged structures is significantly decreased if decomposition is caused by the attachment and proliferation of bacteria on submerged structures, followed by attachment of slimes (sludgy materials) thereto, and further if the coating film for corrosion proof of the submerged structures such as steel structures is damaged by the attachment and proliferation of large organisms.

Conventionally, in order to prevent such damages, various antifouling paints have been applied to the ship bottom, and various types of antifouling paints have been proposed, which are described in (1) to (9) as mentioned below.
(1) In Japanese Patent Laid-Open Publication No. 522734/2003, an antibacterial composition having a biocidal effect comprising pyrithione or a pyrithione complex and zinc, copper or silver or a compound thereof (for example, salts, oxides, hydroxides, sulfates, chlorides, and complexes) is disclosed, and zinc sulfide is specifically disclosed as a zinc compound, wherein it is described that the antibacterial composition may be used by adding to an elastomer such as a styrene-butadiene copolymer, polyacrylate and silicone rubber and also may be used as a marine paint. However, a combination system of these compounds and a hydrolyzable metal polymer is not disclosed.
(2) In WO No. 2004/057964 pamphlet, an antimicrobial composition comprising pyrithione or a pyrithione complex, a zinc compound (such as zinc sulfide) and an organic amine is disclosed and is suggested to be applicable for antifouling of the body of ship. However, no description is made for a coating film forming polymer.
(3) In Japanese Patent Laid-Open Publication No. 508639/1998, a marine antifouling paint containing a binder based composition (such as rosin) and a fiber is disclosed. It is described that a self-polishing polymer may be used as a binder and a zinc sulfide fiber is specifically exemplified as a fiber. Moreover, it is also described that zinc sulfide may be contained as a pigment as necessary.
   However, although there are expressions of the self-polishing polymer and the hydrolysable polymer, there is no concrete disclosures and examples for the polymer. In addition, the zinc sulfide fiber is exemplified but no concrete examples are presented in which the polymers are blended.
(4) In Japanese Patent Laid-Open Publication No. 346329/2004, which is a divisional application of the above (2), there is a similar description to the above (2).
(5) In Japanese Patent Laid-Open Publication No. 510891/2000, a marine antifouling paint comprising rosin, a fiber, and a polymer flexibility imparting agent is disclosed, and it is described that the paint has excellent weather resistance. In addition, as the flexibility imparting agent, there is mentioned a poly (meth)acrylate, and a polyester resin.
   However, although a technical idea that a rosin metal salt which is one type of self-polishing polymers is used as the binder resin, there is no technical idea that a self-polishing polymer such as an acryl polymer and a polyester resin having a metal salt based side chain is used and a self-polishing polymer such as (meth)acrylate ester based polymer having a silyl ester based side chain is used as is the case of the present invention.
(6) Furthermore, in Japanese Patent Laid-Open Publication No. 502473/2003, there is described a self-polishing antifouling marine paint composition containing a binder copolymer having a side chain terminal group represented by the following Formula (I): and a fiber, and a zinc sulfide fiber is specifically described as the fiber. In addition, it is described that zinc sulfide may be contained as a pigment as necessary. 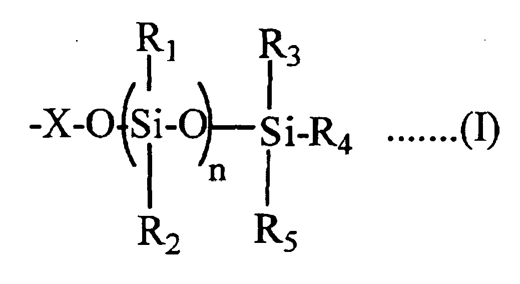 [In the Formula (I), R₁ to R₅ each independently represents an alkyl group having 1 to 20 carbon atoms and an alkoxy group having 1 to 20 carbon atoms, X is >C(=O) and n is an integer 0, 1 or more.]
   Moreover, as the monomer for the synthesis of said binder copolymer, there may be mentioned tri(isopropyl)silylacrylate, methoxyethylmethacrylate, methylmethacrylate and butylmethacrylate.
   However, there are problems in the antifouling paint compositions described in the above publications that the resulting coating film may not fully exhibits an antifouling effect because of its low hydrolyzability (the elution property of the resin), causes problems such as poor adhesion and the like at the time of recoating at repair work and the like because of the deposition of an inactive layer on the surface of the coating film.
(7) Japanese Patent Laid-Open Publication No. 302989/2001, an antifouling paint, which contains as a binder a resin having a silylated phosphonate group represented by the formula (1), -S(O)₂-O-[Si(R⁴)(R⁵)-O]ₙ-Si(R¹)(R²)R³, [where R¹, R², R³, R⁴ and R⁵ each independently represents a hydrocarbon group such as an alkyl group having 1 to 18 carbon atoms and an alkoxy group having 1 to 18 carbon atoms and n is an integer of 0 to 200.] , is disclosed, and a metal pyrithione containing metal (Cu, and Zn) is exemplified as an antifouling agent. In addition, zinc sulfide are exemplified as a pigment and it is described that they are blended at 1 to 60% of the solid content volume of the paint.
(8) In addition, in Japanese Patent Laid-Open Publication No. 5692/2000, zinc sulfide is exemplified as a coloring pigment that may be blended in a paint used for film thickness determination utilizing the color difference between a coating film containing coloring pigments and a coated material.
   Furthermore, a hydrolyzable acryl-modified resin or a polyester-modified resin are exemplified as a resin component contained in the paint. It is described that the hydrolyzable acryl-modified resin or the polyester-modified resin have a group represented by formula (1) : -COO-M-Yy (with the proviso that y represents the valence number of M-1, M represents a metal of Cu, Zn, Si and the like, Y represents an alkyl group , a hydroxyl group, a group represented by OOCR¹ (R¹ is a hydrocarbon group having 10 or more carbon atoms) or a group represented by R²-CO-CH₂-CO-R³ (R² is a divalent group comprising an alkylene group or a phenyl derivative and R³ is a monovalent group comprising an alkyl group or a phenyl derivative)), a group represented by the formula (2): -N=CHR⁴ (R⁴ is a hydrocarbon having 6 or more carbon atoms) or the formula -SO₃-NH-R⁵ (R⁵ is a hydrogen atom or an alkyl group) in the side chain.
   In the publication, there is an example in which a metal-containing copolymer paint "Ecoloflex" having a hydrolysable, self-polishing side chain terminal, -COO-M-OOCR¹ as a film thickness determination paint is used, but there is no example in which zinc sulfide of a coloring pigment is blended.
(9) In Japanese Patent Laid-Open Publication No. 327914/2001, it is described that a first coating may contain a coloring pigment when a silicone rubber final coating film is directly applied on a first coating film comprising a blockpolymer consisted of an organosiloxane unit and an alkyleneoxide unit without via an intermediate coating film, and zinc sulfide is exemplified as a pigment which may be blended. However, there is no examples in which zinc sulfide is blended.
   In this way, in the inventions described in the above (1) to (9), although a hydrolysable resin comprising rosin and a crosslinkable metal salt copolymer is exemplified as a resin and zinc sulfide is exemplified as a coloring agent, any of which is not a disclosure of a technical idea in which attention is paid to the antifouling effect of zinc sulfide itself but is limited to the use of the function as a coloring pigment.
   In short, in these prior literatures, there are no technical ideas that the antibacterial action of zinc sulfide in the antifouling coating film obtained by a combination of the zinc sulfide and a hydrolysable resin such as a particular crosslinkable copolymer containing a bond of metal salt is favorably exerted to improve the antifouling properties by paying attention to the safety to the environment and the antibacterial action of zinc sulfide as is the case of the present invention.
(10) WO 03/070832 A describes an antifouling paint which contains a binder comprising three different polymers, i.e. a silyl ester type copolymer, and two homo- or co-polymers having one or more types of ethylenically unsaturated monomers wherein at least one type has a side chain that is C(=O)- or -O- functionalized. The paint may contain additional components selected from co-binders, biological active substances, pigments and fillers, surfactants, wetting agents and dispersing agents, drying agents, activators, foam inhibitors, stabilizers, antioxidants, corrosion inhibitors, coalescent agents, thickening agents and anti-settling agents, fibers and solvents.
Patent Literature 1: Japanese Patent Laid-Open Publication No. 522734/2003
Patent Literature 2: WO 2004/057964 Pamphlet
Patent Literature 3: Japanese Patent Laid-Open Publication No. 508639/1998
Patent Literature 4: Japanese Patent Laid-Open Publication No. 346329/2004
Patent Literature 5: Japanese Patent Laid-Open Publication No. 510891/2000
Patent Literature 6: Japanese Patent Laid-Open Publication No. 502473/2003
Patent Literature 7: Japanese Patent Laid-Open Publication No. 302989/2001
Patent Literature 8: Japanese Patent Laid-Open Publication No. 5692/2000
Patent Literature 9: Japanese Patent Laid-Open Publication No. 327914/2001
Patent Literature 10: WO 03/070832

### DISCLOSURE OF THE INVENTION

### PROBLEMS TO BE SOLVED BY THE INVENTION

An objective of the present invention is to solve the problems associated with the conventional technology as mentioned above, and to provide an antifouling paint composition which is especially excellent in a balance between antibacterial action and renewability of a coating film and may effectively prevent the attachment of marine organisms when it is applied to the surface of the substrate of the ship body and cured to form an antifouling coating film.

Another objective of the present invention is to provide an antifouling paint which does not contain especially cuprous oxide and is copper free (not containing copper), and which is excellent in self-polishing property (consumption property of a coating film) for a long period of time, antifouling performance for a long period of time and antifouling performance (stationary antifouling performance) in a highly polluted sea area, compared with a paint containing cuprous oxide.

Still another objective of the present invention is to provide an antifouling coating film, a substrate with the coating film and an antifouling substrate which are obtained by applying and curing the above-mentioned antifouling paint composition and are excellent in the balance between antibacterial action and renewability of the coating film.

And still another objective of the present invention is to provide a safe and efficient method of forming a coating film having above-mentioned properties on the surface of the substrate and an antifouling method of the substrate.

### MEANS TO SOLVE THE PROBLEMS

An antifouling paint composition relating to the present invention is a antifouling paint composition comprising;
(A) a hydrolysable copolymer and
(B) an antifouling agent,
in which said hydrolysable copolymer (A) is at least one kind of hydrolysable copolymer selected from the group consisting of
(a1) a copolymer containing a bond of metal salt (which may be referred to as a side chain terminal structure metal salt copolymer), which is an acrylic polymer or a polyester resin, has a side chain terminal group represented by the general formula (I):

   -COO-M-O-COR¹ (I)

   [in the Formula (I), M represents zinc or copper, R¹ represents an organic group, with the proviso that the case where R¹ corresponds to -C(R²)=CH₂ is excluded.]:
(a2) a copolymer containing a bond of metal salt composed of a component unit (a21) derived from a monomer represented by the general formula (II):

   CH₂=C(R²)-COO-M-O-CO-C(R²)=CH₂ (II)

   [in the Formula (II), M represents zinc or copper and R² represents a hydrogen atom or a methyl group.] and a component unit (a22) derived from other unsaturated monomer which is copolymerizable with said monomer (II); and
(a3) a silyl ester based copolymer composed of a component unit (a31) derived from a monomer represented by the general formula (III):

   R⁷⁻CH=C (R³) -COO-SiR⁴R⁵R⁶ (III)

   [in the Formula (III), R3 represents a hydrogen atom or a methyl group, R⁴, R⁵ and R⁶ each independently represents a hydrocarbon group, R⁷ represents a hydrogen atom or R⁸-O-CO- (with the proviso that R⁸ represents an organic group or a silyl group represented by -SiR⁹R¹⁰R¹¹, and R⁹, R¹⁰ and R¹¹ each independently represents a hydrocarbon group.)] and a component unit (a32) derived from other unsaturated monomer which is copolymerizable with said monomer (III); and zinc sulfide is contained at an amount of 10 to 500 parts by weight with respect to 100 parts by weight of the hydrolysable copolymer (A) as said antifouling agent (B).

In the present invention, said antifouling paint composition preferably does not contain cuprous oxide.

In the present invention, said antifouling agent (B) preferably consists of zinc sulfide and an organic antifouling agent (b2).

In the present invention, said organic antifouling agent (b2) is preferably at least one kind of organic antifouling agent selected from the group consisting of a pyrithione compound, tri-organic boron and amine complex thereof, and 4,5-dichloro-N-octylisothiazolin-3-one.

In the present invention, said organic antifouling agent (b2) is preferably at least one kind selected from the group consisting of zinc pyrithione, a triphenylboron-pyridine complex, a dimethylphenylboron-(4-isopropyl)pyridine complex and 4,5-dichloro-N-octylisothiazolin-3-one.

In the present invention, when said organic antifouling agent (b2) is contained together with cuprous copper as said antifouling agent (B), said organic antifouling agent (b2) is preferably contained at an amount of 20 to 500 parts by weight with respect to 100 parts by weight of zinc sulfide.

In the present invention, furthermore, zinc oxide is preferably contained as an extender pigment.

In the present invention, when zinc oxide is contained as mentioned above, zinc oxide is preferably contained at an amount of 10 to 300 parts by weight with respect to 100 parts by weight of said hydrolyzable copolymer (A).

Moreover, in the present invention, zinc oxide is preferably contained at an amount of 1 to 40 % by weight in the antifouling paint composition.

In the present invention, in addition, talc is preferably contained in the antifouling paint composition as an extender pigment. In the case where talc is contained, talc is preferably contained at an amount of 5 to 300 parts by weight with respect to 100 parts by weight of said hydrolyzable copolymer (A). In addition, in such a case that talc is contained, talc is preferably contained at an amount of 0.5 to 40 % by weight in the antifouling paint composition.

In the present invention, furthermore, chlorinated paraffin is preferably contained as a plasticizer in the antifouling paint composition.

In the present invention, chlorinated paraffin is preferably contained at an amount of 0.05 to 40 parts by weight with respect to 100 parts by weight of said hydrolyzable copolymer (A).

In the present invention, chlorinated paraffin is preferably contained at an amount of 1 to 5 % by weight in the antifouling paint composition.

In the present invention, furthermore, it is preferable that at least one kind of pigment selected from the group consisting of red iron oxide, titanium white, yellow iron oxide and an organic pigment is contained.

In the present invention, the organic group R¹ of said copolymer (a1) containing a bond of metal salt is preferably an organic acid residue of a monobasic acid, which is a monovalent saturated aliphatic hydrocarbon group having 2 to 30 carbon atoms, an unsaturated aliphatic hydrocarbon group having 2 to 30 carbon atoms, an alicyclic hydrocarbon group having 3 to 20 carbon atoms, an aromatic hydrocarbon group having 6 to 18 carbon atoms or a susbtitution product thereof.

In the present invention, the organic group R¹ of said copolymer (a1) containing a bond of metal salt is preferably an organic acid residue of a monobasic acid, which is a monovalent saturated or unsaturated aliphatic hydrocarbon group having 10 to 20 carbon atoms, a saturated or unsaturated alicyclic hydrocarbon group having 3 to 20 carbon atoms or a substitution product thereof.

In the present invention, said copolymer (a1) containing a bond of metal salt is preferably a copolymer containing a bond of metal salt having, at -COO- of an acrylic acid copolymer via copper or zinc, a side chain terminal group represented by the general formula (IV):

-O-COR¹ (IV)

[in the Formula (IV), R¹ represents an organic acid residue of a monobasic acid, the residue consisting of a monovalent saturated or unsaturated aliphatic hydrocarbon group having 10 to 20 carbon atoms a saturated or unsaturated alicyclic hydrocarbon group with the carbon atom number of 3 to 20 or a substitution product thereof]

In the present invention, the organic group R¹ of said copolymer (a1) containing a bond of metal salt is preferably an organic acid residue formed from at least one kind of a monobasic acid selected from the group consisting of versatic acid, palmitic acid, stearic acid, oleic acid, linoleic acid, linolenic acid, abietic acid, neoabietic acid, pimaric acid, dehydroabietic acid, 12-hydroxystearic acid, and naphthenic acid.

In the present invention, said copolymer (a1) containing a bond of metal salt is preferably a copolymer of two kinds or more of monobasic acid metal (meth)acrylates represented by the general formula (V):

CH₂=C(R²)-COO-M-O-COR¹ (V)

[in the Formula (V), R¹, R² and M are the same as mentioned before]

In the present invention, the organic group R¹ of a component unit derived from the monobasic acid metal (meth)acrylate represented by said general formula (V) is preferably an organic acid residue of a monobasic acid comprising a monovalent saturated or unsaturated aliphatic hydrocarbon group having 10 to 20 carbon atoms, a saturated or unsaturated alicyclic hydrocarbon group having 3 to 20 carbon atoms or a susbtitution product thereof.

In the present invention, the organic group R¹ of a component unit derived from a monobasic acid metal (meth)acrylate represented by said general formula (V) is preferably an organic acid residue formed from at least one kind of a monobasic acid selected from the group consisting of versatic acid, palmitic acid, stearic acid, oleic acid, linoleic acid, linolenic acid, abietic acid, neoabietic acid, pimaric acid, dehydroabietic acid, 12-hydroxystearic acid, and naphthenic acid.

In the present invention, said copolymer (a1) containing a bond of metal salt is preferably a copolymer containing a component unit derived from said monobasic acid metal (meth)acrylate and a component unit derived from at least one kind of unsaturated monomer selected from the group consisting of alkyl (meth)acrylate, alkoxyalkyl (meth)acrylate and hydroxyalkyl (meth)acrylate.

In the present invention, the content of zinc and/or copper originated from a structure of the general formula (I) in said copolymer (a1) containing a bond of metal salt is preferably 0.5 to 20 % by weight.

In the present invention, a monomer represented by the general formula (II):

CH₂=C(R²) -COO-M-O-CO-C(R²) =CH₂ (II)

[where M and R² are the same as above.], which can induce the component unit (a21) in said copolymer (a2) containing a bond of metal salt, is preferably at least one kind of a monomer selected from the group consisting of zinc diacrylate, zinc dimethacrylate, copper diacrylate and copper dimethacrylate.

In the present invention, the other unsaturated monomer which can induce the component unit (a22) in said copolymer (a2) containing a bond of metal salt is preferably at least one kind of unsaturated monomer selected from the group consisting of alkyl(meth)acrylate, alkoxyalkyl(meth)acrylate and hydroxyalkyl(meth)acrylate.

In the present invention, a monomer represented by the general formula (II):

CH₂=C(R²) -COO-M-O-CO-C(R²) =CH₂ (II)

[where M and R² are the same as above.], which can induce the component unit (a21) in said copolymer (a2) containing a bond of metal salt, is preferably at least one kind of unsaturated monomer selected from the group consisting of zinc diacrylate, zinc dimethacrylate, copper diacrylate and copper dimethacrylate, and the other unsaturated monomer which can induce the component unit (a22) in said copolymer (a2) containing a bond of metal salt is preferably at least one kind of unsaturated monomer selected from the group consisting of methyl(meth)acrylate, ethyl(meth)acrylate, butyl(meth)acrylate and 2-hydroxyethyl(meth)acrylate.

In the present invention, a monomer represented by the general formula (II):

CH₂=C(R²)-COO-M-O-CO-C(R²) =CH₂ (II)

[where M and R² are the same as above.], which can induce the component unit (a21) in said copolymer (a2) containing a bond of metal salt, is preferably at least one kind of unsaturated monomer selected from the group consisting of zinc diacrylate, zinc dimethacrylate, copper diacrylate and copper dimethacrylate, and the other unsaturated monomer which can induce the component unit (a22) in said copolymer (a2) containing a bond of metal salt is preferably a monobasic acid metal (meth)acrylate represented by the general formula (V):

CH₂=C(R²)-COO-M-O-COR¹ (V)

[where R¹, R² and M are the same as above.].

In the present invention, a monomer represented by the general formula (II):

CH₂=C(R²)-COO-M-O-CO-C(R²) =CH₂ (II)

[where M and R² are the same as above.], which can induce the component unit (a21) in said copolymer (a2) containing a bond of metal salt, is preferably at least one kind of unsaturated monomer selected from the group consisting of zinc diacrylate, zinc dimethacrylate, copper diacrylate and copper dimethacrylate, and the other unsaturated monomers which can induce the component unit (a22) in said copolymer (a2) containing a bond of metal salt are preferably a monobasic acid metal (meth)acrylate represented by the general formula (V):

CH₂=C(R²)-COO-M-O-COR¹ (V)

[where R¹, R² and M are the same as above.] and at least one kind of unsaturated monomer selected from the group consisting of alkyl(meth)acrylate, alkoxyalkyl(meth)acrylate, and hydroxyalkyl(meth)acrylate.

In the present invention, a monomer represented by the general formula (II):

CH₂=C(R²)-COO-M-O-CO-C(^{R}2)=CH₂ (II)

[where M and R² are the same as above.], which can induce the component unit (a21) in said copolymer (a2) containing a bond of metal salt, is preferably at least one kind of unsaturated monomer selected from the group consisting of zinc diacrylate, zinc dimethacrylate, copper diacrylate and copper dimethacrylate, and the other unsaturated monomers which can induce the component unit (a22) in said copolymer (a2) containing a bond of metal salt are preferably a monobasic acid metal (meth)acrylate represented by the general formula (V):

CH₂=C(R²) -COO-M-O-COR¹ (V)

[where R¹, R² and M are the same as above.] and at least one kind of unsaturated monomer selected from the group consisting of methyl(meth)acrylate, ethyl(meth)acrylate, butyl(meth)acrylate and 2-hydroxyethyl(meth)acrylate.

In the present invention, the organic group R¹ of the component unit derived from a monobasic acid metal (meth)acrylate represented by said general formula (V) is preferably an organic acid residue of a monobasic acid comprising of a monovalent saturated or unsaturated aliphatic hydrocarbon group having 10 to 20 carbon atoms, a saturated or unsaturated alicyclic hydrocarbon group having 3 to 20 carbon atoms or a substitution product thereof.

In the present invention, the organic group R¹ of the component unit derived from a monobasic acid metal (meth)acrylate represented by said general formula (V) is preferably an organic acid residue formed from at least one kind of a monobasic acid selected from the group consisting of versatic acid, palmitic acid, stearic acid, oleic acid, linoleic acid, linolenic acid, abietic acid, neoabietic acid, pimaric acid, dehydroabietic acid, 12-hydroxystearic acid, and naphthenic acid.

In the present invention,the content of zinc and/or copper originated from a structure of the general formula (II) in said copolymer (a2) containing a bond of metal salt is preferably 0.5 to 20 % by weight.

In the present invention, the component unit (a31) derived from a monomer represenred by said general formula (III) is preferably a component unit derived from trialkylsilyl(meth)acrylate.

In the present invention, the component unit (a31) derived from a monomer represented by said general formula (III) is preferably a component unit derived from triisopropylsilyl(meth)acrylate.

In the present invention, the component unit (a32) derived from "the other unsaturated monomer" which is copolymerizable with a monomer represented by said general formula (III) is preferably a component unit derived from at least one kind of unsaturated monomer selected from the group consisting of alkyl(meth)acrylate, alkoxyalkyl(meth)acrylate, and hydroxyalkyl(meth)acrylate.

In the present invention, the component unit (a32) derived from "the other unsaturated monomer" which is copolymerizable with a monomer represented by said general formula (III) is preferably a component unit derived from at least one kind of unsaturated monomer selected from the group consisting of methyl(meth)acrylate, ethyl(meth)acrylate, butyl(meth)acrylate, 2-methoxyethyl(meth)acrylate and 2-hydroxyethyl(meth)acrylate.

An antifouling coating film according to the present invention is characterized in that said film is formed from an antifouling paint composition described in any of the above paragraphs.

A substrate with a coating film according to the present invention is characterized in that the surface of the substrate is coated by a coating film formed by curing an antifouling paint composition described in any of the above paragraphs.

An antifouling substrate according to the present invention is characterized in that the surface of the substrate which comes in contact with marine water or fresh water is coated by a coating film formed by curing an antifouling paint composition described in any of the above paragraphs.

In the antifouling substrate according to the present invention, said substrate as a base is preferably any of submerged structures, outside boards of a ship, fishing nets and fishing implements.

A method of forming a coating film according to the present invention is characterized in that an antifouling paint composition described in any of the above paragraphs is applied or impregnated to the surface of the substrate and then is cured to form said coating film.

An antifouling method of a substrate according to the present invention is characterized in that the antifouling paint composition described in any of the above paragraphs is applied or impregnated to the surface of the substrate and then is cured to form said antifouling coating film.

In the present invention, said substrate as the subject of an antifouling method is preferably any of submerged structures, outside boards of a ship, fishing nets and fishing implements.

In the present invention, when the amount (weight) of the copolymer is represented or the amount ratio of the copolymer to zinc sulfide is represented, the amount of the copolymer is basically represented by the solid content value which does not contain solvents.

However, in embodiments and comparative examples, when a heating residue (% by weight) as well as a solid content (%) are specified as shown in Table 1 to 4, or a volatile component is specified, the amount of the copolymer (polymer) represents the amount that includes not only the resin content which is a film forming component, but also a volatile component (solvents, disperse medium). Similarly, in the antifouling paint compositions described in Table 5 to 10 in which the copolymers described in Table 1 to 4 were blended, the indication of the amount of the copolymer blended is the amount including a volatile component such as the solvent.

### EFFECTS OF THE INVENTION

According to the present invention, when an antifouling coating film is formed on the surface of the substrate such as a ship body by applying and curing a paint, especially a hydrolysable type antifouling paint composition, there is provided an antifouling paint composition which is especially excellent in the balance between antibacterial action and renewability of a coating film, and can effectively prevent the attachment of marine organisms, especially algae.

According to the present invention, there is provided a copper free (not containing copper) antifouling paint which does not contain cuprous oxide and is excellent in safety for the environment.

According to the present invention, with the addition of zinc sulfide as an antifouling agent to an hydrolyzable self-polishing resin and especially in a preferred embodiment, by the use of zinc sulfide and an organic antifouling agent (e.g., boron based and pyrithione based) in combination, there is provided an antifouling paint composition which is able to form a coating film with a more improved antifouling properties, such as excellence in self-polishing property (consumption property of a coating film) for a long period of time, excellence in antifouling performance for a long period of time and excellence in antifouling performance (stationary antifouling performance) in a highly polluted sea area, as compared with a conventional antifouling paint containing cuprous oxide.

Furthermore, according to the present invention, there are provided an antifouling coating film which is excellent in the balance between antibacterial action (stationary antifouling performance) and renewability of a coating film, a substrate with a coating film and an antifouling substrate which are obtained by applying and curing said antifouling paint composition.

Moreover, according to the present invention, there are provided a safe and effective forming method of a coating film having said properties on the surface of the substrate and an antifouling method of the substrate.

### BEST MODE FOR CARRYING OUT THE INVENTION

Hereinafter, there are specifically explained an antifouling paint composition, an antifouling coating film, a substrate with a coating film, an antifouling substrate, a method of forming a coating film on the surface of the substrate and an antifouling method of the substrate according to the present invention.

### [Antifouling Paint Composition]

The antifouling paint composition according to the present invention contains the following specified (A) hydrolyzable copolymer and the following specified (B) antifouling agent.

In the present invention, it is preferable that said antifouling paint composition does not substantially contain cuprous oxide from a view point to reduce an adverse effect to the environment as well as from the functional aspect of the paint such as storage stability of the paint and reduction in discoloration of the coating film.

### <(A) Hydrolyzable Copolymer>

As said hydrolyzable copolymers (A), there are mentioned said copolymers (a1) and (a2) that contain a bond of metal salt, and a silylester based copolymer (a3). These hydrolyzable copolymers (A) may be used alone or in combination with two or more thereof. Moreover, in the present invention, any one of said copolymers (a1) and (a2) that contain a bond of metal salt, and the silylester based copolymer (a3) may be used alone as said hydrolyzable copolymers (A), depending on the application of the resultant antifouling paint composition and the navigation areas of ships, for example, the silyl ester based copolymer (a3) may be used alone from the view point to prevent the attachment of algae, or two or more of them may be used from the view point of stability over a long period of time, for example, a combination of said copolymers (a1), (or (a2)) containing a bond of metal salt and the silyl ester based copolymer (a3) may be used in combination at any ratio of the amount as appropriate.
(a1) a copolymer containing a bond of metal salt, which is an acrylic copolymer or a polyester resin, having a side chain terminal group represented by the general formula (I):

   -COO-M-O-COR¹ (I)

   [in the Formula (I), M represents zinc or copper and R¹ represents an organic group.]
(a2) a copolymer containing a bond of metal salt composed of a component unit (a21) derived from a monomer represented by the general formula (II):

   CH₂=C(R²)-COO-M-O-CO-C(R²)=CH₂ (II)

   [in the Formula (II), M represents zinc or copper and R² represent a hydrogen atom or a methyl group.] and a component unit (a22) derived from the other unsaturated monomer which is copolymerizable with said monomer.
(a3) a silylester based copolymer composed of a component unit (a31) derived from a monomer represented by the general formula (III):

   R⁷-CH=C (R³) -COO-SiR⁴R⁵R⁶ (III)

   [in the Formula (III), R³ represents a hydrogen atom or a methyl group, R⁴, R⁵ and R⁶ each independently represents a hydrocarbon group, R⁷ represents a hydrogen atom or R⁸-O-CO- (with the proviso that R⁸ represents an organic group or a silyl group represented by -SiR⁹R¹⁰R¹¹, and R⁹, R¹⁰ and R¹¹ each independently represents a hydrocarbon group)] and a component unit (a32) derived from the other unsaturated monomer which is copolymerizable with said monomer (III).

Copolymers (a1) and (a2) that contain a bond of metal salt, and a silyl ester based copolymer (a3) are specifically explained hereinafter.

As such copolymers (a1) and (a2) that contain a bond of metal salt, and a silyl ester based copolymer (a3), there has been used a conventionally known copolymer, which includes, for example,
(i) a hydrolyzable self-polishing resin having a group represented by the formula "-X-O-Cu-Y" (where X represents > C=O, Y represents an organic acid residue and may be an alkylsilyloxy group.) in the side chain which is described in [0010] to [0017] of Japanese Patent Laid-Open Publication No. 298454/1998;
(ii) a hydrolyzable acrylic resin or polyester resin having a group represented by the formula "-COO-M-Y_{y}"(1) ( with the proviso that y is a valence number of M -1, M represents any metal among Cu, Zn, Si,( in the case where y is 2 or more, Y may be the same or different from each other) and Y is an alkyl group, a hydroxyl group, a group represented by -OCOR¹ (with the proviso that R¹ represents a hydrocarbon group having 10 or more carbon atoms) or a group represented by -R²-CO-CH₂-CO-R³ (with the proviso that R² is a divalent group comprising an alkylene group or a phenyl derivative and R³ is a monovalent group comprising an alkyl group or a phenyl derivative) in the side chain which is described in [0010] to [0017] of Japanese Patent Laid-Open Publication No. 5692/2000;
(iii) a hydrolyzable copolymer (especially a metal-containing copolymer) described in [0039] to [0068] of Japanese Patent Laid-Open Publication No. 196957/2004 and a polymerizable unsarurated carboxylic acid silyl ester copolymer described in [0069] to [0092] of the same publication, which have been previously proposed by the applicants of the present invention; and
(iv) a hydrolyzable copolymer (especially a metal containing copolymer) described in [0051] to [0091] of Japanese Patent Laid-Open Publication No. 97400/2005 and a polymerizable unsarurated carboxylic acid-silyl ester copolymer described in [0092] to [0124] of the same publication, which have been previously proposed by the applicants of the present invention.

Said copolymers (a1) and (a2) that contain a bond of metal salt, and a silyl ester based copolymer (a3) which are especially preferable in achieving the objectives of the present invention are explained in detail hereinafter.

### (Copolymer (a1) Containing a Bond of Metal Salt)

The copolymer (a1) containing a bond of metal salt (also referred to as a side chain terminal structure metal salt copolymer) is an acryl polymer or a polyester resin as a base resin, and is a (co) polymer having a structure in which a side chain terminal group represented by the general formula (I) is bonded:

-COO-M-O-COR¹ (I)

[in the Formula (I) , M represents zinc or copper, R¹ represents an organic group (with the proviso that a vinyl group (-CH=CH₂) and isopropyl group (-C (CH₃) =CH₂) are excluded from the organic group R¹ in the formula (I) to avoid overlapping of (a1) with (a2) below mentioned).]

### Organic Group R¹;

As the organic group R¹, there is mentioned an organic acid residue of a monobasic acid, the residue consisting of a hydrocarbon group such as a monovalent saturated aliphatic group having 2 to 30 carbon atoms, preferably 10 to 20 carbon atoms; a monovalent unsaturated aliphatic group having 2 to 30 carbon atoms, preferably 10 to 20 carbon atoms; a saturated or unsaturated alicyclic group having 3 to 20 carbon atoms; an aromatic group having 6 to 18 carbon atoms, or a substituent thereof.

It is preferable in terms of resin viscosity, elution property of the resin in the coating film and storage stability of the paint that among these organic groups R¹, R¹ is an organic acid residue of a monobasic acid, the residue consisting of a monovalent saturated or unsaturated aliphatic hydrocarbon group having 10 to 20 carbon atoms, a saturated or unsaturated alicyclic hydrocarbon group having 3 to 20 carbon atoms or a substituent thereof.

It is preferable in terms of an easiness of the synthesis of a copolymer (a1) containing a bond of metal salt, a gradual hydrolysis of the copolymer (a1) containing a bond of metal salt from a film comprising the resulting antifouling paint composition thereby exhibiting an antifouling property as well as giving less burden to the environment upon hydrolysis, high durability of an antifouling effect, excellent surface renewability and excellent recoating property at coating for repairing that such an organic group R¹ is an organic acid residue formed from a monobasic acid including versatic acid, palmitic acid, stearic acid, oleic acid, linoleic acid, linolenic acid, abietic acid, neoabietic acid, pimaric acid, dehydroabietic acid, 12-hydroxystearic acid, naphthenic acid.

It is preferable in terms of the elution and durability of a resin that the copolymer (a1) containing a bond of metal salt having such an organic group R¹ is a copolymer containing one or two or more component units derived from a monobasic acid metal (meth) acrylate represented by the following general formula (V).

CH₂=C(R²)-COO-M-O-COR¹ (V)

[where R¹, R² and M are the same as above.]

That is, in the formula (V), M represents zinc or copper, R² represents a hydrogen atom or a methyl group, and R¹ represents the same organic group as that in the above formula (I) and the same group as mentioned above is preferable for the sae reason.

As a monobasic acid metal (meth)acrylate (V) which is a metal containing monomer, there are specifically mentioned, for example, versatic acid zinc (meth)acrylate, isostearic acid zinc (meth)acrylate, versatic acid copper (meth)acrylate, ispstearic acid copper (meth)acrylate. These monobasic acid metal (meth)acrylate (V) are used alone or in combination of two or more kinds thereof.

Further, in the present invention, even though a monobasic acid metal (meth)acrylate (V) is not necessarily used as a monomer in the production of the copolymer (a1) containing a bond of metal salt, as long as the similar component unit to a component unit (component unit (V)) originated from said monomer (V) is present in the resultant copolymer, a production method of the copolymer (a1) is not specifically limited.

Moreover, the copolymer (a1) containing a bond of metal salt preferably contains the component unit (a12) derived from the "other unsaturated monomer (a12)" in addition to said monobasic acid metal (meth)acrylate component unit (V), and as the "other unsaturated monomer (a12)", alkyl (meth) acrylate in which the alkyl group has 1 to 20 carbon atoms, alkoxyalkyl(meth)acrylate in which the alkoxy group has 1 to 20 carbon atoms and the alkylene group has 1 to 20 carbon atoms, and hydroxyalkyl(meth)acrylate in which the hydroxyalkyl group has 1 to 20 carbon atoms are preferable.

Among these "other unsaturated monomer (a12)", as alkyl(meth)acrylate, there are specifically mentioned, for example, methyl(meth)acrylate, ethyl(meth)acrylate, butyl(meth)acrylate.

As said alkoxyalkyl(meth)acrylate, there are specifically mentioned, for example, methoxymethyl(meth)acrylate, 2-methoxyethyl(meth)acrylate, ethoxymethyl(meth)acrylate, ethoxyethyl(meth)acrylate, butoxymethyl(meth)acrylate, 3-methoxybutyl(meth)acrylate, 3-methyl-3-methoxybutyl(meth)acrylate.

As said hydroxyalkyl(meth)acrylate, there are specifically mentioned, for example, 2-hydroxyethyl(meth)acrylate.

Among these "other unsaturated monomer (a12)", methyl(meth)acrylate, - ethyl(meth)acrylate butyl(meth)acrylate and 2-hydroxyethyl(meth)acrylate are preferable in terms of the coating film property and the elution durability of a resin from the coating film.

These "other unsaturated monomer (a12)" is used alone or in combination of two or more thereof.

In such copolymers (a1) containing a bond of metal salt, it is preferable in terms of the resin viscosity, the resin elution property in the coating film and the water resistance of the coating film that said monobasic acid metal (meth)acrylate component unit (V) is contained at an amount of typically 10 to 100 mol %, preferably 10 to 90 mol % and the component unit (a12) originated from the "other unsaturated monomer (a12)" is contained at the residual amount, that is, at an amount of typically 0 to 90 mol %, preferably 10 to 90 mol %, in said copolymer (100 mol %).

Furthermore, it is preferable in terms of the resin viscosity, the storage stability of the paint, the resin elution rate in the coating film that the number average molecular weight Mn (a polystyrene conversion value, which is the same hereinafter, as determined by GPC. measurement conditions: column: Super H2000+H4000) of the copolymer (a1) containing a bond of metal salt is typically 1,000 to 100,000, preferably 1,000 to 50,000.

Moreover, in the copolymer (a1) containing a bond of metal salt, it is preferable in terms of the excellent resin viscosity, the storage stability of the paint, the resin elution property from the coating film that the content of zinc (Zn) and/or copper (Cu) originated from the structure of general formula (I) in the copolymer (a1) containing a bond of metal salt is typically 0.5 to 20 % by weight, preferably 5 to 20 % by weight.

### <Production of Copolymer (a1) Containing a Bond of Metal Salt>

Any of the following copolymer (a2) containing a bond of metal salt and a silyl ester based copolymer (a3) in addition to this copolymer (a1) containing a bond of metal salt can be conventionally produced by a known method, for example, by a method described in said (i) Japanese Patent Laid-Open Publication No. 298454/1998 and (ii) Japanese Patent Laid-Open Publication No. 5692/2000, or a method described in (iii) Japanese Patent Laid-Open Publication No. 196957/2004 and (iv) Japanese Patent Laid-Open Publication No. 97400/2005 which were proposed by the applicants of the present invention.

### (Copolymer (a2) Containing a Bond of Metal Salt)

The copolymer (a2) containing a bond of metal salt is a copolymer containing a bond of metal salt composed of a component unit (a21) derived from a monomer represented by the general formula (II):

CH₂=C(R²)-COO-M-O-CO-C(R²)=CH₂ (II)

[where M and R² are the same as those in the formula (V). That is, in the formula (II), M represents zinc or copper and R² represents a hydrogen atom or a methyl group.], and a component unit (a22) derived from the "other unsaturated monomer" which is copolymerizable with this monomer (II).

Still further, in the present invention, as is the case of the copolymer (a1) containing a bond of metal salt, even though metal di (meth) acrylate (II) is not necessarily used as a monomer in the production of the copolymer (a2) containing a bond of metal salt, as long as the similar component unit to a component unit (component unit (II)) originated from said monomer (II) is present in the resultant copolymer, a production method of the copolymer (a2) is not specifically limited.

As the monomer (II), that is, metal di (meth) acrylate (II), zinc diacrylate: (CH₂=CHCOO)₂Zn, zinc dimethacrylate: (CH₂=C(CH₃)COO) ₂Zn, copper diacrylate: (CH₂=CHCOO)₂Cu and copper dimethacrylate: (CH₂=C(CH₃)COO) ₂Cu are mentioned and zinc di (meth) acrylate is preferable as a monomer (II) in terms of the resin viscosity, the storage stability of the paint, the resin elution property in the coating film, In the present invention, these monomers (II) may be used alone or in combination of two or more thereof.

Furthermore, it is preferable in terms of the adjustment of resin elution rate that there are the component unit (a22) derived from the "other unsaturated monomer (a22)" which is copolymerizable with this monomer (II) in addition to the component unit (II) derived from said metal di(meth)acrylate (II) in the copolymer (a2) containing a bond of metal salt.

As this "other unsaturated monomer (a22)", there are mentioned monobasic acid metal (meth)acrylate (V) which is used in the production of said copolymer (a1) containing a bond of metal salt and/or the "other unsaturated monomer (a12)" which is a monomer used in the production of said copolymer (a1) containing a bond of metal salt, as necessary.

That is, in the copolymer (a2) containing a bond of metal salt, the monobasic acid metal (meth)acrylate component unit (V) in the copolymer (a1) containing a bond of metal salt may be present in addition to said essential metal di(meth)acrylate component unit (II), as well as a component unit (a12) originated from the "other unsaturated monomer (a12)", and both these component unit (V) and component unit (a12) may be present. Moreover, as the "other unsaturated monomer (a12)", alkyl(meth)acrylate, alkoxyalkyl(meth)acrylate and hydroxyalkyl(meth)acrylate are preferable.

In said copolymer (a2) containing a bond of metal salt, it is preferable in terms of easiness of adjustment of resin elution rate in the coating film that said metal di(meth)acrylate component unit (a21) is contained at an amount of typically 10 to 100 mol %, preferably 10 to 90 mol % and the component unit (a22) originated from the "other unsaturated monomer (a22)" is contained at the residual amount, that is, at an amount of typically 0 to 90 mol %, preferably 10 to 90 mol %, in said copolymer (100 mol %). In addition, the monobasic acid metal (meth) acrylate component unit (V) may be contained at an amount of typically 0 to 100 mol %, preferably 0 to 90 mol % and the component unit (a12) originated from the "other unsaturated monomer (a12)" may be contained at the residual amount, that is, at an amount of typically 100 to 0 mol %, preferably 10 to 90 mol %, in the component unit (a22) 100 mol % originated from the "other unsaturated monomer (a22)".

Furthermore, it is preferable in terms of the resin viscosity and the resin elution rate in the coating film that the number average molecular weight Mn (a polystyrene conversion value, which is the same hereinafter, as determined by GPC, measurement conditions: column: Super H2000+H4000) of the copolymer (a2) containing a bond of metal salt is typically 1,000 to 100,000, preferably 1,000 to 10,000.

Moreover, in the copolymers (a2) containing a bond of metal salt, it is preferable in terms of the excellence in resin viscosity, the storage stability of the paint, the resin elution property from the coating film that the content of Zinc (Zn) and/or copper (Cu) originated from the structure of general formula (I) in said copolymers (a2) is typically 0.5 to 20 % by weight, preferably 5 to 20 % by weight.

### (Silyl Ester Based Copolymer (a3))

The silyl ester based copolymer (a3) is, as mentioned above, a copolymer composed of a component unit (a31) (which is also referred to as a silyl based component unit) derived from a monomer represented by the following general formula (III) (which is referred to as a silyl ester based monomer, monomer (III)), and a component unit (a32) derived from the other unsaturated monomer which is copolymerizable with this monomer (III).

R⁷-CH=C(R³)-COO-SiR⁴R⁵R⁶ (III)

[in the Formula (III), R³ represents a hydrogen atom or a methyl group, R⁴, R⁵ and R⁶ each independently represents a hydrocarbon group and R⁷ represents a hydrogen atom or R⁸-O-CO-(with the proviso that R⁸ represents an organic group or a silyl group represented by -SiR⁹R¹⁰R¹¹ and R⁹, R¹⁰ and R¹¹ each independently represents a hydrocarbon group.]

In the case where R⁷ is a hydrogen atom (H) among said silyl ester based monomers (III), the monomer is represented by Formula (IIIa):

CH₂=C(R³)-COO-SiR⁴R⁵R⁶ (IIIa)

[with the proviso that R³, R⁴, R⁵ and R⁶ in the formula (IIIa) are the same as those in the case of formula (III)]

Said R⁴, R⁵ and R⁶ are an alkyl group having 1 to 10 carbon atoms, preferably 1 to 5 carbon atoms, and more specifically, methyl group, ethyl group, propyl group and i-propyl group are preferable.

Specific examples of such a silyl ester based monomer (IIIa) include, for example, a trialkylsilyl(meth)acrylate ester such as trimethylsilyl(meth)acrylate, triethylsilyl(meth)acrylate, tri(i-propyl)silyl(meth)acrylate, among which tri(i-propyl)silyl(meth)acrylate is preferable in terms of excellence in the resin elution property in the coating film, the elution persistence and physical properties of the coating film such as crack resistance.

In addition, among silyl ester based monomers (III), in the case where R⁷ is "R⁸-O-CO- (with the proviso that R⁸ is the same as the case of said formula (III))", the monomer is represented by the formula (IIIb):

R⁸-O-CO-CH=C(R³)-COO-SiR⁴R⁵R⁶ (IIIb)

[with the proviso that R³, R⁴, R⁵, R⁶ and R⁸ in the formula (IIIb) are the same as in the case of (III)]

Specific examples of such a silyl ester based monomer (IIIb) include, for example, maleic acid ester (a monomer in case of R³=H in the formula (IIIb)).

"Other unsaturated monomer (a32)" which is copolymerizable with this monomer (III) (or a monomer (IIIa) and/or (IIIb)) includes the similar "other unsaturated monomer (a12) and (s22)" to those used in the production of said copolymers (a1) and (a2).

As the "other unsaturated monomer (a32), alkyl(meth)acrylate, alkoxyalkyl(meth)acrylate and hydroxyalkyl(meth)acrylate are preferable.

In this silyl ester based copolymers (a3), it is preferable in terms of the excellence in the resin viscosity in the coating film (that is, crack resistance), the storage stability of the paint, the resin elution property in the coating film that the silyl ester based monomer (III) is contained at an amount of typically 10 to 100 mol %, preferably 10 to 90 mol % and the component unit (a32) originated from the the "other unsaturated monomer (a32) " is contained at the residual amount, that is, at an amount of typically 0 to 90 mol %, preferably 10 to 90 mol %, in said copolymer (100 mol %).

Furthermore, it is preferable in terms of said resin viscosity, storage stability and resin elution property from the coating film that the number average molecular weight Mn (a polystyrene conversion value, which is the same hereinafter, as determined by GPC, measurement conditions: column: Super H2000+H4000) of the silyl ester based copolymers (a3) is typically 1,000 to 200,000, preferably 1,000 to 100,000.

### <(B) Antifouling Agent>

In the present invention, as said antifouling agent (B), zinc sulfide (ZnS) is contained as an essential component. It is preferable in terms of the excellence in the antifouling property of the resultant coating film and the physical properties of the coating film such as especially cracking resistance that the zinc sulfide is contained at an amount of typically 10 to 500 parts by weight, preferably 50 to 200 parts by weight with respect to (the solid content) 100 parts by weight of the hydrolyzable copolymer (A) which is a total amount of said polymers (a1) to (a3). Meanwhile, if the zinc sulfide content is lower than the range mentioned above, there is a tendency that the coating film may not exhibit sufficient antifouling effect and the renewal property of the coating film surface is disturbed, and if the content exceeds the range, physical problems such as cracking tend to occur.

In the present invention, it is preferable in terms of the persistence of the antifouling effect and the surface renewability that said antifouling agent (B) comprises zinc sulfide and an organic antifouling agent (b2), allowing the resultant coating film to exhibit an antifouling power especially in a highly polluted sea area where the coating film is liable to be soiled seriously.

In the present invention, it is preferable in terms of excellence in the antifouling property of a coating film and the storage stability of the paint that said organic antifouling agent (b2) is at least one of organic antifouling agents selected from the group consisting of a metal-pyrithione represented by the following formula [VI] and a derivative thereof, tri-organic boron and amine complex thereof, and 4,5-dichloro-N-octylisothiazolin-3-one. 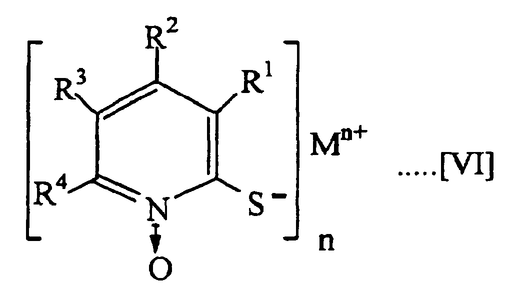 [in formula [VI], R¹ to R⁴ each independently represents a hydrogen atom, an alkyl group, an alkoxy group and a halogenated alkyl group, M represents a metal such as Cu, Na, Mg, Zn, Ca, Ba, Pb, Fe, Al, and M is preferably Zn in consideration of the durability of the consumption degree of a coating film. n represents a valence number.]

In the present invention, it is preferable in condideration of the excellent in the storage stability of a paint and in the balance between consumption property of the coating film and durability of the antifouling property that said organic antifouling agent (b2) is at least one kind of organic antifouling agents selected from the group consisting of zinc pyrithione, triphenylboron-pyridine complex, dimethylphenylboron-(4-isopropyl)pyridine complex and 4,5-dichloro-N-octylisothiazolin-3-one.

In the present invention, it is preferable in terms of excellence in antifouling property of the resultant antifouling coating film especially in its durability (which means small consumption degree of the coating film), less burden to the environment and excellence in water resistance of a coating film that an organic antifouling agent, especially said organic antifouling agent as mentioned above is contained in said antifouling agent (B) at an amount of 20 to 500 parts by weight, preferably 20 to 300 parts by weight with respect to 100 parts by weight of zinc sulfide.

Further, as the antifouling agent, a conventionally known antifouling agent may be used in view of exerting a sufficient antifouling property. However, it is preferable that an antifouling agent that has a relatively large environmental burden, for example, cuprous oxide etc. is not substantially used.

### <Coloring Pigments>

As coloring agents, various organic and inorganic pigments which are conventionally known can be used.

As organic pigments, carbon black, naphthol red, phthalocyanine blue can be mentioned.

As inorganic pigments, for example, red iron oxide, barites, zinc oxide (ZnO, zinc white), titanium white, yellow iron oxide can be mentioned. Moreover, various coloring agents such as dyes may be contained.

In the present invention, as inorganic coloring pigments, any of red iron oxide, titanium white and yellow iron oxide is especially preferable in terms of tinting strength. Said organic pigments are also preferable in the point that they may provide a coating film having a brilliant color and cause less discoloration.

### <Extender Pigment>

An extender pigment is a pigment which has a small refractive index and may not hide a coated surface because it is transparent when blending with oil and varnish. As such extender pigments, there are mentioned, for example, talc, silica, mica, clay, zinc oxide, calcium carbonate which is also used as an antiprecipitation agent, kaolin, aluminum white, white carbon which is also used as a frosting agent, aluminum hydroxide, magnesium carbonate, barium carbonate, barium sulfate, among which an extender pigment selected from the group consisting of zinc oxide, talc, silica, mica, clay, calcium carbonate, kaolin and barium sulfate are preferable.

Especially when zinc oxide is blended, it is preferable in consideration of the durability of the consumption property and attachment property of the resultant coating film that said zinc oxide is contained at an amount of typically 10 to 300 parts by weight with respect to 100 parts by weight of the copolymer (A) solid content, and is contained at an amount of 1 to 40 % by weight in the antifouling paint composition.

These extender pigments are used alone or in combination of two or more thereof. In addition, the consumption degree of a coating film may be adjusted depending on the kind of extender pigments.

In the present invention, when talc is contained as an extender pigment in the antifouling paint composition in consideration of a cost reduction and extending effect of the resultant paint, and the transparency and covering property of the resultant coating film, it is preferable that talc is contained at an amount of 5 to 300 parts by weight, preferably 5 to 200 parts by weight with respect to 100 parts by weight of a hydrolyzable copolymer (A). In addition, when talc is contained in this way, it is preferable in terms of absence of adverse effects on the physical and antifouling property of the coating film that talc is contained at an amount of 0.5 to 40 % by weight, preferably 0.5 to 20 % by weight in the antifouling paint composition.

In the present invention, furthermore, it is preferable that chlorinated paraffin or terpene phenol is contained as a plasticizer in the antifouling paint composition.

### <Plasticizer such as chlorinated Paraffin>

As a plasticizer, there are mentioned TCP (tricresilphosphate), chlorinated paraffin, polyvinylethylether, terpene phenol. These plasticizers may be used alone or in combination of two or more thereof.

These plasticizers contribute to the improvement in cracking resistance of the coating film (antifouling coating film) formed from the resultant antifouling paint compositions, among which plasticizers, chlorinated paraffin (paraffin chloride) is preferably used.

A chlorinated paraffin (paraffin chloride) blended as a plasticizer to the antifouling paint composition of the present invention may be linear or branched and may be liquid or solid (powder) at room temperature. With regard to this chlorinated paraffin, the average number of caron atoms is typically from 8 to 30, preferably 10 to 26, the number average molecular weight is typically 200 to 1200, preferably 300 to 1100, the viscosity is typically 0.1 Pa·s/25°C or more (1 or more (poise/25°C)), preferably (0.12 Pa·s/25°C or more (1.2 or more (poise/25°C)), and the specific gravity is 1.05 to 1.80/25°C, preferably 1.10 to 1.70/25°C. A coating film with less cracking and peeling can be formed by using the antifouling paint composition, if a chlorinated paraffin with these carbon number is used. Incidentally, if the average number of carbon atoms of the chlorinated paraffin is less than 8, the suppression effect of cracking may be insufficient, and if said number exceeds 30, the consumption property (renewability) and antifouling property of the resultant coating film surface may be poor. Moreover, the chlorination ratio (chlorine content) of the chlorinated paraffin is typically 35 to 75%, preferably 35 to 65%. If a chlorinated paraffin having such chlorination ratio is used, a coating film with less racking and peeling can be formed by using the resultant antifouling paint composition. As such a chlorinated paraffin, there are mentioned "Toyoparax^{®}150", "Toyoparax^{®}A-70" produced by Tosoh Corp.

In the present invention, when a plasticizer represented by a chlorinated paraffin is blended, it is preferable in terms of the reduction of cracking resistance, reduction in discoloration and the improvement in water resistance of a coating film that such a plasticizer is contained at an amount of 0.05 to 40 % by weight with respect to 100 parts by weight of said hydrolyzable copolymer (A).

Furthermore, in the present invention, it is preferable that a plasticizer represented by a chlorinated paraffin is contained at an amount of 1 to 5 % by weight in an antifouling paint composition (that is, in which a volatile component such as a solvent is included).

### [Production of Antifouling Paint Composition]

Such an antifouling paint composition relating to the present invention may be produced as follows.

The antifouling paint composition may be produced by adding zinc sulfide (B) as an antifouling agent to a hydrolyzable copolymer (A) of said copolymer containing a bond of metal salt with the use of a method which has been conventionally known, as appropriate. The antifouling paint composition of the present invention may be produced, for example, by blending a copolymer containing a bond of metal salt or a silyl ester based copolymer as a hydrolyzable copolymer (A), zinc sulfide (B), zinc oxide, talc and "the other component" as described below simultaneously or in a given sequence, followed by stirring and mixing.

### <The Other Component>

An antifouling agent, a thixotropy imparting agent, a plasticizer, an inorganic dehydrating agent (stabilizer), an antisagging and antiprecipitating agent (thickening agent), a coloring pigment, a dye, the other coating film forming component, a solvent (for example, butyl acetate, ethylcyclohexane, xylene), a germicide, a fungicide, an anti-aging agent, an antioxidant, an antistatic agent, a flame retardant, a heat conduction improver agent, an adhesion imparting agent are added simultaneously or in a given sequence at a given ratio and stirred and mixed, followed by dissolving and dispersing in a solvent.

Moreover, when said blended components are stirred and mixed, a conventionally known mixing and stirring equipment, for example, a Ross mixer, a planetary mixer, a versatile Shinagawa mixer is used, as appropriate. <Antisagging /Antiprecipitating Agent (Thixotropic Agent)>

As the antisagging and antiprecipitating agents (an thixotropic agent), an organic clay-based and an organic wax-based antisagging and antiprecipitating agent may be mixed at any amount. As such antisagging and antiprecipitating agents, there are mentioned salts such as an organic clay-based Al, Ca or Zn salt of amine, stearic acid, lecithin, alkylsulfonic acid, a polyethylene wax, an amide wax, a hydrogenated castor oil wax based agent, a polyamide wax based agent and a mixture of the salt base agent and the wax based agent, synthetic fine powder silica, an oxygenated polyethylene based wax, among which the polyamide wax, the synthetic fine powder silica, the oxygenated polyethylene based wax and the organic clay-based agent are preferable.

Such antisagging and antiprecipitating agents are exemplified by the products under the trade name of, for example, "Disparon^{®}305", "Disparon4200-20" and "DisparonA630-20X" produced by Kusumoto Chemicals, Ltd. which are commercially available.

### <The Other Coating Film Forming Component>

As the coating film forming components, a resin other than said copolymer (A) may be contained in a range that is not against to the objective of the present invention. Such "the other coating film forming component" is exemplified by a hardly water-soluble or water-insoluble resin, which includes, for example, acrylic resin, acrylsilicone resin, unsaturated polyester resin, fluorocarbon resin, polybutene resin, silicone rubber, urethane resin (rubber), epoxy resin, polyamide resin, vinyl chloride based copolymer resin, chlorinated rubber (resin), chlorinated olefin resin, styrene butadiene copolymer resin, ethylene-vinyl acetate copolymer resin, vinyl chloride resin, alkyd resin, coumarone resin, terpene phenol resin, and petroleum resin.

As the water-soluble resin, there are mentioned rosin (for example, trade name of "Rosin WW"), monocarboxylic acid and a salt thereof. The monocarboxylic acid includes, for example, a fatty acid having 9 to 19 carbon atoms and naphthenic acid. The salt of monocarboxylic acid includes Cu salt, Zn salt, Ca salt. The rosin includes gum rosin, wood rosin and tall oil rosin, any of which may be used in the present invention. These water soluble resins may be used alone or in combination of two or more kinds thereof.

### <Solvents>

In an antifouling paint of the present invention, various components mentioned above are dissolved or dispersed in a solvent. As the solvent used here, various solvents that are typically blended to the antifouling paint are used which include, for example, an aliphatic-based solvent, an aromatic-based solvent, a ketone-based solvent, an ester-based solvent, an ether-based solvent. Said aromatic-based solvent includes, for example, xylene and tluene, said ketone-based solvent includes, for example, MIBK, and ether-based solvent includes, for example, propylene glycol monomethyl ether, propylene glycol momomethylether acetate (PMAC).

### [Antifouling Coating Film, Substrate with Coating Film, etc.]

The antifouling coating film according to the present invention is characterized by to be formed from the antifouling paint composition described in any of the above paragraphs.

The substrate with the coating film according to the present invention is characterized in that the surface of the substrate is coated with a coating film formed by curing the antifouling paint composition described in any of the above paragraphs.

The antifouling substrate according to the present invention is characterized in that the surface of the substrate which comes into contact with marine water or fresh water is coated with a coating film formed by curing the antifouling paint composition described in any of the above paragraphs.

As for the antifouling substrate according to the present invention, said substrate as a base is preferably any of submerged structures, outside boards of a ship, fishing nets and fishing implements.

A method of forming the coating film on the surface of the substrate according to the present invention is characterized in that the surface of the substrate is coated or impregnated with the antifouling paint composition described in any of the above paragraphs and then cured to form the coating film.

An antifouling method of the substrate according to the present invention is characterized in that the surface of the substrate is coated or impregnated with the antifouling paint composition described in any of the above paragraphs and then said antifouling paint is cured to form the antifouling coating film.

In the present invention, said substrate as the subject of the antifouling method is preferably any of submerged structures, outside boards of a ship, fishing nets and fishing implements.

Explaining in detail, when the antifouling paint composition as mentioned above is applied once or multiple times in accordance with the conventional method to the surface of various formed bodies such as a submerged structure of water supply and drain lines at a thermal and atomic power station, coastal roads, submarine tunnels, coastal facilities, sludge spread prevention film of various ocean civil engineering works such as canals and channels, ships, fishing materials (for example, ropes, fishing nets, fishing equipment, floater, buoy), a ship, a submerged structure coated with the antifouling coating film having excellent antifouling properties, sustained release properties of the antifouling component over a long period of time, appropriate flexibility even with a thick coating of the composition and excellent crack resistance can be obtained.

That is, the antifouling coating film formed by applying and curing such antifouling paint composition according to the present invention on the surface of various formed bodies is excellent in such antifouling properties that it can persistently prevent aquatic organisms such as sea lettuce, barnacle, green string lettuce, serpula, oyster and Bugla neritina from attaching to the surface of the formed bodies for long periods.

Even when the material of the ship, etc. is FRP, steel, wood, aluminum alloy, especially said antifouling paint composition adheres well on the surface of these material. In case of a steel vessel or alumina vessel, the antifouling paint of the present invention is applied on the material surface on which a primer, an anticorrosion paint and a binder paint are coated as necessary. In addition, said antifouling paint composition may be overpainted on the existing antifouling coating film surface.

Furthermore, for example, if said antifouling paint composition is applied on the surface of submerged structures, an attempt may be made to prevent the attachment of aquatic organisms, thereby making it possible to maintain the function of said structure over a long period of time. If said antifouling paint composition is applied to the fishing nets, the blockage of the mesh of the fishing nets may be prevented and moreover, environmental pollution is not likely to occur.

Furthermore, the antifouling paint composition according to the present invention may be directly applied to the fishing nets or may be applied to the surface of a ship or submerged structures which is coated with a base material such as an anticorrosive agent or a primer in advance. In addition, the antifouling paint composition of the present invention may be overpainted as a repair on the surface of the ship (especially the FRP vessels) or submerged structures on which painting with the conventional antifouling paint the antifouling paint composition of the present invention has been already done. The thickness of the antifouling coating film formed on the surface of the ship and submerged structures in this manner is not specifically limited, but, for example, is approximately 30 to 150µm/time.

The antifouling coating film or the coating film of the water contacting parts of the ship and submerged structures according to the present invention obtained as mentioned above is formed from the antifouling paint composition as mentioned above and is excellent in long-term antifouling properties against a wide variety of organisms which attach to the ship and submerged structures with less possibility of environmental pollution.

### Effects of the Invention

According to the present invention, there can be provided an antifouling paint composition that may form the antifouling coating film suitable for an ocean vessel which is excellent in antifouling properties with less burden to the environment and is excellent in consumption properties (where the coating film is uniformly consumed at a constant rate over a long period of time) and furthermore is excellent in antifouling properties (where excellent antifouling performance may be maintained for a long period of time), an antifouling coating film formed from said antifouling paint composition, and a ship, submerged structures, fishing implements or fishing nets coated with said antifouling coating film.

Especially when a conventional hydolyzable antifouling paint composition is combined with an organic antifouling agent (for example, a boron-based or pyrithione-based agent) and zinc sulfide, the synergistic effect of the antibacterial effect of zinc sulfide and the improvement of renewability of the coating film is produced, thereby the preventing effect for the attachment of marine organisms, especially algae is significantly improved.

### Embodiments

Hereinafter, the present invention is explained more specifically with reference to the embodiments.

Moreover, in the following embodiments and comparative examples, "parts" represents parts by weight, as long as it is not against to the purpose of the present invention.

Furthermore, when the term, "copolymer (A)" is simply used in the present invention including the following tables, it is basically used to represent the resin content which is the coating film forming component. In addition to this, in the case where the heating residue is described and the solid content is indicated for the copolymer (A), they are also used to mean a resin solution or dispersing solution which contains not only the resin content that is the coating film forming component but also a volatile component such as a solvent.

### [Production Example 1]

### (Production of Copolymer (a1-1) Containing a Bond of Metal Salt at the Side Chain Terminal)

To a four-neck flask equipped with a condenser, a thermometer, a dropping funnel and a stirrer was charged 30 parts by weight of PGM (polypropyleneglycol monomethylether) and 40 parts by weight of xylene, and the solution was heated to 100°C with stirring. And then, to the resultant solution was added dropwisely a mixture comprising a monomer and a polymerization initiator listed in Table 1 at a constant rate from the dropping funnel over 3 hours. After the completion of dropwise addition, to the mixture solution was added dropwisely 1 part by weight of t-butylper oxide and 10 parts by weight of xylene over 2 hours, and after stirring for 2 hours, to the resultant mixture solution was added 20 parts by weight of xylene to obtain the copolymer (a1-1) containing a bond of metal salt at the side chain terminal having characteristic values shown in Table 1.

The Gardner viscosity and the solid content (%) were evaluated which are physical properties of a reaction mixture containing the resultant copolymer containing a bond of side chain terminal metal salt (which is also referred to as a side chain terminal structure metal salt copolymer) or said copolymer.

The results are shown in Table 1.

### <Measurement Conditions of Gardner Viscosity>

The Gardner viscosity was measured at the 35 % by weight concentration of the resin content at 25°C in accordance with 4.3 of JIS K7233, as described in Japanese Patent Laid-Open Publication No. 55890/2003.

### <Solid Content>

The solid content is referred to as a heating residue at the time when a reaction mixture, a paint and an uncured coating film and the like in which a polymer and a solvent are contained are heated and dried to volatilize the solvent. The heating residue contains a pigment in addition to the resin content and typically becomes a coating film forming composition. In addition, the calculation is made by including a monomer (for example, Table 2), which is contained in the paint and can react to form the resin (the solid content), as the solid content.

### <Measurements of Number Average Molecular Weight (Mn) and Weight Average Molecular Weight (Mw)>

The weight average molecular weight (Mw) of a resin such as a metal-containing resin was measured by HLC-8120GPC with two separation columns (α-M) of TSK-gel α Type using DMF (dimethylformamide) to which 20mL of LiBr is blended as an eluent. The weight average molecular weight (Mw) was determined in terms of polystyrene conversion.

Furthermore, the number average molecular weight (Mn) of a resin was determined by the above-mentioned GPC in terms of polystyrene conversion.

### [Production Examples 2 to 3]

Except that the blended components were changed as shown in Table 1 in Production Example 1, a side chain terminal structure metal salt copolymers (a1-2) to (a1-3) were produced in a similar manner to Production Example (a1-1).

The physical properties of a reaction mixture containing the resultant side chain terminal structure metal salt copolymers or said copolymers were evaluated in a similar manner to Production Example (a1-1).

The results are shown in Table 1.

**<Table 1> Production Example of Side Chain Terminal Structure Metal Salt Copolymer (a1)**

| | Side Chain Terminal Structure Metal Salt Copolymer (a1) | Production Example 1 | Production Example 2 | Production Example 3 |
|---|---|---|---|---|
| Blended component unit (parts by weight) | | a1-1 | a1-2 | a1-3 |
| Metal containing monomer (i) | Zinc acrylate | 8 | | |
| | Zinc methcrylate | 8 | | |
| | Copper acrylate | | | 16 |
| Metal containing monomer (ii) | Versatatozinc methacrylate | | 35 | |
| | Isostearatozinc acrylate | 12 | | |
| | Isostearatozinc methacrylate | 12 | | |
| | Versatatocopper acrylate | | | 24 |
| Polymerizable monomer (ii) | 2-methoxyethylacrylate | 13 | 10 | 10 |
| | 3-methoxybutylacrylate | | 30 | 40 |
| Unsarurated monomer (iv) | Methylmethacrylate | 13 | | |
| | Ethylacrylate | 34 | 25 | 10 |
| Polymerization initiator | t-butylperoxide | 5 | 6 | 7 |
| Characteristic value | Gardner viscosity | -Y | +Z | +Z1 |
| | Solid content (%) | 49,7 | 50.5 | 51.1 |

### [Production Example 4]

### (Production of Metal Containing Monomer A)

To a four-neck flask equipped with a condenser, a thermometer, a dropping funnel and a stirrer was charged 85.4 parts of propyleneglycol methylether (PGM) and 40.7 parts of zinc oxide and the solution was heated to 75°C with stirring. And then, to the resultant solution was added dropwisely a mixture comprising 43.1 parts of methyl methacrylate (MMA), 36.1 parts of acrylic acid (AA) and 5 parts of water at a constant rate from the dropping funnel over 3 hours. After the completion of dropwise addition, the reaction solution turned from milky white to transparent. After further stirring for 2 hours, to the reaction solution was added 36 parts of propyleneglycol methylether (PGM) to obtain a transparent mixture solution A containing a metal containing monomer.

The solid content (the metal containing monomer A) in the resultant mixture solution was 44.8 % by weight. (<Note> the solid content: refer to the remarks in Table 2.)

The blended composition are also shown in Table 2.

### [Production Example 5]

Except that the blended components were changed as shown in Table 2 in Production Example 4 (production example of metal containing monomer (A) ) , a mixture solution (B) containing the metal containing monomer was produced in a similar manner to Production Example 4.

The blended composition are also shown in Table 2.

**<Table 2> Production Example of Metal Containing Monomer Mixture**

| | Amount charged (mol ratio) | | | | The volatile component content (%) in a metal containing monomer mixture | | | | Solid content (%) * |
|---|---|---|---|---|---|---|---|---|---|
| | MMA | AA | ZnO | Water | PGM | N-BuOH | Xylene | Water | |
| Production Example 4 (A) | 0.5 | 0.5 | 0.5 | 0.27 | 53.2 | | | 2 | 44.8 |
| Production Example 5 (B) | 0.5 | 0.5 | 0.5 | 0.27 | | 9.9 | 43.2 | 2 | 44.9 |

| | | | | | | | | | |
|---|---|---|---|---|---|---|---|---|---|
| (Remarks) MMA: methyl methacrylate, AA: acrylic acid, PGM: propyleneglycol monomethylether, N-BuOH: n-butanol * Solid Content (%): Referred to as an amount of a copolymer or an amount corresponding to the copolymer in the reaction mixture in which the solvent are contained in addition to the copolymer obtained by reacting the charged raw materials. | | | | | | | | | |

### [Production Example 6]

### (Production of Metal Containing Copolymer (a2-1))

To a four-neck flask equipped with a condenser, a thermometer, a dropping funnel and a stirrer was charged 15 parts of propyleneglycol methylether, 57 parts of xylene and 4 parts of ethylacrylate and the solution was heated to 100°C with stirring. And then, to the resultant solution was added dropwisely a transparent mixture comprising 1 part of methylmethacrylate (MMA), 66.2 parts of ethylacrylater (EA), 5.4 parts of 2-methoxyethylacrylate (2-MEA), 52 parts of the mixture solution A obtained in Production Example 4, 10 parts of xylene, 1 part of a chain transfer agent ("Nofmer^{®} MSD" manufactured by NOF Corporation), 2.5 parts of AIBN (azobis isobutylonitrile, manufactured by Nihon Hydrazine Co., Ltd.) and 7 parts of AMBN (azobismethylbutylonitrile, manufactured by Nihon Hydrazine Co., Ltd.) from the dropping funnel at a constant rate over 6 hours.

After the completion of dropwise addition, to the mixture solution was added dropwisely 0.5 parts of t-butylper oxide (TBPO) and 7 parts of xylene, and after stirring for 1 and half hours, 4.4 parts of xylene was added to obtain a pale yellow transparent resin composition which contains no insoluble substance and contains a metal salt containing copolymer (a2-1), and has 45.6 % of heating residue in the resin composition, a Gardner viscosity of "-Y" (measured at the 35 % by weight concentration of the resin content at 25°C), a number average molecular weight (Mn) of 1950 and a weight average molecular weight (Mw) of 5200 as measured by GPC.

The physical properties (Gardner viscosity, solid content (%), molecular weights Mn and Mw) of the reaction mixture, which contains the resultant copolymer (a2-1) containing a bond of metal salt, or said copolymer are collectively shown in Table 3.

### [Production Example 7]

Except that the blended components were changed as shown in Table 3 in Production Example 6, a cross-linking copolymer (a2-2) containing a bond of metal salt was produced in a similar manner to Production Example 6.

The physical properties of the reaction mixture containing the resultant cross-linking copolymer containing a bond of metal salt or said copolymer were evaluated in a similar manner to Production Example 6 (Production Example of copolymer (a2-1)).

The results are shown in Table 3.

**<Table 3> Production Example of Cross-linking Copolymer (a2) Containing a Bond of Metal Salt**

| | Cross-linking copolymer (a2) containing a bond of metal salt | Production Example 6 | Production Example 7 |
|---|---|---|---|
| Blended component unit (parts by weight) | | a2-1 | a2-2 |
| Metal containing reaction substance mixture solution | A (Production Example 4) | 52 | |
| | B (Production Example 5) | | 37.8 |
| Copolymerization monomer | MMA | 1 | 18 |
| | EA | 66.2 | 65 |
| | 2-MEA | 5.4 | |
| Initiator | AIBN | 2.5 | 2.5 |
| | AMBN | 7 | 7 |
| | TBPO | 0.5 | 0.5 |
| Chain transfer agent | Nofmer^{®} MSD | 1 | 1 |
| Characteristic value | Gardner viscosity | -Y | +Y |
| | Solid content (%) | 45.6 | 46.2 |
| | Molecular weight (Mn) | 1,950 | 2,200 |
| | Molecular weight (Mw) | 5,200 | 5,600 |

### [Production Example 8]

### (Production Example of Silyl(Meth)Acrylate Copolymer (a3-1))

To a reaction vessel equipped with a stirrer, a condenser, a thermometer, a dropping device, a nitrogen introducing pipe and a heating and cooling jacket was charged with 100 parts of xylene and the solution was heated and stirred under the nitrogen flow under the conditions of 85°C. While maintaining the same temperature, into said reaction vessel was added dropwisely a mixture of 60 parts of triisopropylsilylacrylate, 40 parts of methylmethacrylate and 0.3 parts of 2, 2'-azobisisobutylonitrile which is a polymerization initiator over 2 hours through the dropping device. And then, after the mixture solution was stirred at the same temperature for 4 hours, to the resultant mixture solution was added 0.4 parts of 2, 2'-azobisisobutylonitrile and stirred at the same temperature for further 4 hours to obtain a clear and colorless reaction solution containing silyl(meth)acrylate copolymer (a3-1).

The heating residue (a heating residue after drying for 3 hours in a hot-air dryer at 105°C) of the resultant copolymer (a3-1) was 51.2 % by weight, the viscosity of that at 25°C was 408 mPa·s (408 cps), and the number average molecular weight (Mn) and weight average molecular weight (Mw) of the copolymer are 9735 and 55650, respectively, as measured by GPC.

The properties of the dropped component and resultant product in producing a copolymer are collectively shown in Table 4.

### [Production Examples of 9 and 10]

Except that the blended components (dropped components) were changed as shown in Table 4 in Production Example 8, silyl ester based copolymers (a3-2) and (a3-3) were produced in a similar manner to Production Example (a3-1).

The physical properties of the reaction mixture containing the resultant silyl(meth)acrylate copolymer or said copolymer were evaluated in a similar manner to Production Example 8 (Production Example of the silyl ester based copolymer (a3-1)).

The results are shown in Table 4.

**<Table 4> Production Example of Silyl Ester Based Copolymer (a3)**

| Type of Polymer | | | Production Example | Production Example | Production Example |
|---|---|---|---|---|---|
| Contents (Blended component: parts by weight) | | | a3-1 | a3-2 | a3-3 |
| Solvent | Xylene | | 100 | 100 | 100 |
| Component added dropwisely | Triisopropylsilylacrylate | | 60 | 50 | 40 |
| | Methylmethacrylate | | 40 | 45 | 55 |
| | 2-methoxyethylacrylate | | | 5 | |
| | Ethylacrylate | | | | 5 |
| | 2, 2'-azobisiso butylonitrile (early time) | | 0.3 | 0.5 | 1 |
| | Total | | 200.3 | 200.5 | 201 |
| Additional component | 2, 2'-azobisiso butylonitrile (late time) | | 0.4 | 0.4 | 0.4 |
| Physical properties of the resultant products | Heating residue (Wt.%) | | 51.2 | 50.1 | 49.5 |
| | Viscosity (mPa·s/25°C (cps/25°C)) | | 408 | 111 | 364 |
| | Values measure by GPC | Mn | 9,735 | 8,354 | 4,998 |
| | | Mw | 55,650 | 35,600 | 16,229 |

### [Examples 1 to 43]

### <Preparation of Antifouling Paint Composition>

Antifouling paint compositions with the blended compositions shown in Examples 1 to 43 in Tables 5 to 7 (that is, Tables 8 to 10) were prepared by a conventional method by using each of the side chain terminal structure metal salt copolymers (a1-1) to (a1-3) obtained in Production Examples 1 to 3 shown in said Table 1, the cross-linking copolymers (a2-1) to (a2-2) containing a bond of metal salt obtained in Production Examples 6 to 7 shown in said Table 3, or the silyl ester based copolymers (a3-1) to (a3-3) obtained in Production Examples 8 to 10 shown in said Table 4.

### <Measurement of Coating Film Consumption Degree of Antifouling

### Coating Film>

The antifouling paint compositions containing the blended compositions shown in Tables 5 to 7 obtained as mentioned above were directly applied to a hard vinyl chloride resin plate (50mm × 50mm × 1.5mm) that had not been pretreated with primer so that the dried film thickness is 150µm. The resultant test plate with the coating film was fixed on a rotating drum installed in the marine water (in the Nagasaki bay in Nagasaki pref.), and then the drum was rotated at the circumference speed of 15 knots to measure the consumption degree of the coating film (the total amount µm of thickness of the consumed coating film from immediately after the installation of the drum) monthly for six months.

The results are collectively shown in Tables 5 to 7.

### <Evaluation of Stationary Antifouling Properties of Antifouling Coating Films >

### (Preparation of Test Plate)

An epoxy based anticorrosion paint (Epoxy AC paint, trade name "Bannoh500", produced by Chugoku Marine Paints, Ltd.) was preapplied to a sandblast treated steel plate (length 300mm × width 100mm × thickness 3.2mm) so that the dried film thickness is 150µm, and then to the resultant film was applied an epoxy based binder paint (trade name "Bannoh500N", produced by Chugoku Marine Paints, Ltd.) so that the dried film thickness is 100µm.

And then, to the resultant film was once applied an antifouling paint composition of the blended composition (the same blended composition as those in Tables 5 to 7) shown in Tables 8 to 10 so that the dried film thickness is 150µm and dried to prepare a test plate with a coating film. In addition, the applying interval between the preapplied paint (Banno500) and the overcaoted paint (Bannoh500N) was set at 1 day/1 coat.

### (Testing Method of Stationary Antifouling Properties)

After the plate was dried at room temperature for 7 days, it was immersed in the Nagasaki bay in Nagasaki pref. and allowed to stand for 6 months, during which period an area (%) where aquatic organisms had attached were investigated every month.

The results are collectively shown in Tables 8 to 10.

### [Comparative Examples 1 to 33]

Except that the blended compositions of the antifouling paint composition were changed as shown in Tables 11 to 13 and Table 17 (or Tables 14 to 16 and Table 18) in measuring the consumption degree of the coating film and stationary antifouling properties were measured in a similar manner to Example 1.

The results are collectively shown in Tables 11 to 18.

### <Blended Components and Evaluation Criteria.

Moreover, in each Table, each substance shown in the blended composition column represents the following trade names.
Chlorinated Paraffin: Trade name "Toyoparax^{®}150" (Average carbon number: 14.5, chlorine content ratio: 50%, viscosity: 1.2 Pa·s/25°C (12 poise/25°C), specific gravity: 1.25/25°C, produced by Tosoh Corp.)
Zinc Oxide: Trade name "Zinc Oxide No.3" (produced by Kyushu Hakusui Co., Ltd.)
Talc: Trade name "TTK Talc" (produced by Takehara Chemical Industrial Co., Ltd.)
Zinc salts of 2-pyridinethiole-1-oxide: Trade name "AF-Z" (produced by Yoshitomi Fine Chemicals Ltd.)
Zinc sulfide: Trade name "Sachtolith^{®} HD" (produced by SACHTLEBEN CHEMIE GmbH)
4,5-dichloro-2-n-octylisothiazolin-3-one: Trade name "SEA-NINE^{®} 211" (produced by Rohm and Haas Company), Solid contents: 30 wt. %
Oxidized polyethylene wax: Trade name: "Disparon^{®} 4200-20(Dispal4200-20X)" (produced by Kusumoto Chemicals, Ltd.), 20% xylene paste
· Aliphatic amide wax: Trade name "Disparon^{®}" A630- 20X (Dispal A630-20X" (produced by Kusumoto Chemicals, Ltd.), 20% xylene paste
Propyleneglycol monomethylether: Trade name "Kuraray PGM" (produced by Kuraray Co., Ltd.); solvent

The major raw materials among the above blended components are shown in Table 19.

The evaluation criteria for the attachment area of aquatic organisms are as follows.

### Evaluation Criteria

### <The Evaluation Criteria for Attachment Area of Aquatic Organisms (Evaluation Criteria for Stationary Antifouling Properties>

0 point: No attachment of aquatic organisms
0.5 points: attachment area of aquatic organisms is approximately 10%.
1 point: attachment area of aquatic organisms is approximately 20%.
2 points: attachment area of aquatic organisms is approximately 30%.
3 points: attachment area of aquatic organisms is approximately 40%.
4 points: attachment area of aquatic organisms is approximately 50%.
5 points: attachment area of aquatic organisms is approximately 100%.

Moreover, in the Table, for the content ratio of the organic antifouling composition (b2)/ZnS, the indication,"-" represents that it is not calculable.

**<Table 5> Measurement of the Consumption**

| | | Degree of Coating Films | | | | | | | | | | | | | | |
|---|---|---|---|---|---|---|---|---|---|---|---|---|---|---|---|---|
| Blended compositions of antifouling paint compositions (parts by weight) | | Examples | | | | | | | | | | | | | | |
| | | 1 | 2 | 3 | 4 | 5 | 6 | 7 | 8 | 9 | 10 | 11 | 12 | 13 | 14 | 15 |
| Side chain terminal structure metal salt copolymer a1-1 (Solid contents 49.7%) | | 30 | 30 | 35 | 40 | 38 | 40 | 35 | 32 | 40 | 38 | 35 | | | | |
| Side chain terminal structure metal salt copolymer a1-2 (Solid contents 50.5%) | | | | | | | | | | | | | 30 | 35 | | |
| Side chain terminal structure metal salt copolymer a1-3 (Solid contents 51.1%) | | | | | | | | | | | | | | | 32 | 35 |
| Toyoparax^{®} 150 (Chlorinated paraffin) | | 2 | 2 | 2 | 4 | 2 | 2 | 3 | 2 | 2 | 2 | 2 | 2 | 2 | 2 | 2 |
| Talc FC-1 | | 15 | 7 | 5 | 4 | 2 | 2 | 5 | 7 | 5 | 2 | 5 | 10 | 2 | 5 | 2 |
| Zinc oxide No.3 (ZnO) | | 12 | 8 | 5 | 5 | 10 | 3 | 10 | 8 | 10 | 3 | 10 | 10 | 5 | 10 | 3 |
| Zinc sulfide (ZnS) | | 9 | 17 | 24 | 18 | 24 | 33 | 18 | 17 | 17 | 30 | 23 | 20 | 30 | 22 | 30 |
| Red iron oxide Gekko BB | | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 | 1 | 1 | 1 | 1 | 1 | 1 | 1 |
| Copper pyrithione | | | | | | | | | | | | | | | | |
| Zinc pyrithione | | 2 | 5 | 2 | 2 | 2 | 3 | 2 | 2 | 2 | 5 | 1 | 2 | 2 | 2 | 1 |
| Triphenylboron-pyridine | | 6 | 10 | 6 | 6 | 6 | 5 | | | | | 5 | 5 | 5 | 5 | 4 |
| 4-isopropylpyridine-diphenylmethylboran | | | | | | | | | | 6 | 5 | | | | | |
| SEA-NINE^{®}211 | | | | | | | | 10 | 10 | | | | | | | |
| Xylene | | 18 | 15 | 15 | 15 | 10 | 6 | 11 | 16 | 12 | 10 | 12 | 15 | 13 | 16 | 17 |
| Disparon^{®} 630-20XC | | | | | | | | | | | | | | | | |
| Calcined gypsum FT-2 | | | | | | | | | | | | 1 | | | | |
| Total | | 100 | 100 | 100 | 100 | 100 | 100 | 100 | 100 | 100 | 100 | 100 | 100 | 100 | 100 | 100 |
| Thickness of consumed coating film (total amount, µm) | After 1 month | 4.9 | 5.5 | 6.1 | 6.7 | 5.6 | 6.6 | 5.2 | 6.4 | 4.9 | 6.3 | 6.3 | 3.1 | 6.7 | 4.9 | 6.3 |
| | After 2 months | 9.7 | 10.4 | 9.7 | 13.1 | 11.3 | 11.2 | 8.9 | 10.2 | 10.1 | 10.4 | 10.4 | 7.1 | 12.1 | 8.8 | 10.4 |
| | After 3 months | 16.7 | 16.4 | 18.3 | 20.2 | 19.8 | 18.4 | 13.3 | 15.3 | 16.1 | 16.1 | 16.1 | 13.8 | 18.5 | 15.1 | 16.1 |
| | After 4 months | 22.3 | 22.7 | 26.3 | 28.5 | 28.9 | 22.3 | 20.8 | 21.9 | 24.5 | 21.3 | 21.3 | 19.3 | 24.5 | 19.4 | 21.3 |
| | After 5 months | 27.1 | 29.1 | 33.6 | 35.9 | 36.8 | 28.1 | 26.3 | 27.8 | 30.9 | 27.9 | 27.9 | 24.3 | 30.9 | 24.5 | 27.9 |
| | After 6 months | 32.4 | 35.3 | 40.6 | 43.1 | 42.6 | 35.3 | 33.3 | 35.5 | 36.7 | 33.4 | 33.4 | 29.7 | 36.7 | 29.7 | 33.4 |
| ZnS/coploymer (a1) solid contents | | 60.4 | 114.0 | 138.0 | 90.5 | 127.1 | 166.0 | 103.5 | 106.9 | 85.5 | 158.8 | 132.2 | 132.0 | 132.2 | 132.0 | 169.7 |
| Organic antifouling (b2)/zinc sulfide component | | 88.9 | 88.2 | 33.3 | 44.4 | 33.3 | 24.2 | 22.2 | 23.5 | 47.1 | 33.3 | 26.1 | 35.0 | 23.3 | 31.8 | 16.7 |
| ZnO/copolymer (a1) solid contents | | 80.5 | 53.7 | 28.7 | 25.2 | 52.9 | 15.1 | 57.5 | 50.3 | 50.3 | 15.9 | 57.5 | 66.0 | 28.3 | 61.2 | 16.8 |
| Talc/copolymer (a1) solid contents | | 100.6 | 46.9 | 28.7 | 20.1 | 10.6 | 10.1 | 28.7 | 44.0 | 25.2 | 10.6 | 28.7 | 66.0 | 11.3 | 30.6 | 11.2 |
| Chlorinated paraffin/ copolymer (a1) solid contents | | 13.4 | 13.4 | 11.5 | 20.1 | 10.6 | 10.1 | 17.2 | 12.6 | 10.1 | 10.6 | 11.5 | 13.2 | 11.3 | 12.2 | 11.2 |

**<Table 6> Measurement of the Consumption**

| | | Degree of Coating Films | | | | | | | | | | | | |
|---|---|---|---|---|---|---|---|---|---|---|---|---|---|---|
| Blended compositions of antifouling paint compositions (parts by weight) | | Examples | | | | | | | | | | | | |
| | | 16 | 17 | 18 | 19 | 20 | 21 | 22 | 23 | 24 | 25 | 26 | 27 | 28 |
| Cross-linking metal copolymer a2-1 (Solid contents 45.6%) | | 30 | 30 | 35 | 40 | 38 | 40 | 35 | 32 | 40 | 38 | 35 | | |
| Cross-linking metal copolymer a2-2 (Solid contents 46.2%) | | | | | | | | | | | | | 30 | 35 |
| Toyoparax^{®} 150 (Chlorinated paraffin) | | 2 | 2 | 2 | 4 | 2 | 2 | 3 | 2 | 2 | 2 | 2 | 2 | 2 |
| Talc FC-1 | | 15 | 7 | 5 | 4 | 2 | 2 | 5 | 7 | 5 | 2 | 5 | 10 | 2 |
| Zinc oxide No.3 (ZnO) | | 12 | 8 | 5 | 5 | 10 | 3 | 10 | 8 | 10 | 3 | 10 | 10 | 5 |
| Zinc sulfide (ZnS) | | 9 | 17 | 24 | 18 | 24 | 33 | 18 | 17 | 17 | 30 | 23 | 20 | 30 |
| Red iron oxide Gekko BB | | 1.5 | 1.5 | 1.5 | 1.5 | 1.5 | 1.5 | 1.5 | 1.5 | 1.5 | 0.5 | 1.5 | 1.5 | 1.5 |
| Novoperm^{®} Red F5RK | | 0.5 | 0.5 | 0.5 | 0.5 | 0.5 | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 | 1 | 1 | 1 | 1 | 1 |
| Copper pyrithione | | | | | | | | | | | | | | |
| Zinc pyrithione | | 2 | 5 | 2 | 2 | 2 | 3 | 2 | 2 | 2 | 5 | 1 | 2 | 2 |
| Triphenylboron-pyridine | | 6 | 10 | 6 | 6 | 6 | 5 | | | | | 5 | 5 | 5 |
| 4-isopropylpyridine-diphenylmethylboran | | | | | | | | | | 6 | 5 | | | |
| SEA-NINE^{®}211 | | | | | | | | 10 | 10 | | | | | |
| Xylene | | 18 | 15 | 15 | 15 | 10 | 6 | 11 | 16 | 12 | 10 | 12 | 15 | 13 |
| Disparon^{®} 630-20XC | | 3 | 3 | 3 | 3 | 3 | 3 | 3 | 3 | 3 | 3 | 3 | 3 | 3 |
| Calcined gypsum FT-2 | | | | | | | | | | | | | | |
| Total | | 100 | 100 | 100 | 100 | 100 | 100 | 100 | 100 | 100 | 100 | 100 | 100 | 100 |
| Thickness of consumed coating film (total amount, µm) | After 1 month | 5.2 | 5.5 | 6.1 | 6.8 | 5.5 | 8.3 | 5.2 | 6.1 | 6.3 | 5.5 | 5.6 | 3.8 | 4.4 |
| | After 2 months | 9.7 | 10.3 | 9.8 | 13.1 | 10.3 | 15.4 | 8.9 | 9.7 | 10.4 | 9.7 | 11.3 | 6.9 | 9.7 |
| | After 3 months | 14.3 | 16.4 | 17.3 | 19.4 | 14.3 | 22.6 | 13.3 | 15.3 | 16.1 | 15.1 | 14.3 | 12.4 | 15.8 |
| | After 4 months | 20.2 | 22.2 | 24.3 | 26.7 | 20.9 | 31.9 | 20.8 | 22.6 | 21.3 | 21.9 | 22.8 | 18.9 | 19.4 |
| | After 5 months | 26.3 | 28.3 | 31.3 | 33.2 | 27.9 | 37.4 | 26.3 | 30.1 | 27.9 | 26.4 | 28.9 | 25.3 | 24.3 |
| | After 6 months | 31.2 | 34 | 39 | 42.1 | 32.3 | 55.1 | 33.3 | 38.4 | 33.4 | 32 | 33.4 | 31.3 | 29.6 |
| ZnS/copolymer solid contents | | 65.8 | 124.3 | 150.4 | 98.7 | 138.5 | 180.9 | 112.8 | 116.5 | 93.2 | 173.1 | 144.1 | 144.3 | 185.5 |
| Organic antifouling (b2)/zinc sulfide component | | 88.9 | 88.2 | 33.3 | 44.4 | 33.3 | 24.2 | 22.2 | 23.5 | 47.1 | 33.3 | 26.1 | 35.0 | 23.3 |
| ZnO/copolymer (a1) solid contents | | 87.7 | 58.5 | 31.3 | 27.4 | 57.7 | 16.4 | 62.7 | 54.8 | 17.3 | 54.8 | 62.7 | 72.2 | 30.9 |
| Talc/copolymer (a1) solid contents | | 109.6 | 51.2 | 31.3 | 21.9 | 11.5 | 11.0 | 31.3 | 48.0 | 27.4 | 11.5 | 31.3 | 72.2 | 12.4 |
| Chlorinated paraffin/ (a1) solid contents copolymer | | 14.6 | 14.6 | 12.5 | 21.9 | 11.5 | 11.0 | 18.8 | 13.7 | 11.0 | 11.5 | 12.5 | 14.4 | 12.4 |

**<Table 7> Measurement of the Consumption**

| | | Degree of Coating Films | | | | | | | | | | | | | | |
|---|---|---|---|---|---|---|---|---|---|---|---|---|---|---|---|---|
| Blended compositions of antifouling paint compositions (parts by weight) | | Examples | | | | | | | | | | | | | | |
| | | 29 | 30 | 31 | 32 | 33 | 34 | 35 | 36 | 37 | 38 | 39 | 40 | 41 | 42 | 43 |
| Copolymer a3-1 (Heating residue 51.2%) | | 30 | 30 | 35 | 40 | 38 | 40 | 35 | 32 | 40 | 38 | 35 | | | | |
| Copolymer a3-2 (Heating residue 50.1%) | | | | | | | | | | | | | 30 | 35 | | |
| Copolymer a3-3 (Heating residue 49.5%) | | | | | | | | | | | | | | | 32 | 35 |
| Toyoparax^{®} 150 (Chlorinated paraffin) | | 2 | 2 | 2 | 4 | 2 | 2 | 3 | 2 | 2 | 2 | 2 | 2 | 2 | 2 | 2 |
| Talc FC-1 | | 15 | 7 | 5 | 4 | 2 | 2 | 5 | 7 | 5 | 2 | 5 | 10 | 2 | 5 | 2 |
| Zinc oxide No.3 (ZnO) | | 12 | 8 | 5 | 5 | 10 | 3 | 10 | 8 | 10 | 3 | 10 | 10 | 5 | 10 | 3 |
| Zinc sulfide (ZnS) | | 9 | 17 | 24 | 18 | 24 | 33 | 18 | 17 | 17 | 30 | 23 | 20 | 30 | 22 | 30 |
| Red iron oxide Gekko BB | | 1.5 | 1.5 | 1.5 | 1.5 | 1.5 | 1.5 | 1.5 | 1.5 | 1.5 | 0.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 | 1 | 1 | 1 | 1 | 1 | 1 | 1 |
| Copper pyrithione | | | | | | | | | | | | | | | | |
| Zinc pyrithione | | 2 | 5 | 2 | 2 | 2 | 3 | 2 | 2 | 2 | 5 | 1 | 2 | 2 | 2 | 1 |
| Triphenylboron-pyridine | | 6 | 10 | 6 | 6 | 6 | 5 | | | | | 5 | 5 | 5 | 5 | 4 |
| 4-isopropylpyridine-diphenylmethylboran | | | | | | | | | | 6 | 5 | | | | | |
| SEA-NINE^{®}211 | | | | | | | | 10 | 10 | | | | | | | |
| Xylene | | 18 | 15 | 15 | 15 | 10 | 6 | 11 | 16 | 12 | 10 | 12 | 15 | 13 | 16 | 17 |
| Disparon^{®} 630-20XC | | 3 | 3 | 3 | 3 | 3 | 3 | 3 | 3 | 3 | 3 | 3 | 3 | 3 | 3 | 3 |
| Calcined gypsum FT-2 | | | | | | | | | | | | | | | | |
| Total | | 100 | 100 | 100 | 100 | 100 | 100 | 100 | 100 | 100 | 100 | 100 | 100 | 100 | 100 | 100 |
| Thickness of consumed coating film (total amount, µm) | After 1 month | 2.4 | 3.3 | 5.3 | 3.1 | 4.1 | 5.9 | 3.2 | 3.3 | 3.8 | 6.1 | 4.2 | 2.1 | 3.1 | 1.9 | 3.3 |
| | After 2 months | 4.5 | 6.6 | 11.4 | 5.8 | 8.3 | 11.5 | 7.1 | 7.2 | 8.1 | 11.9 | 8.4 | 3.7 | 5.9 | 3.7 | 6.1 |
| | After 3 months | 8.4 | 12.3 | 17.1 | 9.1 | 16.1 | 18.7 | 11.4 | 12.1 | 11.9 | 18.6 | 15.9 | 7.9 | 11.1 | 7.3 | 11.1 |
| | After 4 months | 11.3 | 17.1 | 22.9 | 12.1 | 19.8 | 23.4 | 15.4 | 17.9 | 16.7 | 27.3 | 20.3 | 10.5 | 15.9 | 9.5 | 14.9 |
| | After 5 months | 16.3 | 23.1 | 28.6 | 17.9 | 22.8 | 29.4 | 20.6 | 22.4 | 21.9 | 33.3 | 24.9 | 14.3 | 20.3 | 13.2 | 20.9 |
| | After 6 months | 21.2 | 29.5 | 33.6 | 23.1 | 29.5 | 35.4 | 24.5 | 29.5 | 28.3 | 39.7 | 29.5 | 19.6 | 25.6 | 16.7 | 25.9 |
| ZnS/coploymer (a1) solid contents | | 58.6 | 110.7 | 133.9 | 87.9 | 123.4 | 161.1 | 100.4 | 103.8 | 83.0 | 154.2 | 128.3 | 133.1 | 171.1 | 138.9 | 173.2 |
| Organic antifouling component (b2)/zinc sulfide | | 88.9 | 88.2 | 33.3 | 44.4 | 33.3 | 24.2 | 22.2 | 23.5 | 47.1 | 33.3 | 26.1 | 35.0 | 23.3 | 32.8 | 16.7 |
| ZnO/copolymer (a1) solid contents | | 78.1 | 52.1 | 27.9 | 24.4 | 51.4 | 14.8 | 55.8 | 48.8 | 48.8 | 15.4 | 55.8 | 66.5 | 28.5 | 63.1 | 17.3 |
| Talc/copolymer (a1) solid contents | | 97.7 | 45.6 | 27.9 | 19.5 | 10.3 | 9.8 | 27.9 | 42.7 | 24.4 | 10.3 | 27.9 | 66.5 | 11.4 | 31.6 | 11.5 |
| Chlorinated paraffin/copolymer (a1) solid contents | | 13.0 | 13.0 | 11.2 | 19.5 | 10.3 | 9.8 | 16.7 | 12.2 | 9.8 | 10.3 | 11.2 | 13.3 | 11.4 | 12.6 | 11.5 |

**<Table 8> Measurement of the Stationary**

| | | Antifoling Properties | | | | | | | | | | | | | | |
|---|---|---|---|---|---|---|---|---|---|---|---|---|---|---|---|---|
| Blended compositions of antifouling paint compositions (parts by weight) | | Examples | | | | | | | | | | | | | | |
| | | 1 | 2 | 3 | 4 | 5 | 6 | 7 | 8 | 9 | 10 | 11 | 12 | 13 | 14 | 15 |
| Side chain terminal structure metal salt copolymer a1-1 (Solid contents 49.7%) | | 30 | 30 | 35 | 40 | 39 | 40 | 35 | 32 | 40 | 38 | 35 | | | | |
| Side chain terminal structure metal salt copolymer a1-2 (Solid contents 50.5%) | | | | | | | | | | | | | 30 | 35 | | |
| Side chain terminal structure metal salt copolymer a1-3 (Solid contents 51.1%) | | | | | | | | | | | | | | | 32 | 35 |
| Toyoparax^{®} 150 (Chlorinated paraffin) | | 2 | 2 | 2 | 4 | 2 | 2 | 3 | 2 | 2 | 2 | 2 | 2 | 2 | 2 | 2 |
| Talc FC-1 | | 15 | 7 | 5 | 4 | 2 | 2 | 5 | 7 | 5 | 2 | 5 | 10 | 2 | 5 | 2 |
| Zinc oxide No.3 (ZnO) | | 12 | 8 | 5 | 5 | 10 | 3 | 10 | 8 | 10 | 3 | 10 | 10 | 5 | 10 | 3 |
| Zinc sulfide (ZnS) | | 9 | 17 | 24 | 18 | 24 | 33 | 18 | 17 | 17 | 30 | 23 | 20 | 30 | 22 | 30 |
| Red iron oxide Gekko BB | | 1.5 | 1.5 | 1.5 | 1.5 | 1.5 | 1.5 | 1.5 | 1.5 | 1.5 | 0.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 | 1 | 1 | 1 | 1 | 1 | 1 | 1 |
| Copper pyrithione | | | | | | | | | | | | | | | | |
| Zinc pyrithione | | 2 | 5 | 2 | 2 | 2 | 3 | 2 | 2 | 2 | 5 | 1 | 2 | 2 | 2 | 1 |
| Triphenylboron-pyridine | | 6 | 10 | 6 | 6 | 6 | 5 | | | | | 5 | 5 | 5 | 5 | 4 |
| 4-isopropylpyridine-diphenylmeth lboran | | | | | | | | | | 6 | 5 | | | | | |
| SEA-NINE^{®}211 | | | | | | | | 10 | 10 | | | | | | | |
| Xylene | | 18 | 15 | 15 | 15 | 10 | 6 | 11 | 16 | 12 | 10 | 12 | 15 | 13 | 16 | 17 |
| Disparon^{®} 630-20XC | | 3 | 3 | 3 | 3 | 3 | 3 | 3 | 3 | 3 | 3 | 3 | 3 | 3 | 3 | 3 |
| Calcined gypsum FT-2 | | | | | | | | | | | | 1 | | | | |
| Total | | 100 | 100 | 100 | 100 | 100 | 100 | 100 | 100 | 100 | 100 | 100 | 100 | 100 | 100 | 100 |
| Grade of the attachment area of aquatic organisms (based on the aforesaid criteria) | After 1 month | 0 | 0 | 0 | 0 | 0 | 0 | 0 | 0 | 0 | 0 | 0 | 0 | 0 | 0 | 0 |
| | After 2 months | 0 | 0 | 0 | 0 | 0 | 0 | 0 | 0 | 0 | 0 | 0 | 0 | 0 | 0 | 0 |
| | After 3 months | 0.5 | 0 | 0 | 0 | 0 | 0.5 | 0 | 0.5 | 0 | 0 | 0 | 0 | 0 | 0.5 | 0 |
| | After 4 mouths | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | After 5 months | 1 | 0.5 | 0.5 | 0.5 | 0.5 | 1 | 0.5 | 0.5 | 0.5 | 0.5 | 0.5 | 0.5 | 0.5 | 0.5 | 0.5 |
| | After 6 months | 1 | 0.5 | 0.5 | 1 | 0.5 | 1 | 0.5 | 1 | 0.5 | 1 | 1 | 1 | 0.5 | 1 | 0.5 |

**<Table 9> Measurement of Stationary Antifoling**

| | | Properties | | | | | | | | | | | | |
|---|---|---|---|---|---|---|---|---|---|---|---|---|---|---|
| Blended compositions of antifouling paint compositions (parts by weight) | | Examples | | | | | | | | | | | | |
| | | 16 | 17 | 18 | 19 | 20 | 21 | 22 | 23 | 24 | 25 | 26 | 27 | 28 |
| Cross-linking metal copolymer a2-1 (Solid contents 45.6%) | | 30 | 30 | 35 | 40 | 38 | 40 | 35 | 32 | 40 | 38 | 35 | | |
| Cross-linking metal copolymer a2-2 (Solid contents 46.2%) | | | | | | | | | | | | | 30 | 35 |
| Toyoparax^{®} 150 (Chlorinated paraffin) | | 2 | 2 | 2 | 4 | 2 | 2 | 3 | 2 | 2 | 2 | 2 | 2 | 2 |
| Talc FC-1 | | 15 | 7 | 5 | 4 | 2 | 22 | 5 | 7 | 5 | 2 | 5 | 10 | 2 |
| Zinc oxide No.3 (ZnO) | | 12 | 8 | 5 | 5 | 10 | 3 | 10 | 8 | 10 | 3 | 10 | 10 | 5 |
| Zinc sulfide (ZnS) | | 9 | 17 | 24 | 18 | 24 | 33 | 18 | 17 | 17 | 30 | 23 | 20 | 30 |
| Red iron oxide Gekko BB 1.5 | | 1.5 | 1.5 | 1.5 | 1.5 | 1.5 | 1.5 | 1.5 | 1.5 | 1.5 | 0.5 | 1.5 | 1.5 | 1.5 |
| Novoperm^{®} Red F5RK | | 0.5 | 0.5 | 0.5 | 0.5 | 0.5 | 0. 5 | 0.5 | 0.5 | 0.5 | 0.5 | 0.5 | 0.5 | .0.5 |
| Disparon^{®}4200 | | 1 | 1 | 1 | 1 | 1 | 1 | 1 | 1 | 1 | 1 | 1 | 1 | 1 |
| Copper pyrithione | | | | | | | | | | | | | | |
| Zinc pyrithione | | 2 | 5 | 2 | 2 | 2 | 3 | 2 | 2 | 2 | 5 | 1 | 2 | 2 |
| Triphenylboron-pyridine | | 6 | 10 | 6 | 6 | 6 | 5 | | | | | 5 | 5 | 5 |
| 4-isopropylpyridine-diphenylmethylboran | | | | | | | | | | 6 | 5 | | | |
| SEA-NINE^{®}211 | | | | | | | | 10 | 10 | | | | | |
| Xylene | | 18 | 15 | 15 | 15 | 10 | 6 | 11 | 16 | 12 | 10 | 12 | 15 | 13 |
| Disparon^{®}630-20XC | | 3 | 3 | 3 | 3 | 3 | 3 | 3 | 3 | 3 | 3 | 3 | 3 | 3 |
| Calcined gypsum FT-2 | | | | | | | | | | | | 1 | | |
| Total | | 100 | 100 | 100 | 100 | 100 | 100 | 100 | 100 | 100 | 100 | 100 | 100 | 100 |
| Grade of the attachment area of aquatic organisms (based on the aforesaid criteria) | After 1 month | 0 | 0 | 0 | 0 | 0 | 0 | 0 | 0 | 0 | 0 | 0 | 0 | 0 |
| | After 2 months | 0 | 0 | 0 | 0 | 0 | 0.5 | 0 | 0 | 0 | 0 | 0 | 0 | 0 |
| | After 3 months | 0.5 | 0 | 0 | 0 | 0 | 0.5 | 0 | 0 | 0 | 0 | 0 | 0.5 | 0 |
| | After 4 months | 0.5 | 0.5 | 0.5 | 0.5 | 0 | 0.5 | 0.5 | 0.5 | 0.5 | 0 | 0.5 | 0.5 | 0 |
| | After 5 months | 1 | 0.5 | 0.5 | 0.5 | 0.5 | 0.5 | 0.5 | 0.5 | 0.5 | 0.5 | 0.5 | 0.5 | 0.5 |
| | After 6 months | 1 | 1 | 0.5 | 0.5 | 0.5 | 1 | 0.5 | 1 | 0.5 | 0.5 | 0.5 | 0.5 | 0.5 |

**<Table 10> Measurement of Stationary**

| | | Antifoling Properties | | | | | | | | | | | | | | |
|---|---|---|---|---|---|---|---|---|---|---|---|---|---|---|---|---|
| Blended compositions of antifouling paint compositions (parts by weight) | | Examples | | | | | | | | | | | | | | |
| | | 29 | 30 | 31 | 32 | 33 | 34 | 35 | 36 | 37 | 38 | 39 | 40 | 41 | 42 | 43 |
| Copolymer a3-1 (Heating residue 51.2%) | | 30 | 30 | 35 | 40 | 38 | 40 | 35 | 32 | 40 | 38 | 35 | | | | |
| Copolymer a3-2 (Heating residue 50.1%) | | | | | | | | | | | | | 30 | 35 | | |
| Copolymer a3-3 (Heating residue 49.5%) | | | | | | | | | | | | | | | 32 | 35 |
| Toyoparax^{®} 150 (Chlorinated paraffin) | | 2 | 2 | 2 | 4 | 2 | 2 | 3 | 2 | 2 | 2 | 2 | 2 | 2 | 2 | 2 |
| Talc FC-1 | | 15 | 7 | 5 | 4 | 2 | 2 | 5 | 7 | 5 | 2 | 5 | 10 | 2 | 5 | 2 |
| Zinc oxide No. 3 (ZnO) | | 12 | 8 | 5 | 5 | 10 | 3 | 10 | 8 | 10 | 3 | 10 | 10 | 5 | 10 | 3 |
| Zinc sulfide (ZnS) | | 9 | 17 | 24 | 18 | 24 | 33 | 18 | 17 | 17 | 30 | 23 | 20 | 30 | 22 | 30 |
| Red iron oxide Gekko BB | | 1.5 | 1.5 | 1.5 | 1.5 | 1.5 | 1.5 | 1.5 | 1.5 | 1.5 | 0.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Disparon^{®}4200 | | 1 | 1 | 1 | 1 | 1 | 1 | 1 | 1 | 1 | 1 | 1 | 1 | 1 | 1 | 1 |
| Copper pyrithione | | | | | | | | | | | | | | | | |
| Zinc pyrithione | | 2 | 5 | 2 | 2 | 2 | 3 | 2 | 2 | 2 | 5 | 1 | 2 | 2 | 2 | 1 |
| Triphenylboron-Pyridine | | 6 | 10 | 6 | 6 | 6 | 5 | | | | | 5 | 5 | 5 | 5 | 4 |
| 4-isopropylpyridine-diphenylmethylboran | | | | | | | | | | 6 | 5 | | | | | |
| SEA-NINE^{®} 211 | | | | | | | | 10 | 10 | | | | | | | |
| Xylene | | 18 | 15 | 15 | 15 | 10 | 6 | 11 | 16 | 12 | 10 | 12 | 15 | 13 | 16 | 17 |
| Disparon^{®} 630-20XC | | 3 | 3 | 3 | 3 | 3 | 3 | 3 | 3 | 3 | 3 | 3 | 3 | 3 | 3 | 3 |
| Calcined gypsum FT-2 | | | | | | | | | | | | | | | | |
| Total | | 100 | 100 | 100 | 100 | 100 | 100 | 100 | 100 | 100 | 100 | 100 | 100 | 100 | 100 | 100 |
| Grade of the attachment area of aquatic orgasms (based on the aforesaid criteria) | After 1 month | 0 | 0 | 0 | 0 | 0 | 0 | 0 | 0 | 0 | 0 | 0 | 0 | 0 | 0 | 0 |
| | After 2 months | 0 | 0 | 0 | 0 | 0 | 0 | 0 | 0 | 0 | 0 | 0 | 0 | 0 | 0 | 0 |
| | After 3 months | 0.5 | 0 | 0 | 0 | 0 | 0.5 | 0 | 0 | 0 | 0 | 0 | 0 | 0 | 0 | 0 |
| | After 4 months | 0.5 | 0.5 | 0.5 | 0.5 | 0 | 0.5 | 0.5 | 0 | 0.5 | 0 | 0.5 | 0.5 0 | 0 | 0.5 | 0 |
| | After 5 months | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | After 6 months | 1 | 0.5 | 0.5 | 1 | 0.5 | 1 | 0.5 | 0.5 | 0.5 | 0.5 | 0.5 | 0.5 | 0.5 | 0.5 | 0.5 |
| ZnS/coploymer (a1) solid contents | | 58.6 | 110.7 | 133.9 | 87.9 | 123.4 | 161.1 | 100.4 | 103.8 | 83.0 | 154.2 | 128.3 | 133.1 | 171.1 | 138.9 | 173.2 |
| Organic antifouling component (b2)/zinc sulfide | | 88.9 | 88.2 | 33.3 | 44.4 | 33.3 | 24.2 | 22.2 | 23.5 | 47.1 | 33.3 | 26.1 | 35.0 | 23.3 | 31.8 | 16.7 |
| ZnO/copolymer (a1) solid contents | | 78.1 | 52.1 | 27.9 | 24.4 | 51.4 | 14.8 | 55.8 | 48.8 | 48.8 | 15.4 | 55.8 | 66.5 | 28.5 | 63.1 | 17.3 |
| Talc/copolymer (a1) solid contents | | 97.7 | 45.6 | 27.9 | 19.5 | 10.3 | 9.8 | 27.9 | 42.7 | 24.4 | 10.3 | 27.9 | 66.5 | 11.4 | 31.6 | 11.5 |
| Chlorinated paraffin/copolymer (a1) solid contents | | 13.0 | 13.0 | 11.2 | 19.5 | 10.3 | 9.8 | 16.7 | 12.2 | 9.8 | 10.3 | 11.2 | 13.3 | 11.4 | 12.6 | 11.5 |

**<Table 11> Measurement of the Consumption**

| | | Degree of Coating Films | | | | | | | | |
|---|---|---|---|---|---|---|---|---|---|---|
| Blended compositions of antifouling paint compositions (parts by weight) | | Comparative Examples | | | | | | | | |
| | | 1 | 2 | 3 | 4 | 5 | 6 | 7 | 8 | 9 |
| Side chain terminal copolymer a1-1 (solid structure metal salt contents 49.7%) | | 30 | 30 | 35 | 40 | 35 | 40 | | | |
| Side chain terminal structure metal salt copolymer a1-2 (Solid contents 50.5%) | | | | | | | | 35 | 35 | |
| Side chain terminal structure metal salt copolymer a1-3 (Solid contents 51.1%) | | | | | | | | | | 35 |
| Toyoparax^{®} 150 (Chlorinated paraffin) | | 2 | 2 | 2 | 4 | 2 | 2 | 2 | 2 | 2 |
| Talc FC-1 | | 20 | 15 | 10 | 7 | 18 | 17 | 10 | 18 | 10 |
| Zinc oxide No.3 (ZnO) | | 16 | 17 | 24 | 20 | 20 | 20 | 24 | 19 | 24 |
| Zinc sulfide (ZnS) | | 0 | 0 | 0 | 0 | 0 | 0 | 0 | 0 | 0 |
| Red iron oxide Gekko BB | | 1.5 | 1.5 | 1.5 | 1.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 | 1 |
| Copper pyrithione | | | | | | | | | | |
| Zinc pyrithione | | 2 | 5 | 2 | 2 | 1 | | 2 | 2 | 2 |
| Triphenylboron-pyridine | | 6 | 10 | 6 | 6 | 3 | | 6 | 5 | 6 |
| 4-isopropylpyridine-diphenylmethylboran | | | | | | | | | | |
| SEA-NINE^{®}211 | | | | | | | | | | |
| Xylene | | 18 | 15 | 15 | 15 | 15 | 15 | 15 | 13 | 15 |
| Disparon^{®} 630-20XC | | 3 | 3 | 3 | 3 | 3 | 3 | 3 | 3 | 3 |
| Calcined gypsum FT-2 | | | | | | | | | | |
| Total | | 100 | 100 | 100 | 100 | 100 | 100 | 100 | 100 | 100 |
| Thickness of consumed coating film (total, µm) | After 1 month | 4.5 | 4.3 | 3.9 | 4.4 | 4.8 | 3.9 | 3.2 | 4.2 | 3 |
| | After 2 months | 8.9 | 6.8 | 5.8 | 6.7 | 7.1 | 7.1 | 6.2 | 7.9 | 5.8 |
| | After 3 months | 12.2 | 10.4 | 9.7 | 9.9 | 11.1 | 10.3 | 9.3 | 10.3 | 9.4 |
| | After 4 months | 18.4 | 15.3 | 14.3 | 14.5 | 15 | 14.1 | 13.3 | 14.3 | 13.3 |
| | After 5 months | 23.2 | 20.2 | 19.8 | 19.1 | 19.8 | 17.1 | 16.9 | 18.9 | 16.7 |
| | After 6 months | 28.4 | 26.1 | 24.3 | 23.3 | 24.3 | 22.3 | 20.3 | 23.4 | 18.9 |
| ZnS/coploymer (a1) solid contents | | 0.0 | 0.0 | 0.0 | 0.0 | 0.0 | 0.0 | 0.0 | 0.0 | 0.0 |
| Organic antifouling component (b2)/zinc sulfide | | - | - | - | - | - | - | - | - | - |
| ZnO/copolymer (a1) solid contents | | 107.3 | 114.0 | 138.0 | 100.6 | 115.0 | 100.6 | 135.8 | 107.5 | 134.2 |
| Talc/copolymer (a1) solid contents | | 134.1 | 100.6 | 57.5 | 35.2 | 103.5 | 85.5 | 56.6 | 101.8 | 55.9 |
| Chlorinated paraffin/ copolymer (a1) solid contents | | 13.4 | 13.4 | 11.5 | 20.1 | 11.5 | 10.1 | 11.3 | 11.3 | 11.2 |

**<Table 12> Measurement of the Consumption**

| | | Degree of Coating Films | | | | | | | |
|---|---|---|---|---|---|---|---|---|---|
| Blended compositions of antifouling paint compositions (parts by weight) | | Comparative Examples | | | | | | | |
| | | 10 | 11 | 12 | 13 | 19 | 15 | 16 | 17 |
| Cross-Linking metal copolymer a2-1 (Solid contents 45.6%) | | 30 | 30 | 35 | 40 | 35 | 40 | | |
| Cross-linking metal copolymer a2-2 (Solid contents 46.2%) | | | | | | | | 35 | 35 |
| Toyoparax^{®} 150 (Chlorinated paraffin) | | 2 | 2 | 2 | 2 | 2 | 2 | 2 | 2 |
| Talc FC-1 | | 20 | 15 | 10 | 7 | 18 | 17 | 10 | 18 |
| Zinc oxide No. 3 (ZnO) | | 16 | 17 | 24 | 20 | 20 | 20 | 24 | 19 |
| Zinc sulfide (ZnS) | | 0 | 0 | 0 | 0 | 0 | 0 | 0 | 0 |
| Red Iron oxide Gekko BB | | 1.5 | 1.5 | 1.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 |
| Copper pyrithione | | | | | | | | | |
| Zinc pyrithione | | 2 | 5 | 2 | 2 | 1 | | 2 | 2 |
| Triphenylboron-pyridine | | 6 | 10 | 6 | 6 | 3 | | 6 | 5 |
| 4-isopropylpyridine-diphenylmethylboran | | | | | | | | | |
| SEA-NINE^{®} 211 | | | | | | | | | |
| Xylene | | 18 | 15 | 15 | 15 | 15 | 15 | 15 | 13 |
| Disparon^{®} 630-20XC | | 3 | 3 | 3 | 3 | 3 | 3 | 3 | 3 |
| Calcined gypsum FF-2 | | | | | | | | | |
| Total | | 110 | 111 | 112 | 113 | 114 | 115 | 116 | 117 |
| Thickness of consumed coating film (total µm) | After 1 month | 4.3 | 4.1 | 3.8 | 4.3 | 4.8 | 3.9 | 3.1 | 3.9 |
| | After 2 months | 8.7 | 7.8 | 5.8 | 7.1 | 6.9 | 6.7 | 5.9 | 7.8 |
| | After 3 months | 11.9 | 10.4 | 9.6 | 9.8 | 11.1 | 10.3 | 10.1 | 12.1 |
| | After 4 months | 17.9 | 15.5 | 14.3 | 13.2 | 14.7 | 14.1 | 14.1 | 15.3 |
| | After 5 months | 22.2 | 21.8 | 18.7 | 18.8 | 19.8 | 17.1 | 17.3 | 19.5 |
| | After 6 months | 28.9 | 26.7 | 22.3 | 23.4 | 22.7 | 23.3 | 21.7 | 24.3 |
| ZnS/coploymer (a2) solid contents | | 0.0 | 0.0 | 0.0 | 0.0 | 0.0 | 0.0 | 0.0 | 0.0 |
| Organic antifouling component sulfide (b2)/zinc | | - | - | - | - | - | - | - | - |
| Zn0/copolymer (a2) solid contents | | 117.0 | 124.3 | 150.4 | 109.6 | 125.3 | 109.6 | 148.4 | 117.5 |
| Talc/coplymer (a2) solid contents | | 146.2 | 109.6 | 62.7 | 38.4 | 112.8 | 93.2 | 61.8 | 111.3 |
| Chlorinated paraffin/ copolymer (a2) solid contents | | 14 .6 | 14.6 | 12.5 | 21.9 | 12.5 | 11.0 | 12.4 | 12.4 |

**<Table 13> Measurement of the Consumption**

| | | Degree of Coating Films | | | | | | | |
|---|---|---|---|---|---|---|---|---|---|
| Blended compositions of antifouling paint compositions (parts by weight) | | Comparative Examples | | | | | | | |
| | | 18 | 19 | 20 | 21 | 22 | 23 | 24 | 25 |
| Copolymer a3-1 (Heating residue 51.2%) | | 30 | 30 | 35 | 40 | 35 | 40 | | |
| Copolymer a3-2 (Heating residue 50.1%) | | | | | | | | 35 | |
| Copolymer a3-3 (Heating residue 49.5%) | | | | | | | | | 35 |
| Toyoparax^{®} 150 (Chlorinated paraffin) | | 2 | 2 | 2 | 2 | 2 | 2 | 2 | 2 |
| Talc FC-1 | | 20 | 15 | 10 | 7 | 18 | 17 | 10 | 10 |
| Zinc oxide No.3 (ZnO) | | 16 | 17 | 24 | 20 | 20 | 20 | 24 | 24 |
| Zinc sulfide (ZnS) | | 0 | 0 | 0 | 0 | 0 | 0 | 0 | 0 |
| Red iron oxide Gekko BB | | 1.5 | 1.5 | 1.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 |
| Disparon^{®}4200 | | 1 | 1 | 1 | 1 | 1 | 1 | 1 | 1 |
| Copper pyrithione | | | | | | | | | |
| Zinc pyrithione | | 2 | 5 | 2 | 2 | 1 | | 2 | 2 |
| Triphenylboro-pyridine | | 6 | 10 | 6 | 6 | 3 | | 6 | 6 |
| 4-isopropylpyridine-diphenylmethylboran | | | | | | | | | |
| SEA NINE^{®} 211 | | | | | | | | | |
| Xylene | | 18 | 15 | 15 | 15 | 15 | 15 | 15 | 13 |
| Disparon^{®}630-20XC | | 3 | 3 | 3 | 3 | 3 | 3 | 3 | 3 |
| Calcined gypsum FT-2 | | | | | | | | | |
| Total | | 100 | 100 | 100 | 100 | 100 | 100 | 100 | 100 |
| Thickness of consumed coating film (total µm) | After 1 month | 2.4 | 2.7 | 2.1 | 3.1 | 2.9 | 2.7 | 2.1 | 2 |
| | After 2 months | 4.7 | 4.1 | 3.9 | 5.9 | 6.9 | 5.9 | 3.6 | 3.1 |
| | After 3 months | 9.7 | 9.9 | 10.1 | 10.3 | 11.4 | 10.4 | 8.7 | 6.9 |
| | After 4 months | 14.4 | 13.9 | 14.1 | 15.3 | 14.5 | 13.9 | 11.5 | 10.3 |
| | After 5 months | 17.9 | 17.9 | 18.3 | 18.8 | 18.7 | 17.3 | 15.4 | 13.3 |
| | After 6 months | 21.7 | 21.3 | 22.3 | 23.5 | 21.9 | 21.5 | 18.7 | 16.7 |
| ZnS/coploymer (a3) solid contents | | 0.0 | 0.0 | 0.0 | 0.0 | 0.0 | 0.0 | 0.0 | 0.0 |
| organic antifouling component (b2)/zinc sulfide | | - | - | - | - | - | - | - | - |
| ZnO/copolymer (a3) solid contents | | 104.2 | 110.7 | 133.9 | 97.7 | 111.6 | 97.7 | 136.9 | 138.5 |
| Talc/copolymer (a3) solid contents | | 130.2 | 97.7 | 55.8 | 34.2 | 100.4 | 83.0 | 57.0 | 57.7 |
| Chlorinated paraffin/ copolymer (a3) solid contents | | 13.0 | 13.0 | 11.2 | 19.5 | 11.2 | 9.8 | 11.4 | 11.5 |

**<Table 14> Measurement of Stationary**

| | | Antifoling Properties | | | | | | | | |
|---|---|---|---|---|---|---|---|---|---|---|
| Blended compositions of antifouling paint compositions (parts by weight) | | Comparative Examples | | | | | | | | |
| | | 1 | 2 | 3 | 4 | 5 | 6 | 7 | 8 | 9 |
| Side chain terminal copolymer a1-1 (Solid structure metal salt contents 49.7%) | | 30 | 30 | 35 | 40 | 38 | 40 | | | |
| Side chain terminal structure metal salt copolymer a1-2 (Solid contents 50.5%) | | | | | | | | 35 | 35 | |
| Side chain terminal structure metal salt copolymer a1-3 (Solid contents 51.1%) | | | | | | | | | | 35 |
| Toyoparax^{®} 150 (Chlorinated paraffin) | | 2 | 2 | 2 | 2 | 2 | 2 | 2 | 2 | 2 |
| Talc FC-1 | | 20 | 15 | 10 | 7 | 18 | 17 | 10 | 18 | 10 |
| Zinc oxide No.3 (ZnO) | | 16 | 17 | 24 | 20 | 20 | 20 | 24 | 19 | 24 |
| Zinc sulfide (ZnS) | | 0 | 0 | 0 | 0 | 0 | 0 | 0 | 0 | 0 |
| Red iron oxide Gekko BB | | 1.5 | 1.5 | 1.5 | 1.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 | 1 |
| Copper pyrithione | | | | | | | | | | |
| Zinc pyrithione | | 2 | 5 | 2 | 2 | 1 | | 2 | 2 | 2 |
| Triphenylboron-pyridine | | 6 | 10 | 6 | 6 | 3 | | 6 | 5 | 6 |
| 4-isopropylpyridine-diphenylmethylboran | | | | | | | | | | |
| SEA-NINE^{®} 211 | | | | | | | | | | |
| Xylene | | 18 | 15 | 15 | 15 | 15 | 15 | 15 | 13 | 15 |
| Disparon^{®} 630-20XC | | 3 | 3 | 3 | 3 | 3 | 3 | 3 | 3 | 3 |
| Calcined gypsum FT-2 | | | | | | | | | | |
| Total | | 100 | 100 | 100 | 100 | 100 | 100 | 100 | 100 | 100 |
| Grade of the attachment area of aquatic organisms (based on the aforesaid criteria) | After 1 month | 0 | 0 | 0 | 0 | 0.5 | 2 | 0 | 0 | 0 |
| | After 2 months | 0.5 | 0 | 0.5 | 0 | 0.5 | 3 | 0.5 | 0 | 0 |
| | After 3 months | 1 | 0.5 | 0.5 | 0.5 | 1 | 5 | 0.5 | 0.5 | 0.5 |
| | After 4 months | 1 | 0.5 | 0.5 | 0.5 | 1 | 5 | 0.5 | 0.5 | 0.5 |
| | After 5 months | 2 | 2 | 2 | 1 | 4 | 5 | 2 | 2 | 2 |
| | After 6 months | 2 | 2 | 2 | 2 | 4 | 5 | 2 | 2 | 2 |

**<Table 15> Measurement of Stationary**

| | | Antifoling Properties | | | | | | | |
|---|---|---|---|---|---|---|---|---|---|
| Blended compositions of antifouling paint compositions (parts by weight) | | Comparative Examples | | | | | | | |
| | | 10 | 11 | 12 | 13 | 14 | 15 | 16 | 17 |
| Cross-linking metal (Solid contents 45.6%) copolymer a2-1 | | 30 | 30 | 35 | 40 | 35 | 40 | | |
| Cross-Uniting metal copolymer a2-2(Solid contents 46.2%) | | | | | | | | 35 | 35 |
| Toyoparax^{®} 150 (Chlorinated paraffin) | | 2 | 2 | 2 | 2 | 2 | 2 | 2 | 2 |
| Talc FC-1 | | 20 | 15 | 10 | 7 | 18 | 17 | 10 | 18 |
| Zinc oxide No.3 (ZnO) | | 16 | 17 | 24 | 20 | 20 | 20 | 24 | 19 |
| Zinc sulfide (ZnS) | | 0 | 0 | 0 | 0 | 0 | 0 | 0 | 0 |
| Red iron oxide Gekko BB | | 1.5 | 1.5 | 1.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 |
| Copper pyrithione | | | | | | | | | |
| Zinc pyrithione | | 2 | 5 | 2 | 2 | 1 | | 2 | 2 |
| Triphenylboron-pyridine | | 6 | 10 | 6 | 6 | 3 | | 6 | 5 |
| 4-isopropylpyridine-diphenylmethylboran | | | | | | | | | |
| SEA-NINE^{®} 211 | | | | | | | | | |
| Xylene | | 18 | 15 | 15 | 15 | 15 | 15 | 15 | 13 |
| Disparon^{®} 630-20XC | | 3 | 3 | 3 | 3 | 3 | 3 | 3 | 3 |
| Calcined gypsum FT-2 | | | | | | | | | |
| Total | | 110 | 111 | 112 | 113 | 114 | 115 | 116 | 117 |
| Grade of the attachment area of aquatic organisms (based on the aforesaid criteria) | After 1 month | 0 | 0 | 0 | 0 | 0.5 | 2 | 0 | 0 |
| | After 2 months | 0.5 | 0.5 | 0.5 | 0 | 1 | 3 | 0.5 | 0.5 |
| | After 3 months | 1 | 1 | 1 | 0.5 | 2 | 4 | 1 | 1 |
| | After 4 months | 2 | 1 | 1 | 1 | 2 | 5 | 2 | 5 |
| | After 5 months | 3 | 2 | 2 | 2 | 3 | 5 | 2 | 3 |
| | After 6 months | 3 | 3 | 2 | 3 | 4 | 5 | 2 | 3 |

**<Table 16> Measurement of Stationary**

| | | Antifoling Properties | | | | | | | |
|---|---|---|---|---|---|---|---|---|---|
| Blended compositions of antifouling paint compositions (parts by weight) | | Comparative Examples | | | | | | | |
| | | 18 | 19 | 20 | 21 | 22 | 23 | 24 | 25 |
| Copolymer a3-1 (Heating residue 51.2%) | | 30 | 30 | 35 | 40 | 35 | 40 | | |
| Copolymer a3-2 (Heating residue 50.1%) | | | | | | | | 35 | |
| Copolymer a3-3 (Heating residue 49.5%) | | | | | | | | | 35 |
| Toyoparax^{®} 150 (Chlorinated paraffin) | | 2 | 2 | 2 | 4 | 2 | 2 | 2 | 2 |
| Talc FC-1 | | 20 | 15 | 10 | 7 | 18 | 17 | 10 | 18 |
| Zinc oxide No.3 (ZnO) | | 16 | 17 | 24 | 20 | 20 | 20 | 24 | 19 |
| Zinc sulfide (ZnS) | | 0 | 0 | 0 | 0 | 0 | 0 | 0 | 0 |
| Red iron oxide Gekko BB | | 1.5 | 1.5 | 1.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 |
| Copper pyrithione | | | | | | | | | |
| Zinc pyrithione | | 2 | 5 | 2 | 2 | 1 | | 2 | 2 |
| Triphenylboron-pyridine | | 6 | 10 | 6 | 6 | 3 | | 6 | 6 |
| 4-isopropylpyridine-diphenylmethylboran | | | | | | | | | |
| SEA-NINE^{®}211 | | | | | | | | | |
| Xylene | | 18 | 15 | 15 | 15 | 15 | 15 | 15 | 13 |
| Disparon^{®} 630-20XC | | 3 | 3 | 3 | 3 | 3 | 3 | 3 | 3 |
| Calcined gypsum FT-2 | | | | | | | | | |
| Total | | 100 | 100 | 100 | 100 | 100 | 100 | 100 | 100 |
| Grade of the attachment area of aquatic organisms (based on the aforesaid criteria) | After 1 month | 0 | 0 | 0 | 0 | 0.5 | 2 | 0 | 0 |
| | After 2 months | 0.5 | 0 | 0 | 0 | 2 | 4 | 0 | 0 |
| | After 3 months | 0.5 | 0.5 | 0.5 | 0.5 | 3 | 5 | 0.5 | 0.5 |
| | After 4 months | 1 | 1 | 0.5 | 1 | 3 | 5 | 1 | 1 |
| | After 5 months | 2 | 2 | 1 | 2 | 3 | 5 | 2 | 1 |
| | After 6 months | 3 | 3 | 2 | 3 | 4 | 5 | 2 | 2 |

**<Table 17> Measurement of the Consumption**

| | | Degree of Coating Films | | | | | | | |
|---|---|---|---|---|---|---|---|---|---|
| Blended compositions of antifouling paint compositions (parts by weight) | | Comparative Examples | | | | | | | |
| | | 26 | 27 | 28 | 29 | 30 | 31 | 32 | 33 |
| Rosin | | 11 | 11 | 11 | 11 | 11 | 11 | 11 | 11 |
| Laroflex MP-15 | | 9 | 9 | 9 | 9 | 9 | | | |
| Vinyl resin VYHH | | | | | | | 9 | 9 | 9 |
| Toyoparax^{®} 150 (chlorinated paraffin) | | 2 | 2 | 2 | 2 | 2 | 2 | 2 | 2 |
| Talc FC-1 | | 6 | 6 | 6 | 6 | 6 | 6 | 6 | 6 |
| Zinc oxide No.3 (ZnO) | | 25 | 20 | 10 | 11 | 15 | 25 | 20 | 10 |
| Zinc sulfide (ZnS) | | 5 | 10 | 20 | 23 | 23 | 5 | 10 | 20 |
| Red iron oxide Gekko BB | | 1.5 | 1.5 | 1.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 |
| Copper pyrithione | | | | | | | | | |
| Zinc pyrithione | | 2 | 2 | 2 | 1 | | 2 | 2 | 2 |
| Triphenylboron-pyridine | | 6 | 6 | 6 | 3 | | 6 | 6 | 6 |
| 4-isopropylpyridine-diphenylmethylboran | | | | | | | | | |
| SEA-NINE^{®} 211 | | | | | | | | | |
| Xylene | | 28 | 28 | 28 | 28 | 28 | 28 | 28 | 28 |
| Disparon^{®} 630-20XC | | 3 | 3 | 3 | 3 | 3 | 3 | 3 | 3 |
| Calcine gypsum FT-2 | | | | | | | | | |
| Total | | 100 | 100 | 100 | 100 | 100 | 100 | 100 | 100 |
| Thickness of consumed coating film (total, µm) | After 1 month | 7.5 | 8.1 | 9.1 | 10.3 | 6.7 | 7.7 | 8.9 | 9.9 |
| | After 2 months | 13.2 | 15.3 | 17.3 | 17.3 | 12.3 | 14.3 | 16.6 | 18.3 |
| | After 3 months | 14.7 | 16.7 | 19.4 | 19.3 | 13.3 | 15.1 | 18.3 | 20.3 |
| | After 4 months | 15.3 | 18.1 | 20.7 | 20.7 | 14.7 | 15.9 | 19.7 | 21.3 |
| | After 5 months | 16.7 | 19.7 | 21.3 | 21.3 | 15.5 | 16.7 | 20.3 | 22.7 |
| | After 6 months | 17.7 | 20.2 | 22.5 | 22.8 | 16.4 | 18.1 | 21.3 | 23.1 |

**<Table 18> Measurement of Stationary**

| | | Antifouling Properties | | | | | | | |
|---|---|---|---|---|---|---|---|---|---|
| Blended compositions of antifouling paint compositions (parts by weight) | | Comparative Examples | | | | | | | |
| | | 26 | 27 | 28 | 29 | 30 | 31 | 32 | 33 |
| Rosin | | 11 | 11 | 11 | 11 | 11 | 11 | 11 | 11 |
| Laroflex MP-15 | | 9 | 9 | 9 | 9 | 9 | | | |
| Vinyl resin VYHH | | | | | | | 9 | 9 | 9 |
| Toyoparax^{®} 150 (Chlorinated paraffin) | | 2 | 2 | 2 | 2 | 2 | 2 | 2 | 2 |
| Talc FC-1 | | 6 | 6 | 6 | 6 | 6 | 6 | 6 | 6 |
| Zinc oxide No.3 (ZnO) | | 25 | 20 | 10 | 11 | 15 | 25 | 20 | 10 |
| Zinc sulfide (ZnS) | | 5 | 10 | 20 | 23 | 23 | 5 | 10 | 20 |
| Red iron oxide Gekko BB | | 1.5 | 1.5 | 1.5 | 1.5 | 1.5 | 1.5 | 1.5 | 1.5 |
| Novoperm^{®} Red F5RK | | 0.5 | 0.5 | 0.5 | 0.5 | 0.5 | 0.5 | 0.5 | 0.5 |
| Disparon^{®} 4200 | | 1 | 1 | 1 | 1 | 1 | 1 | 1 | 1 |
| Copper pyrithione | | | | | | | | | |
| Zinc pyrithione | | 2 | 2 | 2 | 1 | | 2 | 2 | 2 |
| Triphenylboron-pyridine | | 6 | 6 | 6 | 3 | | 6 | 6 | 6 |
| 4-isopropylpylpyridine-diphenylmethylboran | | | | | | | | | |
| SEA-NINE^{®} 211 | | | | | | | | | |
| Xylen | | 28 | 28 | 28 | 28 | 28 | 28 | 28 | 28 |
| Disparon^{®} 630-20XC | | 3 | 3 | 3 | 3 | 3 | 3 | 3 | 3 |
| Calcined gypsum FT-2 | | | | | | | | | |
| Total | | 100 | 100 | 100 | 100 | 100 | 100 | 100 | 100 |
| Grade of the attachment area of aquaticorganisms (based on the aforesaid criteria) | After 1 month | 0 | 0 | 0 | 0 | 0.5 | 0 | 0 | 0 |
| | After 2 months | 0.5 | 0 | 0 | 0.5 | 2 | 0 | 0 | 0 |
| | After 3 months | 0.5 | 0.5 | 0.5 | 0.5 | 3 | 0.5 | 0.5 | 0.5 |
| | After 4 months | 1 | 1 | 1 | 1 | 3 | 0.5 | 1 | 1 |
| | After 5 months | 2 | 2 | 2 | 2 | 3 | 1 | 2 | 3 |
| | After 6 months | 3 | 3 | 2 | 3 | 4 | 2 | 3 | 3 |

**<Table 19> Major Raw Materials Used**

| Product Name | Manufacturer | Properties and Others | Remarks 14.5, |
|---|---|---|---|
| Toyoparax^{®} 150 | Tosoh Corp. | Chlorinated paraffin | Average number of carbon atoms: chlorine content ratio 50%, viscosity: 1.2 Pa·s/25°C (12 poise/25°C), specific gravity: 1.25/25°C |
| Talc FC-1 | Fukuoka Talc Industry, Inc. | Extender pigment | |
| Zinc oxide No.3 | Kyushu Hakusui Co., Ltd. | Extender pigment | |
| Zinc sulfide Saxhtolith^{®} RD | Sachtleben chemie GmbH (Germany) | Extended pigment | |
| Red iron oxide Gekko BB | Toda Kogyo Corp. | Coloring pigment | |
| Novoperm^{®} Red F5RK | Clariant North America | Organic red pigement | |
| Laroflex^{®} MP-1 | BASF | Vinyl chloride/vinyl acetate copolymer | |
| Vinyl resin VYHH | BASF | Vinyl chloride/vinyl acetate copolymer | |
| Disparon^{®} 4200 | Kusumoto Ltd. | Antiprecipitating agent | |
| Disparon^{®} 630-20XC | Kusumoto Chemicals, Ltd. | Antisagging agent | |
| Disparon^{®} 630-20X | Kusumoto Chemicals, Ltd. | Antisagging agent | 20% xylene paste |
| Copper omazine | Yoshitomi pharmaceutical Industries, Ltd. | Organic antifouling agent | Copper salt of 2-pyridinethiole-1-oxide |
| PK boron | Hokko Chemical Ind. Co., Ltd. | Organic antifouling agent | Triphenylboron-pyridine |
| KM-2 | KI Chemical Ind. Co., Ltd. | Organic antifouling agent | 4-isopropylpyridine-diphenylmethylborane |
| Zinc pyrithione Zinc pyrithione | Yoshitomi pharmaceutical Industries, Ltd. | Organic antifouling agent | |
| Soluble anhydrous gypsum D-1 | Noritake Company Ltd. Noritake Company Ltd. | Inorganic dehydrating agent | |
| Calcined gypsum FT-2 | Noritake Company Ltd. | Inorganic dehydrating agent | |
| SEA-NINE^{®} 211 | Rohmand and Haas Company | | 4,5-dichloro-2-n-octylisothiazolin-3-one, solid content: 30% |
| Xylene | | | |
| N-BuOH | | | n-Butanol |
| Cuprous oxide REDCOP97 | American Chemet Corporation | Cuprous oxide | Stearic acid treatment |

## Claims

1. An antifouling paint composition comprising a hydrolyzable copolymer (A) and an antifouling agent (B),
wherein
said hydrolyzable copolymer (A) is at least one kind of hydrolyzable copolymer selected from the group consisting of
(a1) a copolymer containing a bond of metal salt, which is an acrylic polymer or a polyester resin and has a side chain terminal group represented by the general formula (I):
-COO-M-O-COR¹ (I),
where M represents zinc or copper and R¹ represents an organic group;
(a2) a copolymer containing a bond of metal salt composed of a component unit (a21) derived from a monomer represented by the general formula (II):
CH₂=C(R²)-COO-M-O-CO-C(R²)=CH₂ (II),
where M represents zinc or copper and R² represents a hydrogen atom or a methyl group, and a component unit (a22) derived from other unsaturated monomer which is copolymerizable with the monomer (II); and
(a3) a silyl ester type copolymer composed of a component unit (a31) derived from a monomer represented by the general formula (III):
R⁷-CH=C(R³)-COO-SiR⁴R⁵R⁶ (III),
where R³ represents a hydrogen atom or a methyl group, R⁴, R⁵ and R⁶ each independently represents a hydrocarbon group, R⁷ represents a hydrogen atom or R⁸-O-CO- (where R⁸ represents an organic group or a silyl group represented by -SiR⁹R¹⁰R¹¹ and R⁹, R¹⁰ and R¹¹ each independently represents a hydrocarbon group) and a component unit (a32) derived from other unsaturated monomer which is copolymerizable with the monomer (III); and
zinc sulfide is contained at an amount of 10 to 500 parts by weight with respect to 100 parts by weight of the hydrolyzable acrylate copolymer as said antifouling agent (B).

2. The antifouling paint composition according to claim 1, wherein cuprous oxide is not contained.

3. The antifouling paint composition according to claim 1, wherein the antifouling agent (B) consists of zinc sulfide and an organic antifouling agent (b2).

4. The antifouling paint composition according to any of claims 1 to 3, wherein the organic antifouling agent (b2) is at least one kind of organic antifouling agent selected from the group consisting of a pyrithione compound, tri-organic boron and amine complex thereof, and 4,5-dichloro-N-octylisothiazolin-3-one.

5. The antifouling paint composition according to any of claims 1 to 4, wherein the organic antifouling agent (b2) is at least one kind of organic antifouling agent selected from the group consisting of zinc pyrithione, triphenylboron-pyridine complex, dimethylphenylboron-(4-isopropyl)pyridine complex and 4,5-dichloro-N-octylisothiazolin-3-one.

6. The antifouling paint composition according to any of claims 1 to 5, wherein the organic antifouling agent (b2) is contained at an amount of 20 to 500 parts by weight with respect to 100 parts by weight of zinc sulfide as the antifouling agent (B).

7. The antifouling paint composition according to any of claims 1 to 6, wherein zinc oxide is further contained as a extender pigment.

8. The antifouling paint composition according to any of claims 1 to 7, wherein zinc oxide is contained at an amount of 10 to 300 parts by weight with respect to 100 parts by weight of hydrolyzable copolymer (A).

9. The antifouling paint composition according to claim 8, wherein zinc oxide is contained at an amount of 1% to 40% by weight in the antifouling paint composition.

10. The antifouling paint composition according to any of claims 1 to 9, wherein talc is further contained as an extender pigment.

11. The antifouling paint composition according to claim 10, wherein talc is contained at an amount of 5 to 300 parts by weight with respect to 100 parts by weight of hydrolyzable copolymer (A).

12. The antifouling paint composition according to any of claims 1 to 11, wherein talc is contained at an amount of 0.5% to 40% by weight in the antifouling paint composition.

13. The antifouling paint composition according to any of claims 1 to 12, wherein chlorinated paraffin is further contained as a plasticizer.

14. The antifouling paint composition according to any of claims 1 to 13, wherein chlorinated paraffin is contained at an amount of 0.05 to 40 parts by weight with respect to 100 parts by weight of hydrolyzable copolymer (A).

15. The antifouling paint composition according to any of claims 1 to 14, wherein chlorinated paraffin is contained at an amount of 1% to 5% by weight in the antifouling paint composition.

16. The antifouling paint composition according to any of claims 1 to 15, which further contains at least one kind of coloring pigment selected from the group consisting of iron red, titanium white, yellow iron oxide and organic pigment.

17. The antifouling paint composition according to any of claims 1 to 16, wherein the organic group R¹ in the copolymer containing a bond of metal salt (a1) is an organic acid residue of a monobasic acid, which is a monovalent saturated aliphatic hydrocarbon group having 2 to 30 carbon atoms, an unsaturated aliphatic hydrocarbon group having 2 to 30 carbon atoms, an alicyclic hydrocarbon group having 3 to 20 carbon atoms, an aromatic hydrocarbon group having 6 to 18 carbon atoms or a substitution product thereof.

18. The antifouling paint composition according to any of claims 1 to 16, wherein the organic group R¹ in the copolymer containing a bond of metal salt (a1) is an organic acid residue of a monobasic acid, which is a monovalent saturated or un saturated aliphatic hydrocarbon group having 10 to 20 carbon atoms, a saturated or unsaturated alicyclic hydrocarbon group having 3 to 20 carbon atoms or a substitution product thereof.

19. The antifouling paint composition according to any of claims 1 to 18, wherein the copolymer containing a bond of metal salt (a1) is a copolymer containing a bond of metal salt having, at -COO- of an acrylic acid copolymer via copper or zinc, a side chain terminal group represented by the general formula (IV):
-O-COR¹ (IV),
where R¹ represents an organic acid residue of a monobasic acid, which is a monovalent saturated or unsaturated aliphatic hydrocarbon group having 10 to 20 carbon atoms, a saturated or unsaturated alicyclic hydrocarbon group having 3 to 20 carbon atoms or a substitution product thereof.

20. The antifouling paint composition according to any of claims 1 to 19, wherein the organic group R¹ in the copolymer containing a bond of metal salt (a1) is an organic acid residue of at least one kind of monobasic acid selected from the group consisting of versatic acid, palmitic acid, stearic acid, oleic acid, linoleic acid, linolenic acid, abietic acid, neoabietic acid, pimaric acid, dehydroabietic acid, 12-hydroxystearic acid and naphthenic acid.

21. The antifouling paint composition according to any of claims 1 to 20, wherein the copolymer containing a bond of metal salt (a1) is a copolymer of at least two kinds or more of monobasic acid metal (meth)acrylates represented by the general formula (V):
CH₂=C (R²) -COO-M-O-COR¹,
wherein M repesents zinc or copper, R¹ represents an organic group, and R² represents a hydrogen atom or a methyl group.

22. The antifouling paint composition according to any of claims 1 to 21, wherein the organic group R¹ in the component unit derived from the monobasic acid metal (meth)acrylate represented by the general formula (V) is an organic acid residue of a monobasic acid, which is a monovalent saturated or unsaturated aliphatic hydrocarbon group having 10 to 20 carbon atoms, a saturated or unsaturated alicyclic hydrocarbon group having 3 to 20 carbon atoms or a substitution product thereof.

23. The antifouling paint composition according to any of claims 1 to 22, wherein the organic group R¹ in the component unit derived from the monobasic acid metal (meth)acrylate represented by the general formula (V) is an organic acid residue of at least one kind of monobasic acid selected from the group consisting of versatic acid, palmitic acid, stearic acid, oleic acid, linoleic acid, linolenic acid, abietic acid, neoabietic acid, pimaric acid, dehydroabietic acid, 12-hydroxystearic acid and naphtenic acid.

24. The antifouling paint composition according to any of claims 1 to 23, wherein the copolymer containing a bond of metal salt (a1) is a copolymer containing a component unit derived from said monobasic acid metal (meth) acrylate and a component unit derived from at least one kind of unsaturated monomer selected from the group consisting of alkyl (meth)acrylate, alkoxyalkyl (meth)acrylate and hydroxyalkyl (meth)acrylate.

25. The antifouling paint composition according to any of claims 1 to 24, wherein the content of zinc and/or copper originated from the structure of the general formula (I) in the copolymer containing a bond of metal salt (a1) is 0.5% to 20% by weight.

26. The antifouling paint composition according to any of claims 1 to 25, wherein the monomer represented by the general formula (II):
CH₂=C(R²)-COO-M-O-CO-C(R²)=CH₂ (II),
where M and R² are the same as mentioned before, which can derive the component unit (a21) in the copolymer containing a bond of metal salt (a2), is at least one kind of monomer selected from the group consisting of zinc diacrylate, zinc dimethacrylate, copper diacrylate and copper dimethacrylate.

27. The antifouling paint composition according to any of claims 1 to 26, wherein the other unsaturated monomer, which can derive the component unit (a22) in the copolymer containing a bond of metal salt (a2), is at least one kind of unsaturated monomer selected from the group consisting of alkyl (meth)acrylate, alkoxyalkyl (meth)acrylate and hydroxyalkyl (meth)acrylate.

28. The antifouling paint composition according to any of claims 1 to 27, wherein the monomer represented by the general formula (II):
CH₂=C(R²)-COO-M-O-CO-C(R²)=CH₂ (II),
where M and R² are the same as mentioned before, which can derive the component unit (a21) in the copolymer containing a bond of metal salt (a2), is at least one kind of unsaturated monomer selected from the group consisting of zinc diacrylate, zinc dimethacrylate, copper diacrylate and copper dimethacrylate; and
the other unsaturated monomer, which can derive the component unit (a22) in the copolymer containing a bond of metal salt (a2), is at least one kind of unsaturated monomer selected from the group consisting of methyl (meth)acrylate, ethyl (meth)acrylate, butyl (meth)acrylate and 2-hydroxyethyl (meth)acrylate.

29. The antifouling paint composition according to any of claims 1 to 28, wherein the monomer represented by the general formula (II):
CH₂=C(R²)-COO-M-O-CO-C(R²)=CH₂ (II),
where M and R² are the same as mentioned before, which can derive the component unit (a21) in the copolymer containing a bond of metal salt (a2), is at least one kind of unsaturated monomer selected from the group consisting of zinc diacrylate, zinc dimethacrylate, copper diacrylate and copper dimethacrylate; and
the other unsaturated monomer, which can derive the component unit (a22) in the copolymer containing a bond of metal salt (a2), is a monobasic acid metal (meth) acrylate represented by the general formula (V):
CH₂=C(R²)-COO-M-O-COR¹ (V),
wherein M represents zinc or copper, R¹ represents an organic group, and R² represents a hydrogen atom or a methyl group.

30. The antifouling paint composition according to any of claims 1 to 29, wherein the monomer represented by the general formula (II):
CH₂=C(R²)-COO-M-O-CO-C(R²)=CH₂ (II),
where M and R² are the same as mentioned before, which can derive the component unit (a21) in the copolymer containing a bond of metal salt (a2), is at least one kind of unsaturated monomer selected from the group consisting of zinc diacrylate, zinc dimethacrylate, copper diacrylate and copper dimethacrylate; and
the other unsaturated monomers, which can derive the component unit (a22) in the copolymer containing a bond of metal salt (a2), are a monobasic acid metal (meth)acrylate represented by the general formula (V):
CH₂=C(R²)-COO-M-O-COR¹ (V),
wherein M represents zinc or copper, R¹ represents an organic group, and R² represents a hydrogen atom or a methyl group, and at least one kind of unsaturated monomer selected from the group consisting of alkyl (meth)acrylate, alkoxyalkyl (meth)acrylate and hydroxyalkyl (meth)acrylate.

31. The antifouling paint composition according to any of claims 1 to 30, wherein the monomer represented by the general formula (II):
CH₂=C(R²)-COO-M-O-CO-C(R²)=CH₂ (II),
where M and R² are the same as mentioned before, which can derive the component unit (a21) in the copolymer containing a bond of metal salt (a2), is at least one kind of unsaturated monomer selected from the group consisting of zinc diacrylate, zinc dimethacrylate, copper diacrylate and copper dimethacrylate; and
the other unsaturated monomers, which can derive the component unit (a22) in the copolymer containing a bond of metal salt (a2), are a monobasic acid metal (meth)acrylate represented by the general formula (V):
CH₂=C(R²)-COO-M-O-COR¹ (V),
wherein M represents zinc or copper, R¹ represents an organic group, and R² represents a hydrogen atom or a methyl group, and at least one kind of unsaturated monomer selected from the group consisting of methyl (meth)acrylate, ethyl (meth)acrylate, butyl (meth)acrylate and 2-hydroxyethyl (meth)acrylate.

32. The antifouling paint composition according to any of claims 1 to 31, wherein the organic group R¹ in the component unit derived from the monobasic acid metal (meth)acrylate represented by the general formula (V) is an organic acid residue of a monobasic acid, which is a monovalent saturated or unsaturated aliphatic hydrocarbon group having 10 to 20 carbon atoms, a saturated or unsaturated alicyclic hydrocarbon group having 3 to 20 carbon atoms or a substitution product thereof.

33. The antifouling paint composition according to any of claims 1 to 32, wherein the organic group R¹ in the component unit derived from the monobasic acid metal (meth)acrylate represented by the general formula (V) is an organic acid residue of at least one kind of a monobasic acid selected from the group consisting of versatic acid, palmitic acid, stearic acid, oleic acid, linoleic acid, linolenic acid, abietic acid, neoabietic acid, pimaric acid, dehydroabietic acid, 12-hydroxystearic acid and naphtenic acid.

34. The antifouling paint composition according to any of claims 1 to 33, wherein the content of zinc and/or copper originated from the structure of the general formula (II) in the copolymer containing a bond of metal salt (a2) is 0.5% to 20% by weight.

35. The antifouling paint composition according to any of claims 1 to 34, wherein the component unit (a31) derived from the monomer represented by the general formula (III) is a component unit derived from trialkylsilyl (meth)acrylate.

36. The antifouling paint composition according to any of claims 1 to 35, wherein the component unit (a31) derived from the monomer represented by the general formula (III) is a component unit derived from triisopropylsilyl (meth) acrylate.

37. The antifouling paint composition according to any of claims 1 to 36, wherein the component unit (a32) derived from the other unsaturated monomer which is copolymerizable with the monomer represented by the general formula (III) is a component unit derived from at least one kind of unsaturated monomer selected from the group consisting of alkyl (meth)acrylate, alkoxyalkyl (meth)acrylate and hydroxyalkyl (meth)acrylate.

38. The antifouling paint composition according to any of claims 1 to 37, wherein the component unit (a32) derived from the other unsaturated monomer which is copolymerizable with the monomer represented by the general formula (III) is a component unit derived from at least one kind of unsaturated monomer selected from the group consisting of methyl (meth)acrylate, ethyl (meth)acrylate, butyl (meth)acrylate, 2-methoxyethyl (meth)acrylate, and 2-hydroxyethyl (meth)acrylate.

39. An antifouling coating film formed from the antifouling paint composition according to any of claims 1 to 38.

40. A base material with a coating film, wherein the surface of the base material is coated with a coating film formed by curing the antifouling paint composition according to any of claims 1 to 38.

41. An antifouling base material, wherein the surface of the base material contacting with seawater or fresh water is coated with a coating film formed by curing the antifouling paint composition according to any of claims 1 to 38.

42. The antifouling base material according to claim 41, wherein said base material is any of submerged structures, outside boards of a ship, fishing nets and fishing implements.

43. A method of forming a coating film on a surface of a base material, wherein the surface of the base material is coated or impregnated with the antifouling paint composition according to any of claims 1 to 38, and then said antifouling paint composition is cured to form a coating film.

44. An antifouling method of a base material, wherein a surface of a base material is coated or impregnated with the antifouling paint composition according to any of claims 1 to 38, and then said antifouling coating is cured to form an antifouling coating film.

45. The antifouling method of a base material according to claim 44, wherein said base material is any of submerged structures, outside boards of a ship, fishing nets and fishing implements.

## Patentansprüche

1. Bewuchsverhindernde Anstrichzusammensetzung, umfassend ein hydrolysierbares Copolymer (A) und ein bewuchsverhinderndes Mittel (B),
worin
das hydrolysierbare Copolymer (A) mindestens eine Art eines hydrolysierbaren Copolymers ist, das aus der Gruppe ausgewählt wird, bestehend aus
(a1) einem Copolymer mit einer Metallsalzbindung, das ein Acrylpolymer oder ein Polyesterharz ist und eine durch die allgemeine Formel (I) dargestellte Seitenkettenendgruppe aufweist:
-COO-M-O-COR¹ (I)
worin M Zink oder Kupfer darstellt und R¹ eine organische Gruppe darstellt;
(a2) einem Copolymer mit einer Metallsalzbindung, das aus einer Komponenteneinheit (a21), die von einem durch die allgemeine Formel (II) dargestellten Monomer abgeleitet wird:
CH₂=C(R²)-COO-M-O-CO-C(R²)=CH₂ (II)
worin M Zink oder Kupfer darstellt und R² ein Wasserstoffatom oder eine Methylgruppe darstellt, und einer Komponenteneinheit (a22) zusammengesetzt ist, die von einem anderen ungesättigten Monomer abgeleitet wird, das mit dem Monomer (II) copolymerisierbar ist; und
(a3) einem Silylester-artigen Copolymer, zusammengesetzt aus einer Komponenteneinheit (a31), die von einem durch die allgemeine Formel (III) dargestellten Monomer abgeleitet wird:
R⁷-CH=C(R₃)-COO-SiR⁴R⁵R⁶ (III)
worin R³ ein Wasserstoffatom oder eine Methylgruppe darstelle, R⁴, R⁵ und R⁶ jeweils unabhängig voneinander eine Kohlenwasserstoffgruppe darstellen, R⁷ ein Wasserstoffatom oder R⁸-O-CO- (worin R⁸ eine organische Gruppe oder eine durch -SiR⁹R¹⁰R¹¹ dargestellte Silylgruppe darstellt und R⁹, R¹⁰ und R¹¹ jeweils unabhängig voneinander eine Kohlenwasserstoffgruppe darstellen) darstellt, und einer Komponenteneinheit (a32), die von einem anderen ungesättigten Monomer abgeleitet wird, das mit dem Monomer (III) copolymerisierbar ist; und
Zinksulfid in einer Menge von 10 bis 500 Gew.-Teile in Bezug auf 100 Gew.-Teile des hydrolysierbaren Acrylatcopolymers als bewuchsverhinderndes Mittel (B) enthalten ist.

2. Bewuchsverhindernde Anstrichzusammensetzung gemäß Anspruch 1, worin Kupferoxid nicht enthalten ist.

3. Bewuchsverhindernde Anstrichzusammensetzung gemäß Anspruch 1, worin das bewuchsverhindernde Mittel (B) aus Zinksulfid und einem organischen bewuchsverhindernden Mittel (b2) besteht.

4. Bewuchsverhindernde Anstrichzusammensetzung gemäß mindestens einem der Ansprüche 1 bis 3, worin das organische bewuchsverhindernde Mittel (b2) mindestens eine Art eines organischen bewuchsverhindernden Mittels ist, das aus der Gruppe ausgewählt wird, die aus einer Pyrithionverbindung, tri-organischem Bor und einem Aminkomplex davon und 4,5-Dichlor-N-octylisothiazolin-3-on besteht.

5. Bewuchsverhindernde Anstrichzusammensetzung gemäß mindestens einem der Ansprüche 1 bis 4, worin das organische bewuchsverhindernde Mittel (b2) mindestens eine Art eines organischen bewuchsverhindernden Mittels ist, das aus der Gruppe ausgewählt wird, die aus Zinkpyrithion, Triphenylbor-Pyridinkomplex, Dimethylphenylbor-(4-isopropyl)-Pyridinkomplex und 4,5-Dichlor-N-octylisothiazolin-3-on besteht.

6. Bewuchsverhindernde Anstrichzusammensetzung gemäß mindestens einem der Ansprüche 1 bis 5, worin das organische bewuchsverhindernde Mittel (b2) in einer Menge von 20 bis 500 Gew.-Teilen in Bezug auf 100 Gew.-Teile des Zinksulfids als bewuchsverhinderndes Mittel (B) enthalten ist.

7. Bewuchsverhindernde Anstrichzusammensetzung gemäß mindestens einem der Ansprüche 1 bis 6, worin als ein Füllstoff ferner Zinkoxid enthalten ist.

8. Bewuchsverhindernde Anstrichzusammensetzung gemäß mindestens einem der Ansprüche 1 bis 7, worin Zinkoxid in einer Menge von 10 bis 300 Gew.-Teilen in Bezug auf 100 Gew.-Teile des hydrolysierbaren Copolymers (A) enthalten ist.

9. Bewuchsverhindernde Anstrichzusammensetzung gemäß Anspruch 8, worin Zinkoxid in einer Menge von 1 bis 40 Gew.% in der bewuchsverhindernden Anstrichzusammensetzung enthalten ist.

10. Bewuchsverhindernde Anstrichzusammensetzung gemäß mindestens einem der Ansprüche 1 bis 9, worin als Füllstoff ferner Talk enthalten ist.

11. Bewuchsverhindernde Anstrichzusammensetzung gemäß Anspruch 10, worin Talk in einer Menge von 5 bis 300 Gew.-Teilen in Bezug auf 100 Gew.-Teile des hydrolysierbaren Copolymers (A) enthalten ist.

12. Bewuchsverhindernde Anstrichzusammensetzung gemäß mindestens einem der Ansprüche 1 bis 11, worin Talk in einer Menge von 0,5 bis 40 Gew.% in der bewuchsverhindernden Anstrichzusammensetzung enthalten ist.

13. Bewuchsverhindernde Anstrichzusammensetzung gemäß mindestens einem der Ansprüche 1 bis 12, worin als Weichmacher ferner chloriertes Paraffin enthalten ist.

14. Bewuchsverhindernde Anstrichzusammensetzung gemäß mindestens einem der Ansprüche 1 bis 13, worin chloriertes Paraffin in einer Menge von 0,05 bis 40 Gew.-Teilen in Bezug auf 100 Gew.-Teile des hydrolysierbaren Copolymers (A) enthalten ist.

15. Bewuchsverhindernde Anstrichzusammensetzung gemäß mindestens einem der Ansprüche 1 bis 14, worin chloriertes Paraffin in einer Menge von 1 bis 5 Gew.% in der bewuchsverhindernden Anstrichzusammensetzung enthalten ist.

16. Bewuchsverhindernde Anstrichzusammensetzung gemäß mindestens einem der Ansprüche 1 bis 15, das ferner mindestens eine Art von färbenden Pigmenten enthält, die aus der Gruppe ausgewählt werden, die aus Eisenrot, Titanweiß, gelbem Eisenoxid und einem organischen Pigment besteht.

17. Bewuchsverhindernde Anstrichzusammensetzung gemäß mindestens einem der Ansprüche 1 bis 16, worin die organische Gruppe R¹ in dem Copolymer mit einer Metallsalzbindung (a1) ein organischer Säurerest einer einbasigen Säure ist, der eine einwertige gesättigte aliphatische Kohlenwasserstoffgruppe mit 2 bis 30 Kohlenstoffatomen, eine ungesättigte aliphatische Kohlenwasserstoffgruppe mit 2 bis 30 Kohlenstoffatomen, eine alicyclische Kohlenwasserstoffgruppe mit 3 bis 20 Kohlenstoffatomen, eine aromatische Kohlenwasserstoffgruppe mit 6 bis 18 Kohlenstoffatomen oder ein Substitutionsprodukt davon ist.

18. Bewuchsverhindernde Anstrichzusammensetzung gemäß mindestens einem der Ansprüche 1 bis 16, worin die organische Gruppe R¹ in dem Copolymer mit einer Metallsalzbindung (a1) ein organischer Säurerest einer einbasigen Säure ist, der eine einwertige gesättigte oder ungesättigte aliphatische Kohlenwasserstoffgruppe mit 10 bis 20 Kohlenstoffatomen, eine gesättigte oder ungesättigte alicyclische Kohlenwasserstoffgruppe mit 3 bis 20 Kohlenstoffatomen oder ein Substitutionsprodukt davon ist.

19. Bewuchsverhindernde Anstrichzusammensetzung gemäß mindestens einem der Ansprüche 1 bis 18, worin das Copolymer mit einer Metallsalzbindung (a1) ein Copolymer mit einer Metallsalzbindung ist, das an dem -COO- eines Acrylsäurecopolymers über Kupfer oder Zink eine durch die allgemeine Formel (IV) dargestellte Seitenkettenendgruppe aufweist:
-O-COR¹ (IV),
worin R¹ einen organischen Säurerest einer einbasigen Säure darstellt, der eine einwertige gesättigte oder ungesättigte aliphatische Kohlenwasserstoffgruppe mit 10 bis 20 Kohlenstoffatomen, eine gesättigte oder ungesättigte alicyclische Kohlenwasserstoffgruppe mit 3 bis 20 Kohlenstoffatomen oder ein Substitutionsprodukt davon ist.

20. Bewuchsverhindernde Anstrichzusammensetzung gemäß mindestens einem der Ansprüche 1 bis 19, worin die organische Gruppe R¹ in dem Copolymer mit einer Metallsalzbindung (a1) ein organischer Säurerest von mindestens einer Art einer einbasigen Säure ist, die aus der Gruppe ausgewählt wird, die aus Versatic-Säure, Palmitinsäure, Stearinsäure, Ölsäure, Linolsäure, Linolensäure, Abietinsäure, Neoabietinsäure, Pimarsäure, Dehydroabietinsäure, 12-Hydroxystearinsäure und Naphthensäure besteht.

21. Bewuchsverhindernde Anstrichzusammensetzung gemäß mindestens einem der Ansprüche 1 bis 20, worin das Copolymer mit einer Metallsalzbindung (a1) ein Copolymer aus mindestens zwei oder mehr Arten von durch die allgemeine Formel (V) dargestellten einbasigen Säuremetall(meth)acrylaten ist:
CH₂=C(R²)-COO-M-O-COR¹ (V),
worin M Zink oder Kupfer darstellt, R¹ eine organische Gruppe darstellt und R² ein Wasserstoffatom oder eine Methylgruppe darstellt.

22. Bewuchsverhindernde Anstrichzusammensetzung gemäß mindestens einem der Ansprüche 1 bis 21, worin die organische Gruppe R¹ in der Komponenteneinheit, die von dem durch die allgemeine Formel (V) dargestellten einbasigen Säuremetall(meth)acrylat abgeleitet ist, ein organischer Säurereste einer einbasigen Säure ist, der eine einwertige gesättigte oder ungesättigte aliphatische Kohlenwasserstoffgruppe mit 10 bis 20 Kohlenstoffatomen, eine gesättigte oder ungesättigte alicyclische Kohlenwasserstoffgruppe mit 3 bis 20 Kohlenstoffatomen oder ein Substitutionsprodukt davon ist.

23. Bewuchsverhindernde Anstrichzusammensetzung gemäß mindestens einem der Ansprüche 1 bis 22, worin die organische Gruppe R¹ in der Komponenteneinheit, die von dem durch die allgemeine Formel (V) dargestellten einbasigen Säuremetall(meth)acrylat abgeleitet ist, ein organischer Säurereste von mindestens einer Art einer einbasigen Säure ist, die aus der Gruppe ausgewählt wird, die aus Versatic-Säure, Palmitinsäure, Stearinsäure, Ölsäure, Linolsäure, Linolensäure, Abietinsäure, Neoabietinsäure, Pimarsäure, Dehydroabietinsäure, 12-Hydroxystearinsäure und Naphthensäure besteht.

24. Bewuchsverhindernde Anstrichzusammensetzung gemäß mindestens einem der Ansprüche 1 bis 23, worin das Copolymer mit einer Metallsalzbindung (a1) ein Copolymer ist, das eine Komponenteneinheit, die von dem einbasigen Säuremetall(meth)acrylat abgeleitet wird, und eine Komponenteneinheit enthält, die aus mindestens einer Art eines ungesättigten Monomers abgeleitet wird, das aus der Gruppe ausgewählt wird, die aus Alkyl(meth)acrylat, Alkoxyalkyl(meth)acrylat und Hydroxyalkyl(meth)acrylat besteht.

25. Bewuchsverhindernde Anstrichzusammensetzung gemäß mindestens einem der Ansprüche 1 bis 24, worin der Gehalt an Zink und/oder Kupfer, der aus der Struktur der allgemeinen Formel (I) stammt, in dem Copolymer mit einer Metallsalzbindung (a1) 0,5 bis 20 Gew.% beträgt.

26. Bewuchsverhindernde Anstrichzusammensetzung gemäß mindestens einem der Ansprüche 1 bis 25, worin das durch die allgemeine Formel (II) dargestellte Monomer:
CH₂=C(R²)-COO-M-O-CO-C(R²)=CH₂ (II)
worin M und R² dieselben wie zuvor erwähnt sind, das die Komponenteneinheit (a21) in dem Copolymer mit einer Metallsalzbindung (a2) bilden kann, mindestens eine Art von Monomer ist, das aus der Gruppe ausgewählt wird, die aus Zinkdiacrylat, Zinkdimethacrylat, Kupferdiacrylat und Kupferdimethacrylat besteht.

27. Bewuchsverhindernde Anstrichzusammensetzung gemäß mindestens einem der Ansprüche 1 bis 26, worin das andere ungesättigte Monomer, das die Komponenteneinheit (a22) in dem Copolymer mit einer Metallsalzbindung (a2) bilden kann, mindestens eine Art eines ungesättigten Monomers ist, das aus der Gruppe ausgewählt wird, die aus Alkyl(meth)acrylat, Alkoxyalkyl(meth)acrylat und Hydroxyalkyl(meth)acrylat besteht.

28. Bewuchsverhindernde Anstrichzusammensetzung gemäß mindestens einem der Ansprüche 1 bis 27, worin das durch die allgemeine Formel (II) dargestellte Monomer:
CH₂=C(R²)-COO-M-O-CO-C(R²)=CH₂ (II)
worin M und R² dieselben wie zuvor erwähnt sind, das die Komponenteneinheit (a21) in dem Copolymer mit einer Metallsalzbindung (a2) bilden kann, mindestens eine Art eines ungesättigten Monomers ist, das aus der Gruppe ausgewählt wird, die aus Zinkdiacrylat, Zinkdimethacrylat, Kupferdiacrylat und Kupferdimethacrylat besteht; und
das andere ungesättigte Copolymer, das die Komponenteneinheit (a22) in dem Copolymer mit einer Metallsalzbindung (a2) bilden kann, mindestens eine Art eines ungesättigten Monomers ist, das aus der Gruppe ausgewählt wird, die aus Methyl(meth)acrylat, Ethyl(meth)acrylat, Butyl(meth)acrylat und 2-Hydroxyethyl(meth)acrylat besteht.

29. Bewuchsverhindernde Anstrichzusammensetzung gemäß mindestens einem der Ansprüche 1 bis 28, worin das durch die allgemeine Formel (II) dargestellte Monomer:
CH₂=C(R²)-COO-M-O-CO-C(R²)=CH₂ (II)
worin M und R² dieselben wie zuvor erwähnt sind, das die Komponenteneinheit (a21) in dem Copolymer mit einer Metallsalzbindung (a2) bilden kann, mindestens eine Art eines ungesättigten Monomers ist, das aus der Gruppe ausgewählt wird, die aus Zinkdiacrylat, Zinkdimethacrylat, Kupferdiacrylat und Kupferdimethacrylat besteht; und
das andere ungesättigte Copolymer, das die Komponenteneinheit (a22) in dem Copolymer mit einer Metallsalzbindung (a2) bilden kann, ein monobasisches Säuremetall(meth)acrylat ist, das durch die allgemeine Formel (V) dargestellt wird:
CH₂=C(R²)-COO-M-O-COR¹ (V),
worin M Zink oder Kupfer darstellt, R¹ eine organische Gruppe darstellt und R² ein Wasserstoffatom oder eine Methylgruppe darstellt.

30. Bewuchsverhindernde Anstrichzusammensetzung gemäß mindestens einem der Ansprüche 1 bis 29, worin das durch die allgemeine Formel (II) dargestellte Monomer:
CH₂=C(R²)-COO-M-O-CO-C(R²)=CH₂ (II)
worin M und R² dieselben wie zuvor erwähnt sind, das die Komponenteneinheit (a21) in dem Copolymer mit einer Metallsalzbindung (a2) bilden kann, mindestens eine Art eines ungesättigten Monomers ist, das aus der Gruppe ausgewählt wird, die aus Zinkdiacrylat, Zinkdimethacrylat, Kupferdiacrylat und Kupferdimethacrylat besteht; und
die anderen ungesättigten Copolymere, die die Komponenteneinheit (a22) in dem Copolymer mit einer Metallsalzbindung (a2) bilden können, ein durch die allgemeine Formel (V) dargestelltes monobasisches Säuremetall(meth)acrylat:
CH₂=C(R²)-COO-M-O-COR¹ (V),
worin M Zink oder Kupfer darstellt, R¹ eine organische Gruppe darstellt und R² ein Wasserstoffatom oder eine Methylgruppe darstellt, und mindestens eine Art eines ungesättigten Monomers sind, das aus der Gruppe ausgewählt wird, die aus Alkyl(meth)acrylat, Alkoxyalkyl(meth)acrylat und Hydroxyalkyl(meth)acrylat besteht.

31. Bewuchsverhindernde Anstrichzusammensetzung gemäß mindestens einem der Ansprüche 1 bis 30, worin das durch die allgemeine Formel (II) dargestellte Monomer:
CH₂=C(R²)-COO-M-O-CO-C(R²)=CH₂ (II)
worin M und R² dieselben wie zuvor erwähnt sind, das die Komponenteneinheit (a21) in dem Copolymer mit einer Metallsalzbindung (a2) bilden kann, mindestens eine Art eines ungesättigten Monomers ist, das aus der Gruppe ausgewählt wird, die aus Zinkdiacrylat, Zinkdimethacrylat, Kupferdiacrylat und Kupferdimethacrylat besteht; und
die anderen ungesättigten Monomere, die die Komponenteneinheit (a22) in dem Copolymer mit einer Metallsalzbindung (a2) bilden können, ein durch die allgemeine Formel (V) dargestelltes einbasiges Säuremetall(meth)acrylat:
CH₂=C(R²)-COO-M-O-COR¹ (V),
worin M Zink oder Kupfer darstellt, R¹ eine organische Gruppe darstellt und R² ein Wasserstoffatom oder eine Methylgruppe darstellt, und mindestens eine Art eines ungesättigten Monomers sind, das aus der Gruppe ausgewählt wird, die aus Methylmethacrylat, Ethyl(meth)acryl, Butyl(meth)acrylat und 2-Hydroxyethyl(meth)acrylat besteht.

32. Bewuchsverhindernde Anstrichzusammensetzung gemäß mindestens einem der Ansprüche 1 bis 31, worin die organische Gruppe R¹ in der Komponenteneinheit, die von dem durch die allgemeine Formel (V) dargestellten einbasigen Säuremetall(meth)acrylat abgeleitet wird, ein organischer Säurerest einer einbasischen Säure ist, der eine einwertige gesättigte oder ungesättigte aliphatische Kohlenwasserstoffgruppe mit 10 bis 20 Kohlenstoffatomen, eine gesättigte oder ungesättigte alicyclische Kohlenwasserstoffgruppe mit 3 bis 20 Kohlenstoffatomen oder ein Substitutionsprodukt davon ist.

33. Bewuchsverhindernde Anstrichzusammensetzung gemäß mindestens einem der Ansprüche 1 bis 32, worin die organische Gruppe R¹ in der Komponenteneinheit, die von dem durch die allgemeine Formel (V) dargestellten einbasigen Säuremetall(meth)acrylat abgeleitet wird, ein organischer Säurerest von mindestens einer Art einer einbasigen Säure ist, die aus der Gruppe ausgewählt wird, die aus Versatic-Säure, Palmitinsäure, Stearinsäure, Ölsäure, Linolsäure, Linolensäure, Abietinsäure, Neoabietinsäure, Pimarsäure, Dehydroabietinsäure, 12-Hydroxystearinsäure und Naphthensäure besteht.

34. Bewuchsverhindernde Anstrichzusammensetzung gemäß mindestens einem der Ansprüche 1 bis 33, worin der Gehalt an Zink und/oder Kupfer, der aus der Struktur der allgemeinen Formel (II) stammt, in dem Copolymer mit einer Metallsalzbindung (a2) 0,5 bis 20 Gew.% beträgt.

35. Bewuchsverhindernde Anstrichzusammensetzung gemäß mindestens einem der Ansprüche 1 bis 34, worin die Komponenteneinheit (a31), die von dem durch die allgemeine Formel (III) dargestellten Monomer abgeleitet wird, eine Komponenteneinheit ist, die von Trialkylsilyl(meth)acrylat abgeleitet wird.

36. Bewuchsverhindernde Anstrichzusammensetzung gemäß mindestens einem der Ansprüche 1 bis 35, worin die Komponenteneinheit (a31), die von dem durch die allgemeine Formel (III) dargestellten Monomer abgeleitet wird, eine Komponenteneinheit ist, die von Triisopropylsilyl(meth)acrylat abgeleitet wird.

37. Bewuchsverhindernde Anstrichzusammensetzung gemäß mindestens einem der Ansprüche 1 bis 36, worin die Komponenteneinheit (a32), die von dem anderen ungesättigten Monomer abgeleitet wird, das mit dem durch die allgemeine Formel (III) dargestellten Monomer copolymerisierbar ist, eine Komponenteneinheit ist, die von mindestens einer Art eines ungesättigten Monomers abgeleitet wird, das aus der Gruppe ausgewählt wird, die aus Alkyl(meth)acrylat, Alkoxyalkyl(meth)acrylat und Hydroxyalkyl(meth)acrylat besteht.

38. Bewuchsverhindernde Anstrichzusammensetzung gemäß mindestens einem der Ansprüche 1 bis 37, worin die Komponenteneinheit (a32), die von dem anderen ungesättigten Monomer abgeleitet wird, das mit dem durch die allgemeine Formel (III) dargestellten Monomer copolymerisierbar ist, eine Komponenteneinheit ist, die von mindestens einer Art eines ungesättigten Monomers abgeleitet wird, das aus der Gruppe ausgewählt wird, die aus Methyl(meth)acrylat, Ethyl(meth)acrylat, Butyl(meth)acrylat, 2-Methoxyethyl(meth)acrylat und 2-Hydroxyethyl(meth)acrylat besteht.

39. Bewuchsverhindernder Beschichtungsfilm, der aus der bewuchsverhindernden Anstrichzusammensetzung gemäß mindestens einem der Ansprüche 1 bis 38 gebildet wird.

40. Basismaterial mit einem Beschichtungsfilm, worin die Oberfläche des Basismaterials mit einem Beschichtungsfilm beschichtet ist, der durch Härten der bewuchsverhindernden Anstrichzusammensetzung gemäß mindestens einem der Ansprüche 1 bis 38 gebildet wird.

41. Bewuchsverhinderndes Basismaterial, worin die Oberfläche des Basismaterials, das mit Seewasser oder Frischwasser in Kontakt steht, mit einem Beschichtungsfilm beschichtet ist, der durch Härten der bewuchsverhindernden Anstrichzusammensetzung gemäß mindestens einem der Ansprüche 1 bis 38 gebildet wird.

42. Bewuchsverhinderndes Basismaterial gemäß Anspruch 41, worin das Basismaterial eines von Unterwasserstrukturen, äußeren Planken eines Schiffs, Fischnetzen und Fischhilfsmitteln ist.

43. Verfahren zur Bildung eines Beschichtungsfilms auf einer Oberfläche eines Basismaterials, worin die Oberfläche des Basismaterials mit der bewuchsverhindernden Anstrichzusammensetzung gemäß mindestens einem der Ansprüche 1 bis 38 beschichtet oder imprägniert wird und die bewuchsverhindernde Anstrichzusammensetzung dann zur Bildung eines Beschichtungsfilms gehärtet wird.

44. Verfahren zur Verhinderung von Bewuchs an einem Basismaterial, worin eine Oberfläche eines Basismaterials mit der bewuchsverhindernden Anstrichzusammensetzung gemäß mindestens einem der Ansprüche 1 bis 38 beschichtet oder imprägniert wird, und die bewuchsverhindernde Beschichtung dann zur Bildung eines bewuchsverhinderndes Beschichtungsfilms gehärtet wird.

45. Verfahren zur Verhinderung von Bewuchs an einem Basismaterial gemäß Anspruch 44, worin das Basismaterial eines von Unterwasserstrukturen, äußeren Planken eines Schiffs, Fischnetzen und Fischhilfsmitteln ist.

## Revendications

1. Composition de peinture antisalissure comprenant un copolymère hydrolysable (A) et un agent antisalissure (B), dans laquelle :
ledit copolymère hydrolysable (A) est au moins une sorte de copolymère hydrolysable sélectionné dans le groupe constitué par (a1) un copolymère contenant une liaison de sel métallique, qui est un polymère acrylique ou une résine de polyester et a groupe terminal de chaîne latérale représenté par la formule générale (I) :
-COO-M-O-COR¹ (I),
où M représente du zinc ou du cuivre et R¹ représente un groupe organique ;
(a2) un copolymère contenant une liaison de sel métallique composé d'une unité constitutive (a21) dérivée d'un monomère représenté par la formule générale (II) :
CH₂=C (R²) -COO-M-O-CO-C (R²) = CH₂ (II),
où M représente du zinc ou du cuivre et R² représente un atome d'hydrogène ou un groupe méthyle, et d'une unité constitutive (a22) dérivée d'un autre monomère insaturé qui est copolymérisable avec le monomère (II) ; et
(a3) un copolymère de type ester de silyle composé d'une unité constitutive (a31) dérivée d'un monomère représenté par la formule générale (III) :
R⁷-CH=C (R³) -COO-SiR⁴R⁵R⁶ (III),
où R³ représente un atome d'hydrogène ou un groupe méthyle, R⁴, R⁵ et R⁶ représentent chacun indépendamment un groupe hydrocarboné, R⁷ représente un atome d'hydrogène ou R⁸-O-CO- (où R⁸ représente un groupe organique ou
un groupe silyle représenté par -SiR⁹R¹⁰R¹¹ et R⁹, R¹⁰ et R¹¹ représentent chacun indépendamment un groupe hydrocarboné) et d'une unité constitutive (a32) dérivée d'un autre monomère insaturé qui est copolymérisable avec le monomère (III) ; et
du sulfure de zinc est contenu en une quantité de 10 à 500 parties en poids par rapport à 100 parties en poids du copolymère acrylate hydrolysable en tant qu'agent antisalissure (B).

2. Composition de peinture antisalissure selon la revendication 1, dans laquelle il n'y a pas d'oxyde cuivreux.

3. Composition de peinture antisalissure selon la revendication 1, dans laquelle l'agent antisalissure (B) est constitué de sulfure de zinc et d'un agent antisalissure organique (b2).

4. Composition de peinture antisalissure selon l'une quelconque des revendications 1 à 3, dans laquelle l'agent antisalissure organique (b2) est au moins une sorte d'agent antisalissure organique sélectionné dans le groupe constitué d'un composé pyrithione, de bore triorganique et d'un complexe aminé de celui-ci, et de 4,5-dichloro-N-octylisothiazolin-3-one.

5. Composition de peinture antisalissure selon l'une quelconque des revendications 1 à 4, dans laquelle l'agent antisalissure organique (b2) est au moins une sorte d'agent antisalissure organique sélectionné dans le groupe constitué de pyrithione de zinc, d'un complexe de triphénylbore pyridine, d'un complexe de diméthylphénylbore-(4-isopropyl)pyridine et de 4,5-dichloro-N-octylisothiazolin-3-one.

6. Composition de peinture antisalissure selon l'une quelconque des revendications 1 à 5, dans laquelle l'agent antisalissure organique (b2) est contenu en une quantité de 20 à 500 parties en poids par rapport à 100 parties en poids de sulfure de zinc en tant qu'agent antisalissure (B).

7. Composition de peinture antisalissure selon l'une quelconque des revendications 1 à 6, dans laquelle de l'oxyde de zinc est en outre contenu en tant que pigment de charge.

8. Composition de peinture antisalissure selon l'une quelconque des revendications 1 à 7, dans laquelle de l'oxyde de zinc est contenu en une quantité de 10 à 300 parties en poids par rapport à 100 parties en poids de copolymère hydrolysable (A).

9. Composition de peinture antisalissure selon la revendication 8, dans laquelle de l'oxyde de zinc est contenu en une quantité de 1 % à 40 % en poids dans la composition de peinture antisalissure.

10. Composition de peinture antisalissure selon l'une quelconque des revendications 1 à 9, dans laquelle du talc est en outre contenu en tant que pigment de charge.

11. Composition de peinture antisalissure selon la revendication 10, dans laquelle du talc est contenu en une quantité de 5 à 300 parties en poids par rapport à 100 parties en poids de copolymère hydrolysable (A).

12. Composition de peinture antisalissure selon l'une quelconque des revendications 1 à 11, dans laquelle du talc est contenu en une quantité de 0,5 % à 40 % en poids dans la composition de peinture antisalissure.

13. Composition de peinture antisalissure selon l'une quelconque des revendications 1 à 12, dans laquelle de la paraffine chlorée est en outre présente en tant que plastifiant.

14. Composition de peinture antisalissure selon l'une quelconque des revendications 1 à 13, dans laquelle de la paraffine chlorée est en outre contenue en une quantité de 0,05 à 40 parties en poids par rapport à 100 parties en poids de copolymère hydrolysable (A).

15. Composition de peinture antisalissure selon l'une quelconque des revendications 1 à 14, dans laquelle de la paraffine chlorée est contenue en une quantité de 1 % à 5 % en poids dans la composition de peinture antisalissure.

16. Composition de peinture antisalissure selon l'une quelconque des revendications 1 à 15, qui contient en outre au moins une sorte de pigment de coloration sélectionné dans le groupe constitué de pigments rouge de fer, blanc de titane, oxyde de fer jaune et d'un pigment organique.

17. Composition de peinture antisalissure selon l'une quelconque des revendications 1 à 16, dans laquelle le groupe organique R¹ dans le copolymère contenant une liaison de sel métallique (a1) est un résidu acide organique d'un acide monobasique, qui est un groupe hydrocarboné aliphatique saturé monovalent ayant 2 à 30 atomes de carbone, un groupe hydrocarboné aliphatique insaturé ayant 2 à 30 atomes de carbone, un groupe hydrocarboné alicyclique ayant 3 à 20 atomes de carbone, un groupe hydrocarboné aromatique ayant 6 à 18 atomes de carbone ou un produit de substitution de ceux-ci.

18. Composition de peinture antisalissure selon l'une quelconque des revendications 1 à 16, dans laquelle le groupe organique R¹ dans le copolymère contenant une liaison de sel métallique (a1) est un résidu acide organique d'un acide monobasique, qui est un groupe hydrocarboné aliphatique saturé ou insaturé monovalent ayant 10 à 20 atomes de carbone, un groupe hydrocarboné alicyclique saturé ou insaturé ayant 3 à 20 atomes de carbone ou un produit de substitution de ceux-ci.

19. Composition de peinture antisalissure selon l'une quelconque des revendications 1 à 18, dans laquelle le copolymère contenant une liaison de sel métallique (a1) est un copolymère contenant une liaison de sel métallique ayant, au niveau du -COO- d'un copolymère d'acide acrylique par l'intermédiaire de cuivre ou de zinc, un groupe terminal de chaîne latérale représenté par la formule générale (IV) :
-O-COR¹ (IV),
où R¹ représente un résidu acide organique d'un acide monobasique, qui est un groupe hydrocarboné aliphatique saturé ou insaturé monovalent ayant 10 à 20 atomes de carbone, un groupe hydrocarboné alicyclique saturé ou insaturé ayant 3 à 20 atomes de carbone ou un produit de substitution de ceux-ci.

20. Composition de peinture antisalissure selon l'une quelconque des revendications 1 à 19, dans laquelle le groupe organique R¹ dans le copolymère contenant une liaison de sel métallique (a1) est un résidu acide organique d'au moins une sorte d'acide monobasique sélectionné dans le groupe constitué d'un acide versatique, d'un acide palmitique, d'un acide stéarique, d'un acide oléique, d'un acide linoléique, d'un acide linolénique, d'un acide abiétique, d'un acide néoabiétique, d'un acide pimarique, d'un acide déhydroabiétique, d'un acide 12-hydroxystéarique et d'un acide naphténique.

21. Composition de peinture antisalissure selon l'une quelconque des revendications 1 à 20, dans laquelle le copolymère contenant une liaison de sel métallique (a1) est un copolymère d'au moins deux sortes ou plus de (méth)acrylates métalliques d'acide monobasique représenté by the formule générale (V) :
CH₂=C (R²) -COO-M-O-COR¹, (V)
dans laquelle M représente du zinc ou du cuivre, R¹ représente un groupe organique, et R² représente un atome d'hydrogène ou un groupe méthyle.

22. Composition de peinture antisalissure selon l'une quelconque des revendications 1 à 21, dans laquelle le groupe organique R¹ dans l'unité constitutive dérivée du (méth)acrylate métallique d'acide monobasique représenté par la formule générale (V) est un résidu acide organique d'un acide monobasique, qui est un groupe hydrocarboné aliphatique saturé ou insaturé monovalent ayant 10 à 20 atomes de carbone, un groupe hydrocarboné alicyclique saturé ou insaturé ayant 3 à 20 atomes de carbone ou un produit de substitution de ceux-ci.

23. Composition de peinture antisalissure selon l'une quelconque des revendications 1 à 22, dans laquelle le groupe organique R¹ dans l'unité constitutive dérivée du (méth)acrylate métallique d'acide monobasique représenté par la formule générale (V) est un résidu acide organique d'au moins une sorte d'acide monobasique sélectionné dans le groupe constitué d'un acide versatique, d'un acide palmitique, d'un acide stéarique, d'un acide oléique, d'un acide linoléique, d'un acide linolénique, d'un acide abiétique, d'un acide néoabiétique, d'un acide pimarique, d'un acide déhydroabiétique, d'un acide 12-hydroxystéarique et d'un acide naphténique.

24. Composition de peinture antisalissure selon l'une quelconque des revendications 1 à 23, dans laquelle le copolymère contenant une liaison de sel métallique (a1) est un copolymère contenant une unité constitutive dérivée dudit (méth)acrylate métallique d'acide monobasique et une unité constitutive dérivée d'au moins une sorte de monomère insaturé sélectionné dans le groupe constitué d'un (méth)acrylate d'alkyle, d'un (méth)acrylate d'alcoxyalkyle et d'un (méth)acrylate d'hydroxyalkyle.

25. Composition de peinture antisalissure selon l'une quelconque des revendications 1 à 24, dans laquelle la teneur de zinc et/ou de cuivre provenant de la structure ayant la formule générale (I) dans le copolymère contenant une liaison de sel métallique (a1) est de 0,5 % à 20 % en poids.

26. Composition de peinture antisalissure selon l'une quelconque des revendications 1 à 25, dans laquelle le monomère représenté par la formule générale (II) :
CH₂=C (R²) -COO-M-O-CO-C (R²) = CH₂ (II)
où M et R² sont les mêmes que mentionnés auparavant, qui peut dériver de l'unité constitutive (a21) dans le copolymère contenant une liaison de sel métallique (a2), est au moins une sorte de monomère sélectionné dans le groupe constitué de diacrylate de zinc, de diméthacrylate de zinc, de diacrylate de cuivre et de diméthacrylate de cuivre.

27. Composition de peinture antisalissure selon l'une quelconque des revendications 1 à 26, dans laquelle l'autre monomère insaturé, qui peut dériver de l'unité constitutive (a22) dans le copolymère contenant une liaison de sel métallique (a2), est au moins une sorte de monomère insaturé sélectionné dans le groupe constitué de (méth)acrylate d'alkyle, de (méth)acrylate d'alcoxyalkyle et de (méth)acrylate d'hydroxyalkyle.

28. Composition de peinture antisalissure selon l'une quelconque des revendications 1 à 27, dans laquelle le monomère représenté par la formule générale (II) :
CH₂=C (R²) -COO-M-O-CO-C (R²) = CH₂ (II)
où M et R² sont les mêmes que mentionnés auparavant, qui peut dériver de l'unité constitutive (a21) dans le copolymère contenant une liaison de sel métallique (a2), est au moins une sorte de monomère insaturé sélectionné dans le groupe constitué de diacrylate de zinc, de diméthacrylate de zinc, de diacrylate de cuivre et de diméthacrylate de cuivre ; et
l'autre monomère insaturé, qui peut dériver de l'unité constitutive (a22) dans le copolymère contenant une liaison de sel métallique (a2), est au moins une sorte de monomère insaturé sélectionné dans le groupe constitué de (méth)acrylate de méthyle, de (méth)acrylate d'éthyle, de (méth)acrylate de butyle et de (méth)acrylate de 2-hydroxyéthyle.

29. Composition de peinture antisalissure selon l'une quelconque des revendications 1 à 28, dans laquelle le monomère représenté par la formule générale (II) :
CH₂=C (R²) -COO-M-O-CO-C (R²) = CH₂ (II)
où M et R² sont les mêmes que mentionnés auparavant, qui peut dériver de l'unité constitutive (a21) dans le copolymère contenant une liaison de sel métallique (a2), est au moins une sorte de monomère insaturé sélectionné dans le groupe constitué de diacrylate de zinc, de diméthacrylate de zinc, de diacrylate de cuivre et de diméthacrylate de cuivre ; et
l'autre monomère insaturé, qui peut dériver de l'unité constitutive (a22) dans le copolymère contenant une liaison de sel métallique (a2), est un (méth)acrylate métallique d'acide monobasique représenté by the formule générale (V) :
CH₂=C (R²) -COO-M-O-COR¹, (V)
dans laquelle M représente du zinc ou du cuivre, R¹ représente un groupe organique, et R² représente un atome d'hydrogène ou un groupe méthyle.

30. Composition de peinture antisalissure selon l'une quelconque des revendications 1 à 29, dans laquelle le monomère représenté par la formule générale (II) :
CH₂=C (R²) -COO-M-O-CO-C (R²) = CH₂ (II)
où M et R² sont les mêmes que mentionnés auparavant, qui peut dériver de l'unité constitutive (a21) dans le copolymère contenant une liaison de sel métallique (a2), est au moins une sorte de monomère insaturé sélectionné dans le groupe constitué de diacrylate de zinc, de diméthacrylate de zinc, de diacrylate de cuivre et de diméthacrylate de cuivre ; et
les autres monomères insaturés, qui peuvent dériver de l'unité constitutive (a22) dans le copolymère contenant une liaison de sel métallique (a2), sont un (méth)acrylate métallique d'acide monobasique représenté by the formule générale (V) :
CH₂=C (R²) -COO-M-O-COR¹ (V)
dans laquelle M représente du zinc ou du cuivre, R¹ représente un groupe organique, et R² représente un atome d'hydrogène ou un groupe méthyle, et au moins une sorte de monomère insaturé sélectionné dans le groupe constitué de (méth)acrylate d'alkyle, de (méth)acrylate d'alcoxyalkyle et de (méth)acrylate d'hydroxyalkyle.

31. Composition de peinture antisalissure selon l'une quelconque des revendications 1 à 30, dans laquelle le monomère représenté par la formule générale (II) :
CH₂=C (R²) -COO-M-O-CO-C (R²) = CH₂ (II)
où M et R² sont les mêmes que mentionnés auparavant, qui peut dériver de l'unité constitutive (a21) dans le copolymère contenant une liaison de sel métallique (a2), est au moins une sorte de monomère insaturé sélectionné dans le groupe constitué de diacrylate de zinc, de diméthacrylate de zinc, de diacrylate de cuivre et de diméthacrylate de cuivre ; et
les autres monomères insaturés, qui peuvent dériver de l'unité constitutive (a22) dans le copolymère contenant une liaison de sel métallique (a2), sont un (méth)acrylate métallique d'acide monobasique représenté by the formule générale (V) :
CH₂=C (R²) -COO-M-O-COR¹ (V),
dans laquelle M représente du zinc ou du cuivre, R¹ représente un groupe organique, et R² représente un atome d'hydrogène ou un groupe méthyle,
et au moins une sorte de monomère insaturé sélectionné dans le groupe constitué de (méth)acrylate de méthyle, de (méth)acrylate d'éthyle, de (méth)acrylate de butyle et de (méth)acrylate de 2-hydroxyéthyle.

32. Composition de peinture antisalissure selon l'une quelconque des revendications 1 à 31, dans laquelle le groupe organique R¹ dans l'unité constitutive dérivée du (méth)acrylate métallique d'acide monobasique représenté par la formule générale (V) est un résidu acide organique d'un acide monobasique, qui est un groupe hydrocarboné aliphatique saturé ou insaturé monovalent ayant 10 à 20 atomes de carbone, un groupe hydrocarboné alicyclique saturé ou insaturé ayant 3 à 20 atomes de carbone ou un produit de substitution de ceux-ci.

33. Composition de peinture antisalissure selon l'une quelconque des revendications 1 à 32, dans laquelle le groupe organique R¹ dans l'unité constitutive dérivée du (méth)acrylate métallique d'acide monobasique représenté par la formule générale (V) est un résidu acide organique d'au moins une sorte d'acide monobasique sélectionné dans le groupe constitué d'un acide versatique, d'un acide palmitique, d'un acide stéarique, d'un acide oléique, d'un acide linoléique, d'un acide linolénique, d'un acide abiétique, d'un acide néoabiétique, d'un acide pimarique, d'un acide déhydroabiétique, d'un acide 12-hydroxystéarique et d'un acide naphténique.

34. Composition de peinture antisalissure selon l'une quelconque des revendications 1 à 33, dans laquelle la teneur du zinc et/ou du cuivre provenant de la structure ayant la formule générale (II) dans le copolymère contenant une liaison de sel métallique (a2) est de 0,5 % à 20 % en poids..

35. Composition de peinture antisalissure selon l'une quelconque des revendications 1 à 34, dans laquelle l'unité constitutive (a31) dérivée du monomère représenté par la formule générale (III) est une unité constitutive dérivée de (méth)acrylate de trialkylsilyle.

36. Composition de peinture antisalissure selon l'une quelconque des revendications 1 à 35, dans laquelle l'unité constitutive (a31) dérivée du monomère représenté par la formule générale (III) est une unité constitutive dérivée de (méth)acrylate de triisopropylsilyle.

37. Composition de peinture antisalissure selon l'une quelconque des revendications 1 à 36, dans laquelle l'unité constitutive (a32) dérivée de l'autre monomère insaturé qui est copolymérisable avec le monomère représenté par la formule générale (III) est une unité constitutive dérivée d'au moins une sorte de monomère insaturé sélectionné dans le groupe constitué de (méth)acrylate d'alkyle, de (méth)acrylate d'alcoxyalkyle et de (méth)acrylate d'hydroxyalkyle.

38. Composition de peinture antisalissure selon l'une quelconque des revendications 1 à 37, dans laquelle l'unité constitutive (a32) dérivée de l'autre monomère insaturé qui est copolymérisable avec le monomère représenté par la formule générale (III) est une unité constitutive dérivée d'au moins une sorte de monomère insaturé sélectionné dans le groupe constitué de (méth)acrylate de méthyle, de (méth)acrylate d'éthyle, de (méth)acrylate de butyle, de (méth)acrylate de 2-méthoxyéthyle et de (méth)acrylate de 2-hydroxyéthyle.

39. Film de revêtement antisalissure formé à partir de la composition de peinture antisalissure selon l'une quelconque des revendications 1 à 38.

40. Matière de base avec un film de revêtement, dans laquelle la surface de la matière de base est revêtue d'un film de revêtement formé par durcissement de la composition de peinture antisalissure selon l'une quelconque des revendications 1 à 38.

41. Matière de base antisalissure, dans laquelle la surface de la matière de base en contact avec de l'eau de mer ou de l'eau douce est revêtue d'un film de revêtement formé par durcissement de la composition de peinture antisalissure selon l'une quelconque des revendications 1 à 38.

42. Matière de base antisalissure selon la revendication 41, ladite matière de base étant l'une/l'un quelconque parmi des structures immergées, des panneaux externes de bateau, des filets de pêche et du matériel de pêche.

43. Procédé de formation d'un film de revêtement sur une surface d'une matière de base, dans lequel la surface de la matière de base est revêtue ou imprégnée de la composition de peinture antisalissure selon l'une quelconque des revendications 1 à 38, et puis ladite composition de peinture antisalissure est durcie pour former un film de revêtement.

44. Procédé antisalissure d'une matière de base, dans lequel une surface d'une matière de base est revêtue de ou imprégnée avec la composition de peinture antisalissure selon l'une quelconque des revendications 1 à 38, et puis ledit revêtement antisalissure est durci pour former un film de revêtement antisalissure.

45. Procédé antisalissure d'une matière de base selon la revendication 44, dans lequel ladite matière de base est l'une/l'un quelconque parmi des
structures immergées, des panneaux externes de bateau, des filets de pêche et du matériel de pêche.
